(19) Europäisches Patentamt / European Patent Office / Office européen des brevets

(11) **EP 4 223 128 B1**

(12) **EUROPÄISCHE PATENTSCHRIFT**

(45) Veröffentlichungstag und Bekanntmachung des Hinweises auf die Patenterteilung:
**26.03.2025 Patentblatt 2025/13**

(21) Anmeldenummer: **23155122.7**

(22) Anmeldetag: **06.02.2023**

(51) Internationale Patentklassifikation (IPC):
**A22C 11/00** (2006.01)    **A23J 3/22** (2006.01)
**A23L 13/40** (2023.01)    **A23L 13/50** (2016.01)
**A23L 13/60** (2016.01)    **A23L 19/00** (2016.01)
**A23L 29/231** (2016.01)    **A23L 29/262** (2016.01)

(52) Gemeinsame Patentklassifikation (CPC):
**A23L 29/231; A23J 3/227; A23L 13/422;**
**A23L 13/426; A23L 13/65**

(54) **VERWENDUNG EINER AKTIVIERBAREN, ENTESTERTEN, PEKTIN-KONVERTIERTEN FRUCHTFASER ZUR HERSTELLUNG VON BRÜHWÜRSTEN ODER FLEISCHERSATZPRODUKTEN OHNE PHOSPHATZUSATZ**

USE OF AN ACTIVATABLE, DEESTERIFIED, PECTIN-CONVERTED FRUIT FIBER FOR MAKING SAUSAGES WITHOUT ADDED PHOSPHATES OR MEAT SUBSTITUTES

UTILISATION D'UNE FIBRE DE FRUIT DÉSESTÉRIFIÉE ACTIVABLE ET DÉESTÉRIFIÉE POUR LA PRÉPARATION DE MOÛTS OU DE PRODUITS DE SUBSTITUTION DE VIANDE SANS ADDITION DE PHOSPHATE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **07.02.2022 DE 102022102811**

(43) Veröffentlichungstag der Anmeldung:
**09.08.2023 Patentblatt 2023/32**

(73) Patentinhaber: Herbstreith & Fox GmbH & Co. KG Pektin-Fabriken
**75305 Neuenbürg (DE)**

(72) Erfinder: **FOX, Gerhard F.**
**75305 Neuenbürg (DE)**

(74) Vertreter: **Viering, Jentschura & Partner mbB Patent- und Rechtsanwälte**
**Hamborner Straße 53**
**40472 Düsseldorf (DE)**

(56) Entgegenhaltungen:
**WO-A1-2022/029131**

• **SONG JUNHONG ET AL: "The improvement effect and mechanism of citrus fiber on the water-binding ability of low-fat frankfurters", JOURNAL OF FOOD SCIENCE AND TECHNOLOGY, SPRINGER (INDIA) PRIVATE LTD, INDIA, vol. 53, no. 12, 2 December 2016 (2016-12-02), pages 4197 - 4204, XP036123535, ISSN: 0022-1155, [retrieved on 20161202], DOI: 10.1007/S13197-016-2407-5**
• **THANGAVELU KARTHIKEYAN P ET AL: "Novel processing technologies and ingredient strategies for the reduction of phosphate additives in processed meat", TRENDS IN FOOD SCIENCE & TECHNOLOGY, ELSEVIER SCIENCE PUBLISHERS, GB, vol. 94, 11 October 2019 (2019-10-11), pages 43 - 53, XP085906714, ISSN: 0924-2244, [retrieved on 20191011], DOI: 10.1016/ J.TIFS.2019.10.001**
• **DATABASE GNPD [online] MINTEL; 22 November 2021 (2021-11-22), ANONYMOUS: "Vegeterrier Hot Dog", XP093049535, retrieved from https:// www.gnpd.com/sinatra/recordpage/9174482/ Database accession no. 9174482**
• **DATABASE GNPD [online] MINTEL; 20 June 2016 (2016-06-20), ANONYMOUS: "Polish Sausages", XP093049545, retrieved from https://www.gnpd. com/sinatra/recordpage/4089013/ Database accession no. 4089013**

• **DATABASE GNPD [online] MINTEL; 2 December 2021 (2021-12-02), ANONYMOUS: "Plant-Based High Fibre Chick'n Crispy Popcorn Bites", XP093049572, retrieved from https://www.gnpd. com/sinatra/recordpage/9205920/ Database accession no. 9205920**

**Beschreibung**

Die vorliegende Erfindung betrifft die Verwendung einer aktivierbaren, entesterten, pektin-konvertierten Fruchtfaser zur Herstellung einer Brühwurst aus nicht schlachtwarmem Fleisch oder eines veganen oder vegetarischen Fleischersatzprodukts, bei denen die Faser jeweils eine Phosphatzugabe bzw. Methylcellulose ersetzen kann. Die Erfindung betrifft zudem eine Zusammensetzung, die diese Fruchtfaser enthält, ein Verfahren zur Herstellung der Brühwurst oder des veganen/vegetarischen Fleischersatzprodukts unter Verwendung dieser Zusammensetzung und eine Brühwurst oder ein veganes bzw. vegetarisches Fleischersatzprodukt, enthaltend die aktivierbare, entesterte, pektin-konvertierte Fruchtfaser.

**Hintergrund der Erfindung**

Die Herstellung von Brühwürsten und auch die Herstellung von Fleischersatzwaren benötigt Hilfsmittel, die insbesondere durch ihre Wasserbindungskapazität und Texturierung helfen, Produkte mit zufriedenstellenden Eigenschaften hinsichtlich Sensorik, Organoleptik und Textur bereitzustellen.

Die Verarbeitung von schlachtwarmem Fleisch, z.B. zur Brühwurstherstellung, bereitet wenig Probleme der Erzielung von schnittfester, homogener Wurstmasse. Schlachtwarmes Fleisch besitzt ein hohes Wasserbindungsvermögen. Die Eiweißanteile des Muskelfleisches liegen gelöst vor, die Abstände zwischen den Eiweißfibrillen sind sehr weit, so dass Wasser ideal an den hydrophilen Polen der Eiweißfraktionen angelagert werden kann.

Ein solches Material verhält sich optimal bei der Brühwurstherstellung, wo es darauf ankommt, Magerfleisch und Fett mit Wasser fein zu zerkleinern und in einen stabilen Zustand zu bringen, der als Vielphasengemisch von Emulsion, Suspension, Gel und Sol angesehen wird. Dieses Gemisch muss sich während der nachfolgenden Erhitzung (Brühprozess) zusammenhängend verfestigen (koagulieren), damit schnittfeste Wursterzeugnisse erhalten werden. Idealerweise zeigen die Enderzeugnisse keinen Fett- und keinen Gelee/Wasserabsatz.

In der Praxis ist eine Verarbeitung von schlachtwarmem Fleisch meist nicht möglich. Einige Stunden nach dem Schlachten tritt die *Rigor-mortis*-Veränderung des Fleisches ein, die dadurch gekennzeichnet ist, dass die Muskelfibrillen sich schließen und Verbindungen zwischen den Muskelsträngen auftreten, wodurch kaum noch Anlagerungspole für Wasser vorhanden sind. Dadurch verliert das Magerfleisch sein Wasserbindungsvermögen und bei der Erhitzung setzen sich in Wasser gelöste Eiweißanteile als Gelee ab. Die mangelhafte Emulgierfähigkeit der Eiweißbestandteile führt auch zu Fettseparationen.

Um trotz dieser Bedingungen nicht schlachtwarmes Fleisch für die Brühwurstherstellung verwenden zu können, bedient man sich der sogenannten Kutterhilfsmittel (Kuttersalze), insbesondere Salze der Citronensäure (Citrate) und Diphosphate, eventuell mit höheren Homologen der ortho-Phosphorsäure. Diese werden zusammen mit dem zu verarbeitenden Fleisch in den Kutter gegeben.

Die Wirksamkeit dieser Stoffe ist bis ins letzte Detail noch nicht bekannt. Citrate wirken anscheinend vorwiegend durch ihre Fähigkeit, polyvalente Ionen zu binden und damit die Bindung zwischen den Myofibrillen aufzubrechen. Diphosphate besitzen neben diesen Fähigkeiten beachtliche energetische Potentiale, die sie in die Nähe der physiologisch für die Muskelarbeit notwendigen Adenosintriphosphate (ATP) und Adenosindiphosphate (ADP) stellen. Neben diesen Eigenschaften sorgen Citrat- und Phosphatzusätze auch für merkbare pH-Wert-Erhöhungen im bearbeiteten Fleisch.

Die bekannten Kutterhilfsmittel stellen lebensmittelrechtlich Zusatzstoffe dar, die entsprechend einer Kennzeichnungspflicht unterliegen, was die Akzeptanz bei den Kunden verringert.

Die Verwendung von Phosphaten in Fleischprodukten ist zudem aus Gesundheitserwägungen kritisch zu sehen. Dass phosphatreiche Lebensmittel eine Gefahr für Menschen sind, die Nierenprobleme haben, ist schon länger bekannt. Neue Studien zeigen, dass künstlich zugesetzte Phosphate zu einem erhöhten Phosphatspiegel im Blut führen, der auch für gesunde Menschen ein Risiko darstellen kann, und warnen hier vor möglichen Gesundheitsrisiken. Entsprechend prüft zurzeit die Europäische Behörde für Lebensmittelsicherheit, ob für Phosphate in Lebensmitteln eine bessere Kennzeichnung und strengere Grenzwerte nötig sind.

Basierend auf den oben geschilderten Nebenwirkungen verringert sich beim Verbraucher zunehmend die Akzeptanz für Phosphat-Zusätze in Lebensmitteln.

Es besteht daher Bedarf an verbesserten, und insbesondere phosphatfreien Verfahren und Zusammensetzungen zur Herstellung von Brühwürsten.

Es gibt eine Vielzahl von Fleischersatzzusammensetzungen, bei denen pflanzliche Proteine verwendet werden, um die faserigen Eigenschaften von tierischen Muskelfasern in diesem Fleischersatzprodukt und damit auch die entsprechende Textur zu erreichen. Es wäre jedoch wünschenswert, dass ein solcher Fleischersatz auch hinsichtlich des Aussehens und der Stabilität vor, während und nach dem Kochen sowie hinsichtlich des Geschmacks und der Haptik beim Verzehr einem Fleischprodukt ähnelt.

Neben pflanzlichen Proteinen werden hier vor allem Hydrokolloide eingesetzt, die als Bindemittel wirken. Hierbei haben sich insbesondere Celluloseether wie Methylcellulose, Carboxymethylcellulose (CMC) oder Hydroxypropylmethylcellulose (HPMC) im Stand der Technik etabliert.

So lehrt die WO 2014/111103 A2 und die WO 2020/074858 A1 jeweils ein Fleischersatzprodukt, das Methylcellulose enthält.

Die EP 1 771 085 A1 offenbart Fleischersatzprodukte, die als Bindemittel unter anderem Methylcellulose, Hydroxypropylmethylcellulose oder Natriumcarboxymethylcellulose (Na-CMC) enthalten.

Celluloseether haben den Nachteil, dass die faserigen Eigenschaften und die Textur von Fleisch nur unzureichend erzielt werden. Zudem stellen sie lebensmittelrechtlich Zusatzstoffe dar, die entsprechend einer Kennzeichnungspflicht unterliegen, was die Akzeptanz bei den Kunden verringert. Die Methylcellulose stößt auf geringe Verbraucherakzeptanz. Es gibt Studien zu gesundheitsschädlichen Wirkungen und für viele Verbrauch ist es abschreckend, mit Methylcellulose den Hauptbestandteil des Tapetenkleisters im Lebensmittel vorzufinden.

THANGAVELU KARTHIKEYAN P ET AL (2019-10-11) lehrt die Verwendung von Zitrusfasern in Bologna-wurst als phosphatfreies Kutterhilfsmittel.

Der vorliegenden Erfindung liegt die Aufgabe zugrunde, den Stand der Technik zu verbessern oder ihm eine Alternative zu bieten.

**Zusammenfassung der Erfindung**

Nach einem ersten Aspekt der vorliegenden Erfindung wird die gestellte Aufgabe durch die Verwendung einer aktivierbaren, entesterten, pektin-konvertierten Fruchtfaser zur Herstellung einer Brühwurst aus nicht schlachtwarmem Fleisch oder eines veganen oder vegetarischen Fleischersatzprodukts gelöst, wobei die aktivierbare, entesterte, pektin-konvertierte Fruchtfaser einen wasserlöslichen Pektingehalt von 5 bis 35 Gew% aufweist und das wasserlösliche Pektin ein niederverestertes Pektin ist.

Die Verwendung der vorab definierten Fruchtfaser hat mehrere Vorteile gegenüber dem Stand der Technik.

Als Fruchtfaser mit einem hohen Anteil an wasserlöslichem Pektin zeigt sie eine gute Texturbildung und darüber hinaus ein erhöhtes Wasserbindungsvermögen. Hierdurch kann sie bereits bei einem Einsatz in geringer Menge das in der Wurstbrätmasse oder in der Fleischersatzmasse vorhandene Wasser effizient aufnehmen und binden.

Das aufgenommene Wasser bleibt auch im Endprodukt an der Faser gebunden, so dass keine nachträgliche Wasserfreisetzung des Produkts zu beobachten ist.

Das niederveresterte Pektin zeigt gerade in der Anwendung im Fleisch(ersatz)bereich, bei dem eher neutrale pH-Bedingungen und kaum oder kein Zucker vorliegt, eine ausreichende Gelbildung.

Durch die Tatsache, dass das wasserlösliche Pektin nicht separat vorliegt, sondern fasergebunden vorliegt, quillt die Faser als homogene texturbildende Struktur auf und zeigt dadurch verbesserte organoleptische Eigenschaften, insofern der Brühwurst im Vergleich zu Phosphatzugabe ein besserer, d.h. fleisch-ähnlicher Konsistenz und Biss verliehen wird.

Da die beschriebene Faser die Struktur der Proteinfasern nicht so deutlich wie die üblicherweise verwendete Methylcellulose verändert, erhält man durch die erfindungsgemäße Zusammensetzung in der veganen oder vegetarischen Fleischersatzware eine fleisch-ähnliche Struktur auch ohne Verwendung von Methylcellulose.

Die erfindungsmäßige Zusammensetzung bietet zunächst den Vorteil, dass auf Phosphate verzichtet werden kann. Dies vereinfacht den Herstellungsprozess in entscheidender Weise, insofern eine Zutat weniger benötigt wird, die zudem immer in Abhängigkeit von der Wasserbindungserfordernissen hinzudosiert werden muss und zu den oben beschriebenen Nachteilen hinsichtlich Nebenwirkungen und Compliance führt.

Wie die Erfinder festgestellt haben, weisen die mit der erfindungsgemäßen Zusammensetzung hergestellten Brühwürste einen natürlichen und unverfälschten Fleischgeschmack auf. Das Aroma der Brühwurst wird nicht maskiert und kann sich optimal freisetzen.

Die erfindungsgemäße Zusammensetzung führt zudem zu einem vereinfachten Herstellungsverfahren für Brühwürste, insofern das zerkleinerte Fleisch mit dem zerkleinerten Fett zusammen vorgelegt werden kann und anschließend die weiteren Komponenten, wie die erfindungsgemäße Zusammensetzung, Eis, Gewürze und Salz/Pökelsalz hinzugegeben werden. Die Emulsionsfähigkeit der enthaltenen Fruchtfaser ist so groß, dass auch bei dieser Schrittabfolge eine homogene Brätmasse resultiert.

Die beschriebene Fruchtfaser ist hinsichtlich der Brühwurst universell einsetzbar, insofern man sie in allen bekannten Fleischsorten, wie beispielsweise Schwein, Pute oder Rindfleisch verwendet werden kann.

Die beschriebene Fruchtfaser ist darüber hinaus hinsichtlich des veganen oder vegetarischen Fleischersatzprodukts universell einsetzbar, insofern man sie mit allen bekannten pflanzlichen Proteinen zu veganen Produkten wie Patties oder vegane Nuggets verwendet werden kann.

Die beschriebene Fruchtfasern stellen im Gegensatz zu künstlichen Phosphaten bzw. Celluloseethern keine deklarationspflichtigen Zusatzstoffe dar.

**Die Erfindung im Einzelnen**

Gemäss der Erfindung ist die aktivierbare, entestete, pektin-konvertierte Fruchtfaser eine aktivierbare, entestete, pektin-konvertierte Citrusfaser oder eine aktivierbare, entestete, pektin-konvertierte Apfelfaser.

Die aktivierbare entestete, pektin-konvertierte Fruchtfaser weist einen wasserlöslichen Pektingehalt von 10 Gew% bis 35 Gew% und besonders bevorzugt von 15 bis 30 Gew% auf. Der Gehalt an wasserlöslichem Pektin in der aktivierbaren pektinhaltigen Citrusfaser kann beispielsweise 11 Gew%, 12 Gew%, 13 Gew%, 14 Gew%, 15 Gew%, 16 Gew%, 17 Gew%, 18 Gew%, 19 Gew%, 20 Gew%, 21 Gew%, 22 Gew%, 23 Gew%, 24 Gew%, 25 Gew%, 26 Gew%, 27 Gew%, 28 Gew%, 29 Gew%, 30 Gew%, 31 Gew%, 32 Gew%, 33 Gew% oder 34 Gew% betragen.

Das nachfolgend beschriebene Herstellungsverfahren führt zu aktivierbaren, entesterten, pektin-konvertierten Fruchtfasern mit einer großen inneren Oberfläche, was auch das Wasserbindungsvermögen erhöht und mit einer guten Viskositätsbildung einhergeht. Insbesondere in Calcium-haltigen Anwendungen kann zusätzlich eine deutliche Gelbildung beobachtet werden.

Diese Fasern stellen aktivierbare Fasern dar, die durch die Partialaktivierung im Herstellungsverfahren eine zufriedenstellende Festigkeit aufweisen. Zum Erhalten der optimalen rheologischen Eigenschaften wie Viskosität, Gelierung oder Texturierung bedarf es allerdings anwenderseitig der Anwendung von zusätzlichen Scherkräften. Es handelt sich damit um partiell-aktivierte Fasern, die aber noch weiter aktivierbar sind. Der Begriff der "partiell-aktivierte Fasern" ist damit im Rahmen der vorliegenden Anmeldung synonym, zum Begriff der "aktivierbaren Fasern".

Zudem ist die erfindungsgemäß verwendete aktivierbare, entesterte, pektin-konvertierte Fruchtfaser in ihrer Wirkung potenter. So kann im Vergleich mit anderen Injektionsmitteln weniger an Menge eingesetzt werden, um eine Kochpökelware mit vergleichbarer Stabilität zu erzeugen.

Die durch das hier beschriebene Verfahren erhaltene aktivierbare entesterte, pektin-konvertierte Fruchtfaser (bspw. wasserlöslicher Pektingehalt ca. 35 Gew% im Falle der Citrusfaser und 22 Gew% im Falle der Apfelfaser) und niedrigveresterte Fruchtfaser wird im Rahmen der Erfindung auch kurz als "entesterte Fruchtfaser" bzw. im Einzelfall konkretisiert als "entesterte Apfelfaser" oder "entesterte Citrusfaser" bezeichnet.

Wie die Erfinder festgestellt haben, weisen die mit diesem Verfahren hergestellten Fruchtfasern gute rheologische Eigenschaften auf. Die erfindungsgemäß verwendeten Fasern können einfach in Calcium-freiem Wasser rehydratisiert werden und die vorteilhaften rheologischen Eigenschaften bleiben auch nach der Rehydratisierung erhalten.

Das nachfolgend beschriebene Herstellungsverfahren führt zu Fruchtfasern, die in hohem Maße geschmacks- und geruchsneutral sind und daher vorteilhaft für die Anwendung im Lebensmittelbereich sind. Das Eigenaroma der übrigen Zutaten wird nicht maskiert und kann sich daher optimal entfalten.

Die aktivierbaren, entesterten, pektin-konvertierten Fruchtfasern werden aus Früchten gewonnen und stellen so natürliche Inhaltsstoffe mit bekannten positiven Eigenschaften dar.

Als Rohstoff können bei dem nachfolgend beschriebenen Herstellungsverfahren pflanzliche Verarbeitungsrückstände wie Apfel-Trester oder Citrus-Trester eingesetzt werden. Diese Verarbeitungsrückstände sind kostengünstig, liegen in ausreichender Menge vor und bieten eine nachhaltige und ökologisch sinnvolle Quelle für die erfindungsgemäß verwendbaren Fruchtfasern.

Fruchtfasern sind in der Lebensmittelindustrie etabliert und akzeptiert, so dass entsprechende Zusammensetzungen ohne langwierige Zulassungsverfahren sofort und auch international zum Einsatz kommen können.

Die Erfindung betrifft in einer Ausführungsform die Verwendung einer aktivierbaren, entesterten, pektin-konvertierten Fruchtfaser zur Herstellung einer Kochpökelware. Eine solche aktivierbare, entesterte, pektin-konvertierte Fruchtfaser kann aus Trester wie Apfel-, oder Citrus-Trester gewonnen werden, der durch Inkubation einer wässrigen Citrus- oder Apfeltrester-Suspension als Ausgangsmaterial aufgeschlossen wird.

**Die aktivierbare, entesterte, pektin-konvertierte Fruchtfaser**

Die aktivierbare, entesterte, pektin-konvertierte Fruchtfaser ist bevorzugt eine aktivierbare, entesterte, pektin-konvertierte Citrusfaser oder eine aktivierbare, entestete, pektin-konvertierte Apfelfaser. Hierzu im Einzelnen:

**Die entesterte Citrusfaser**

Die erfindungsgemäß verwendete aktivierbare, entestete, pektin-konvertierte Citrusfaser hat einen wasserlöslichen Pektingehalt von 10 bis 35 Gew%, wobei das Pektin einen Veresterungsgrad von weniger als 50% aufweist und somit ein niederverestertes Pektin ist. Diese aktivierbare pektinhaltige, niedrigveresterte Citrusfaser wird im Rahmen der Erfindung auch kurz als "entesterte Citrusfaser" bezeichnet. Diese entesterte Citrusfaser ist vorzugsweise durch das hierin beschriebene Verfahren erhältlich oder wird dadurch erhalten.

Die erfindungsgemäß verwendete entesterte Citrusfaser weist vorteilhafterweise einen wasserlöslichen Pektingehalt von 10 Gew% bis 35 Gew% und besonders bevorzugt von zwischen 15 und 30 Gew% auf. Der Gehalt an wasserlöslichem Pektin in der aktivierbaren pektinhaltigen Citrusfaser kann beispielsweise 10 Gew%, 11 Gew%, 12 Gew%, 13 Gew%, 14 Gew%, 15 Gew%, 16 Gew%, 17 Gew%, 18 Gew%, 19 Gew%, 20 Gew%, 21 Gew%, 22 Gew%, 23 Gew%, 24 Gew%, 25 Gew%, 26 Gew%, 27 Gew%, 28 Gew%, 29 Gew% oder 30 Gew% betragen.

Die entesterte Citrusfaser weist hinsichtlich Texturierungs- und Viskosifizierungsverhalten vorteilhafte Eigenschaften auf, was durch die Fließgrenze bzw. durch die dynamische Weissenbergzahl ablesbar ist. Die entesterte Citrusfaser kann entsprechend eine oder mehrere der folgenden Charakteristika hinsichtlich Fließgrenze und dynamischer Weissenbergzahl aufweisen und vorteilhafterweise alle diese Charakteristika erfüllen.

In einer Ausführungsform hat die entesterte Citrusfaser in einer 2,5 Gew%igen wässrigen Suspension eine Fließgrenze II (Rotation) von größer 0,1 Pa, vorteilhafterweise von größer 0,6 Pa, und besonders vorteilhafterweise von 1,0 Pa.

Vorteilhafterweise hat die entesterte Citrusfaser in einer 2,5 Gew%igen wässrigen Suspension eine Fließgrenze II (Cross Over) von größer 0,1 Pa, vorteilhafterweise von größer 0,4 Pa und besonders vorteilhafterweise von größer 0,6 Pa.

Die entesterte Citrusfaser kann in einer 2,5 Gew%igen wässrigen Dispersion eine Fließgrenze I (Rotation) von größer 1,0 Pa, vorteilhafterweise von größer 3,5 Pa und besonders vorteilhafterweise von größer 5,5 Pa aufweisen.

In einer weiteren Ausführungsform hat die entesterte Citrusfaser in einer 2,5 Gew%igen wässrigen Dispersion eine Fließgrenze I (Cross Over) von größer 1,0 Pa, vorteilhafterweise von größer 4,0 Pa und besonders vorteilhafterweise von größer 6,0 Pa.

Vorteilhafterweise hat die entesterte Citrusfaser in einer 2,5 Gew%igen wässrigen Suspension eine dynamische Weissenbergzahl von größer 5,5, vorteilhafterweise von größer 6,5 und besonders vorteilhaft von größer 8,0.

Geeigneterweise hat die entesterte Citrusfaser in einer 2,5 Gew%igen wässrigen Dispersion eine dynamische Weissenbergzahl von größer 6,0 vorteilhafterweise von größer 7,0 und besonders vorteilhaft von größer 8,5.

Für die entesterte Citrusfaser können die Merkmale der vorstehenden beschriebenen Charakteristika hinsichtlich Fließgrenze und dynamischer Weissenbergzahl gegebenenfalls auch in beliebiger Permutation kombiniert werden. So kann die erfindungsgemäß verwendete entesterte Citrusfaser in einer speziellen Ausführungsform alle Merkmale hinsichtlich Fließgrenze und dynamischer Weissenbergzahl aufweisen, wobei diese entesterte Citrusfaser vorzugsweise durch das vorliegende Verfahren erhältlich ist oder dadurch erhalten wird.

Zur Bestimmung der Fließgrenze I (Rotation), Fließgrenze I (Cross over), und der dynamischen Weissenbergzahl in einer 2,5 Gew%igen wässrige Dispersion wird die entesterte Citrusfaser entsprechend der in den Beispielen offenbarten Methode als 2,5 Gew%ige wässrige Lösung dispergiert, die Messung erfolgt nach 1 h bei 20°C.

Zur Bestimmung der Fließgrenze II (Rotation), der Fließgrenze II (Cross Over) und der dynamischen Weissenbergzahl in einer 2,5 Gew%igen wässrige Suspension wird die entesterte Citrusfaser entsprechend der in den Beispielen offenbarten Methode als 2,5 Gew%ige wässrige Lösung suspendiert, die Messung erfolgt nach 1 h bei 20°C.

Die entesterte Citrusfaser hat nach einer vorteilhaften Ausführungsform in einer wässrigen 4 Gew%igen Suspension eine Festigkeit von größer 100 g, bevorzugt von größer 125 g und besonders bevorzugt von größer 150 g.

Die entesterte Citrusfaser hat nach einer besonderen Ausführungsform in einer Zusammensetzung mit 22°Brix und 2,5 Gew% Faserkonzentration eine Bruchfestigkeit von 50 HPE oder größer, vorteilhaft von größer 150 HPE und noch vorteilhafter von größer 250 HPE. Die vergleichsweise hohe Bruchfestigkeit ist auf das niederveresterte Pektin zurückzuführen. Die Bruchfestigkeit kann für 2,5 Gew% Faserkonzentration bei 22°Brix beispielsweise 50, 60, 70, 80, 90, 100, 110, 120, 130, 140, 150, 160, 170, 180, 190, 200, 210, 220, 230, 240, 250, 270, 300 oder 400 HPE aufweisen.

Die entesterte Citrusfaser hat nach einer besonderen Ausführungsform in einer Zusammensetzung mit 40°Brix und 2,5 Gew% Faserkonzentration eine Bruchfestigkeit von 250 HPE oder größer, vorteilhaft von größer 500 HPE und noch vorteilhafter von größer 700 HPE. Die vergleichsweise hohe Bruchfestigkeit ist auf das niederveresterte Pektin zurückzuführen. Die Bruchfestigkeit kann für 2,5 Gew% Faserkonzentration bei 40°Brix beispielsweise 250, 300, 350 400, 450, 500, 550, 600, 650, 700, 800, 900 oder 1000 HPE aufweisen.

Der Begriff "Bruchfestigkeit" ist gemäß der vorliegenden Erfindung ein Maß für die Festigkeit eines Gels, welches mit Saccharose in einer Pufferlösung bei pH ca. 3,0 hergestellt wird und sich bei 22°Brix oder 40°Brix ausbildet. Die Bruchfestigkeit wird nach zweistündigem Abkühlen im Wasserbad bei 20 °C bestimmt. Die Bestimmung der Bruchfestigkeit erfolgt mittels des Herbstreith-Pektinometers Mark IV oder einem entsprechenden Vorläufermodell. Die angewandte Methode wird nachfolgend als Bruchfestigkeitstest bezeichnet, der Messwert als Bruchfestigkeit, die Maßeinheit sind Herbstreith-Pektinometer-Einheiten (HPE).

Vorzugsweise weist die entesterte Citrusfaser eine Viskosität von zwischen größer 300 mPas, bevorzugt von größer 400 mPas, und besonders bevorzugt von größer 500 mPas auf, wobei die entesterte Citrusfaser in Wasser als 2,5 Gew%ige Lösung dispergiert wird und die Viskosität mit einer Scherrate von 50 s$^{-1}$ bei 20°C gemessen wird. Die entesterte Citrusfaser kann beispielsweise eine Viskosität von 325, 350, 375, 400, 425, 450, 475, 500, 525, 550, 575, 600, 625, 650, 675, 700, 725, 750, 775, 800, 825, 850, 875, 900, 925, 950, 975 oder 1000 mPas aufweisen.

Zur Viskositätsbestimmung wird die Citrusfaser in demineralisiertem Wasser mit der in den Beispielen offenbarten Methode als 2,5 Gew%ige Lösung dispergiert und die Viskosität bei 20°C und vier Scherabschnitten (erster und dritter Abschnitt = konstantes Profil; zweiter und vierter Abschnitt = lineare Rampe; Auswertung jeweils bei einer Schergeschwindigkeit von 50 s$^{-1}$) bestimmt (Rheometer; Physica MCR Serie, Messkörper CC25 (entspricht Z3 DIN), Fa. Anton Paar, Graz, Österreich). Eine entesterte Citrusfaser mit dieser hohen Viskosität hat den Vorteil, dass für das Andicken des Endprodukts geringere Mengen an Fasern notwendig sind. Zudem erzeugt die Faser damit eine homogene Textur.

Die entesterte Citrusfaser hat vorteilhafterweise ein Wasserbindevermögen von mehr als 22 g/g, bevorzugt von mehr als 24 g/g, besonders bevorzugt von mehr als 26 g/g. Ein solch vorteilhaft hohes Wasserbindevermögen führt zu einer hohen Viskosität und über diese dann auch zu einem geringeren Faserverbrauch bei homogener Textur.

Gemäß einer Ausführungsform weist die entesterte Citrusfaser eine Feuchtigkeit von weniger als 15 Gew%, bevorzugt von weniger als 10% und besonders bevorzugt von weniger als 8 Gew% auf.

Es ist auch bevorzugt, dass die entesterte Citrusfaser in 1,0 Gew%iger wässriger Suspension einen pH-Wert von 3,0 bis 7,0 und bevorzugt von 4,0 bis 6,0 aufweist.

Die entesterte Citrusfaser hat vorteilhaftweise eine Korngröße, bei der mindestens 90 Gew% der Partikel kleiner als 450 $\mu$m, bevorzugt kleiner als 350 $\mu$m und insbesondere kleiner als 250 $\mu$m sind.

Gemäß einer vorteilhaften Ausführungsform hat die entesterte Citrusfaser einen Helligkeitswert L* > 84, bevorzugt von L* > 86 und besonders bevorzugt von L* > 88. Damit sind die Citrusfasern nahezu farblos und führen bei einem Einsatz in Lebensmittelprodukten nicht zu einer nennenswerten Verfärbung der Produkte.

In vorteilhafter Weise hat die die entesterte Citrusfaser einen Ballaststoffgehalt von 80 bis 95 Gew%.

Aufgrund des sauren Aufschlusses ist das Pektin der Citrusfaser dahingehend geändert worden, dass das unlösliche Protopektin in lösliches Pektin konvertiert wird, so dass die entesterte Citrusfaser ca. 35 Gew% oder weniger an wasserlöslichem Pektin aufweist.

Bei diesem konvertierten Pektin handelt es sich durch den anschließenden enzymatischen Entesterungsschritt um niedrigverestertes Pektin. Unter einem niedrigveresterten Pektin wird erfindungsgemäß ein Pektin verstanden, das einen Veresterungsgrad von weniger als 50% besitzt. Der Veresterungsgrad beschreibt den prozentualen Anteil der Carboxylgruppen in den Galacturonsäure-Einheiten des Pektins, welche in veresterter Form vorliegen, z.B. als Methylester. Der Veresterungsgrad kann mittels der Methode nach JECFA (Monograph 19-2016, Joint FAO/WHO Expert Committee on Food Additives) bestimmt werden. Durch die Kombination aus Entpektinisierung und Entesterung wird damit die erfindungsgemäß verwendbare Citrusfaser erhalten, die im Rahmen der Erfindung als "entesterte Citrusfaser" bezeichnet wird.

**Die entesterte Apfelfaser**

Die erfindungsgemäß verwendete aktivierbare, entestete, pektin-konvertierte Apfelfaser hat einen Pektingehalt von 5 Gew% oder mehr, wobei das Pektin einen Veresterungsgrad von weniger als 50% aufweist und somit ein niederverestertes Pektin ist. Diese aktivierbare pektinhaltige niedrigveresterte Apfelfaser wird im Rahmen der Erfindung auch kurz als "entesterte Apfelfaser" bezeichnet. Diese entesterte Apfelfaser ist vorzugsweise durch das hierin Verfahren erhältlich oder wird dadurch erhalten.

Die entesterte Apfelfaser weist vorteilhafterweise einen wasserlöslichen Pektingehalt von 5 Gew% bis 22 Gew% und besonders bevorzugt von 8 bis 15 Gew% auf. Der Gehalt an wasserlöslichem Pektin in der entesterten Apfelfaser kann beispielsweise 8 Gew%, 9 Gew%, 10 Gew%, 11 Gew%, 12 Gew%, 13 Gew%, 14 Gew%, 16 Gew%, 17 Gew%, 18 Gew%, 19 Gew%, 20 Gew%, 21 Gew% oder 22 Gew% betragen.

Die entesterte Apfelfaser weist hinsichtlich Texturierungs- und Viskosifizierungsverhalten vorteilhafte Eigenschaften auf, was durch die Fließgrenze bzw. durch die dynamische Weissenbergzahl ablesbar ist. Die entesterte Apfelfaser kann entsprechend eine oder mehrere der folgenden Charakteristika hinsichtlich Fließgrenze und dynamischer Weissenbergzahl aufweisen und vorteilhafterweise alle diese Charakteristika erfüllen.

In einer Ausführungsform hat die entesterte Apfelfaser in einer 2,5 Gew%igen wässrigen Suspension eine Fließgrenze II (Rotation) von größer 0,1Pa, vorteilhafterweise von größer 0,6 Pa, und besonders vorteilhafterweise von größer 1,0 Pa.

Vorteilhafterweise hat die entesterte Apfelfaser in einer 2,5 Gew%igen wässrigen Suspension eine Fließgrenze II (Cross Over) von größer 0,1 Pa, vorteilhafterweise von größer 0,4 Pa und besonders vorteilhafterweise von größer 0,6 Pa.

Die entesterte Apfelfaser kann in einer 2,5 Gew%igen wässrigen Dispersion eine Fließgrenze I (Rotation) von größer 1,0 Pa, vorteilhafterweise von größer 3,5 Pa und besonders vorteilhafterweise von größer 5,5 Pa aufweisen.

In einer weiteren Ausführungsform hat die entesterte Apfelfaser in einer 2,5 Gew%igen wässrigen Dispersion eine Fließgrenze I (Cross Over) von größer 1,0 Pa, vorteilhafterweise von größer 4,0 Pa und besonders vorteilhafterweise von größer 6,0 Pa.

Vorteilhafterweise hat die entesterte Apfelfaser in einer 2,5 Gew%igen wässrigen Suspension eine dynamische Weissenbergzahl von größer 5,5, vorteilhafterweise von größer 6,5 und besonders vorteilhaft von größer 8,0.

Geeigneterweise hat die entesterte Apfelfaser in einer 2,5 Gew%igen wässrigen Dispersion eine dynamische Weissenbergzahl von größer 6,0 vorteilhafterweise von größer 7,0 und besonders vorteilhaft von größer 8,5.

Für die entesterte Apfelfaser können die Merkmale der vorstehenden beschriebenen Charakteristika hinsichtlich Fließgrenze und dynamischer Weissenbergzahl gegebenenfalls auch in beliebiger Permutation kombiniert werden. So kann die erfindungsgemäß verwendbare entesterte Apfelfaser in einer speziellen Ausführungsform alle Merkmale hinsichtlich Fließgrenze und dynamischer Weissenbergzahl aufweisen, wobei diese entesterte Apfelfaser vorzugsweise durch das hierin beschriebene Verfahren erhältlich ist oder dadurch erhalten wird.

Zur Bestimmung der Fließgrenze I (Rotation), Fließgrenze I (Cross over), und der dynamischen Weissenbergzahl in einer 2,5 Gew%igen wässrigen Dispersion wird die entesterte Apfelfaser entsprechend der in den Beispielen offenbarten Methode als 2,5 Gew%ige wässrige Lösung dispergiert, die Messung erfolgt nach 1 h bei 20°C.

Zur Bestimmung der Fließgrenze II (Rotation), der Fließgrenze II (Cross Over) und der dynamischen Weissenbergzahl in einer 2,5 Gew%igen wässrigen Suspension wird die entesterte Apfelfaser entsprechend der in den Beispielen offenbarten Methode als 2,5 Gew%ige wässrige Lösung suspendiert, die Messung erfolgt nach 1 h bei 20°C.

Die entesterte Apfelfaser hat nach einer vorteilhaften Ausführungsform in einer wässrigen 4 Gew%igen Suspension eine Festigkeit von größer 100 g, bevorzugt von größer 125 g und besonders bevorzugt von größer 150 g.

Die entesterte Apfelfaser hat nach einer besonderen Ausführungsform in einer Zusammensetzung mit 22°Brix und 2,5 Gew% Faserkonzentration eine Bruchfestigkeit von 50 HPE bis 200 HPE, vorteilhaft von 80 HPE bis 170 HPE und noch vorteilhafter von 110 HPE bis 150 HPE. Die vergleichsweise hohe Bruchfestigkeit ist auf das niederveresterte Pektin zurückzuführen. Die Bruchfestigkeit kann für 2,5 Gew% Faserkonzentration bei 22°Brix beispielsweise 80, 85, 90, 95, 100, 105, 110, 115, 120, 125, 130, 135, 140, 145, 150, 155, 160, 165, 170, 175, 180, 185, 190, 195 oder 200 HPE aufweisen.

Die entesterte Apfelfaser hat nach einer besonderen Ausführungsform in einer Zusammensetzung mit 40°Brix und 2,5 Gew% Faserkonzentration eine Bruchfestigkeit von 180 HPE bis 380 HPE, vorteilhaft von 230 HPE bis 330 HPE und noch vorteilhafter von 250 HPE bis 300 HPE. Die vergleichsweise hohe Bruchfestigkeit ist auf das niederveresterte Pektin zurückzuführen. Die Bruchfestigkeit kann für 2,5 Gew% Faserkonzentration bei 40°Brix beispielsweise 230, 240, 250, 260, 270, 280, 290, 300, 310, 320, oder 330 HPE aufweisen.

Der Begriff "Bruchfestigkeit" ist gemäß der vorliegenden Erfindung ein Maß für die Festigkeit eines Gels, welches mit Saccharose in einer Pufferlösung bei pH ca. 3,0 hergestellt wird und sich bei 22°Brix oder 40°Brix ausbildet. Die Bruchfestigkeit wird nach zweistündigem Abkühlen im Wasserbad bei 20 °C bestimmt. Die Bestimmung der Bruchfestigkeit erfolgt mittels des Herbstreith-Pektinometers Mark IV oder einem Vorläufermodell. Die angewandte Methode wird nachfolgend als Bruchfestigkeitstest bezeichnet, der Messwert als Bruchfestigkeit, die Maßeinheit sind Herbstreith-Pektinometer-Einheiten (HPE).

Vorzugsweise weist die entesterte Apfelfaser eine Viskosität von größer 300 mPas, bevorzugt von größer 400 mPas, und besonders bevorzugt von größer 500 mPas auf, wobei die entesterte Apfelfaser in Wasser als 2,5 Gew%ige Lösung dispergiert wird und die Viskosität mit einer Scherrate von 50 s$^{-1}$ bei 20°C gemessen wird. Die entesterte Apfelfaser kann beispielsweise eine Viskosität von 325, 350, 375, 400, 425, 450, 475, 500, 525, 550, 575, 600, 625, 650, 675, 700, 725, 750, 775, 800, 825, 850, 875, 900, 925, 950, 975 oder 1000 mPas aufweisen.

Zur Viskositätsbestimmung wird die Apfelfaser in demineralisiertem Wasser mit der in den Beispielen offenbarten Methode als 2,5 Gew%ige Lösung dispergiert und die Viskosität bei 20°C und vier Scherabschnitten (erster und dritter Abschnitt = konstantes Profil; zweiter und vierter Abschnitt = lineare Rampe; Auswertung jeweils bei einer Schergeschwindigkeit von 50 s$^{-1}$) bestimmt (Rheometer; Physica MCR Serie, Messkörper CC25 (entspricht Z3 DIN), Fa. Anton Paar, Graz, Österreich). Eine entesterte Apfelfaser mit dieser hohen Viskosität hat den Vorteil, dass für das Andicken des Endprodukts geringere Mengen an Fasern notwendig sind. Zudem erzeugt die Faser damit eine homogene Textur.

Die entesterte Apfelfaser hat vorteilhafterweise ein Wasserbindevermögen von mehr als 22 g/g, bevorzugt von mehr als 24 g/g, besonders bevorzugt von mehr als 26 g/g. Ein solch vorteilhaft hohes Wasserbindevermögen führt zu einer hohen Viskosität und über diese dann auch zu einem geringeren Faserverbrauch bei homogener Textur.

Gemäß einer Ausführungsform weist die entesterte Apfelfaser eine Feuchtigkeit von weniger als 15 Gew%, bevorzugt von weniger als 10 Gew% und besonders bevorzugt von weniger als 8 Gew% auf.

Es ist auch bevorzugt, dass die entesterte Apfelfaser in 1,0 Gew%iger wässriger Suspension einen pH-Wert von 3,0 bis 7,0 und bevorzugt von 4,0 bis 6,0 aufweist.

Die entesterte Apfelfaser hat vorteilhaftweise eine Korngröße, bei der mindestens 90 Gew% der Partikel kleiner als 450 μm, bevorzugt kleiner als 350 μm und insbesondere kleiner als 250 μm sind.

Gemäß einer vorteilhaften Ausführungsform hat die entesterte Apfelfaser einen Helligkeitswert L* > 60, bevorzugt von L* > 61 und besonders bevorzugt von L* > 62. Damit sind die Apfelfasern nahezu farblos und führen bei einem Einsatz in Lebensmittelprodukten nicht zu einer nennenswerten Verfärbung der Produkte.

In vorteilhafter Weise hat die entesterte Apfelfaser einen Ballaststoffgehalt von 80 bis 95 Gew%.

Bei dem Pektin der entesterten Apfelfaser handelt es sich durch den Entesterungsschritt um niedrigverestertes Pektin. Unter einem niedrigveresterten Pektin wird erfindungsgemäß ein Pektin verstanden, das einen Veresterungsgrad von weniger als 50% besitzt. Der Veresterungsgrad beschreibt den prozentualen Anteil der Carboxylgruppen in den Galacturonsäure-Einheiten des Pektins, welche in veresterter Form vorliegen, z.B. als Methylester. Der Veresterungsgrad kann mittels der Methode nach JEFCA (Monograph 19-2016, Joint FAO/WHO Expert Committee on Food Additives) bestimmt werden. Durch die Kombination aus Entesterung und optional vorgeschalteter schonender Teilextraktion wird die erfindungsgemäß verwendbare Apfelfaser erhalten, die im Rahmen der Erfindung als "entesterte Apfelfaser" bezeichnet wird.

**Herstellung der aktivierbaren, entesterten, pektin-konvertierten Fruchtfaser**

Die aktivierbare, entesterte, pektin-konvertierte Fruchtfaser ist eine entesterte Citrusfaser oder eine entesterte Apfelfaser und ist durch ein Verfahren erhältlich, das die folgenden Schritte umfasst:

(a) Bereitstellen eines Rohmaterials, das Zellwandmaterial einer essbaren Frucht, bevorzugt einer Citrusfrucht oder Apfelfrucht, enthält;
(b) Optionaler Aufschluss des Rohmaterials aus Schritt (a) mit Teilextraktion des Pektins aus diesem Rohmaterial durch Inkubation des Rohmaterials aus Schritt (a) in wässriger Suspension bei einem pH-Wert von 2,5 bis 5,0 und anschließender Trennung des teilweise entpektinisierten Materials von der Mischung;
(c) Suspendieren des Rohmaterials aus Schritt (a) oder des teilweise entpektinisierten Materials aus Schritt (b) in einer wässrigen Flüssigkeit und Inkubation dieser wässrigen Suspension bei einem pH-Wert von zwischen 0,5 und 2,5 zur Erzielung einer partiell-aktivierten, pektin-konvertierten Fruchtfaser, bevorzugt einer partiell-aktivierten, pektin-konvertierten Apfelfaser mit einem wasser-löslichen Pektingehalt von 5 bis 22 Gew% oder einer partiell-aktivierten, pektin-konvertierten Citrusfaser mit einem wasserlöslichen Pektingehalt von 10 bis 35 Gew%;
(d) Optionale Zugabe einer Lauge, eines alkalischen Salzes oder eines alkalischen Puffersystems zu der wässrigen Suspension aus Schritt (c) zur Einstellung eines pH-Wertes von zwischen pH = 3,0 und pH = 9,0;
(e) Entesterung der partiell-aktivierten Fasersuspension aus Schritt (c) oder der pH-Wert-angepassten Fasersuspension aus Schritt (d) durch enzymatische Behandlung mit Pektinmethylesterase oder saure Entesterung;
(f) Mindestens zweimaliges Waschen der entesterten aktivierten Faser aus Schritt (e) mit einem organischen Lösungsmittel und jeweils anschließender Trennung der gewaschenen Faser von dem organischen Lösungsmittel;
(g) Optionale zusätzliche Entfernung des organischen Lösungsmittels durch Inkontaktbringen der gewaschenen Faser aus Schritt (f) mit Wasserdampf;
(h) Trocknen des Materials aus Schritt (f) oder (g) umfassend eine Trocknung bei Normaldruck oder eine Vakuumtrocknung zum Erhalten der aktivierbaren entesterten, pektin-konvertierten Fruchtfaser.

Eine Fruchtfaser gemäß der Erfindung ist eine Pflanzenfaser, also eine Faser, die aus einer nichtverholzten pflanzlichen Zellwand isoliert wird und hauptsächlich aus Cellulose besteht, und die hierbei aus einer Frucht isoliert wird. Unter einer Frucht ist hierbei die Gesamtheit der Organe einer Pflanze zu verstehen, die aus einer Blüte hervorgehen, wobei sowohl die klassischen Obstfrüchte als auch Fruchtgemüse enthalten sind.

In einer bevorzugten Ausführungsform ist diese Fruchtfaser ausgewählt aus der Gruppe bestehend aus Citrusfaser, Apfelfaser, Zuckerrübenfaser, Möhrenfaser und Erbsenfaser, wobei die Pflanzenfaser bevorzugt eine Fruchtfaser und besonders bevorzugt eine Citrusfaser oder eine Apfelfaser ist.

Eine "Apfelfaser" gemäß der Anmeldung ist eine hauptsächlich aus Fasern bestehende Komponente, die aus einer nichtverholzten pflanzlichen Zellwand eines Apfels isoliert wird und hauptsächlich aus Cellulose besteht. Der Begriff der Faser stellt in gewisser Hinsicht ein Misnomer dar, weil die Apfelfasern makroskopisch nicht als Fasern in Erscheinung treten, sondern ein pulverförmiges Produkt darstellen. Weitere Bestandteile der Apfelfaser sind unter anderem Hemicellulose und Pektin.

Die Apfelfaser kann aus allen dem Fachmann bekannten Kulturäpfeln (*malus domesticus*) gewonnen werden. Als Ausgangsmaterial können hier vorteilhafterweise Verarbeitungsrückstände von Äpfeln eingesetzt werden. Als Ausgangsmaterial kann entsprechend Apfelschale, Kerngehäuse, Kerne oder Fruchtfleisch oder eine Kombination hiervon verwendet werden. In bevorzugter Weise wird als Ausgangsmaterial Apfeltrester verwendet, also die Pressrückstände von Äpfeln, die neben den Schalen typischerweise auch die oben genannten Bestandteile enthalten.

Eine "Citrusfaser" gemäß der Anmeldung ist eine hauptsächlich aus Fasern bestehende Komponente, die aus einer nichtverholzten pflanzlichen Zellwand einer Citrusfrucht isoliert wird und hauptsächlich aus Cellulose besteht. Der Begriff der Faser stellt in gewisser Hinsicht ein Misnomer dar, weil die Citrusfasern makroskopisch nicht als Fasern in Erscheinung treten, sondern ein pulverförmiges Produkt darstellen. Weitere Bestandteile der Citrusfaser sind unter anderem Hemicellulose und Pektin. Die Citrusfaser kann vorteilhafterweise aus Citruspulpe, Citrusschale, Citrusvesikel, Segmentmembranen oder einer Kombination hiervon gewonnen werden.

Zur Herstellung einer entesterten Citrusfaser können als Rohmaterial Citrusfrüchte und bevorzugt Verarbeitungsrückstände von Citrusfrüchten eingesetzt werden. Als Rohmaterial zum Einsatz in dem vorliegenden Verfahren kann entsprechend Citrusschale, (und hier Albedo und/oder Flavedo), Citrusvesikel, Segmentmembranen oder eine Kombination hiervon verwendet werden. In bevorzugter Weise wird als Rohmaterial Citrustrester verwendet, also die Pressrückstände von Citrusfrüchten, die neben den Schalen typischerweise auch das Fruchtfleisch enthalten.

Als Citrusfrüchte können hierbei alle dem Fachmann bekannten Citrusfrüchte verwendet werden. In nicht einschränkender Weise seien hier beispielhaft aufgeführt: Mandarine (*Citrus reticulata*), Clementine (*Citrus × aurantium* Clementine-Gruppe, Syn.: *Citrus clementina*), Satsuma *(Citrus ×aurantium* Satsuma-Gruppe, Syn.: *Citrus unshiu*), Mangshan (*Citrus mangshanensis*), Orange *(Citrus ×aurantium* Orangen-Gruppe, Syn.: *Citrus sinensis*), Bitterorange *(Citrus ×aurantium* Bitterorangen-Gruppe), Bergamotte (*Citrus ×limon* Bergamotte-Gruppe, Syn.: *Citrus bergamia*), Pampelmuse (*Citrus maxima), Grapefruit (Citrus ×aurantium* Grapefruit-Gruppe, Syn.: *Citrus paradisi*) Pomelo (*Citrus ×aurantium* Pomelo-Gruppe), echte Limette (*Citrus ×aurantiifolia), gewöhnliche Limette (Citrus ×aurantiifolia,* Syn.: *Citrus latifolia*), Kaffernlimette (*Citrus hystrix),* Rangpur-Limette (*Citrus ×jambhiri), Zitrone (Citrus ×limon* Zitronen-Gruppe), Zitronatzitrone (*Citrus medica*) und Kumquats (*Citrus japonica,* Syn.: *Fortunella*). Bevorzugt sind hierbei die Orange (*Citrus ×aurantium* Orangen-Gruppe, Syn.: *Citrus sinensis*) und die Zitrone (*Citrus ×limon* Zitronen-Gruppe).

Der optionale saure Aufschluss im Schritt (b) des Verfahrens dient der partiellen Entfernung von Pektin aus dem Zellverband durch Überführung einer Teilfraktion des Protopektins in lösliches Pektin und gleichzeitiger Aktivierung der Faser durch Vergrößerung der inneren Oberfläche. Weiterhin wird das Rohmaterial durch den Aufschluss thermisch zerkleinert. Durch die saure Inkubation im wässrigen Milieu unter Einwirkung von Hitze zerfällt es in Fruchtfasern. Damit wird eine thermische Zerkleinerung erreicht, ein mechanischer Zerkleinerungsschritt ist im Rahmen des Herstellungsverfahrens damit nicht notwendig.

Dies stellt einen entscheidenden Vorteil gegenüber herkömmlichen Faser-Herstellungsverfahren dar, die im Gegensatz dazu einen Scherungsschritt (wie beispielsweise durch eine (Hoch-)Druckhomogenisierung) benötigen, um eine Faser mit ausreichenden rheologischen Eigenschaften zu erhalten.

Der saure Aufschluss im Schritt (b) ist so gestaltet, dass das bei der Teilextraktion extrahierte Pektin ein hochverestertes Pektin mit hoher Gelierkraft und gutem Viskosifizierungsvermögen darstellt. Es wird daher im Rahmen der vorliegenden Anmeldung auch als "hochwertiges Pektin" bezeichnet. Bei dem sauren Aufschluss gemäß Schritt (b) handelt es sich um eine vollwertige Pektin-Extraktion in dem Sinne, dass das in Lösung gebrachte Pektin danach durch eine Fest-Flüssig-Trennung von dem Fasermaterial abgetrennt wird.

Bei dem durch die Teilextraktion anfallenden hochwertigen Pektin handelt es sich um hochverestertes Pektin. Unter einem hochveresterten Pektin wird erfindungsgemäß ein Pektin verstanden, das einen Veresterungsgrad von mindestens 50% besitzt. Der Veresterungsgrad beschreibt den prozentualen Anteil der Carboxylgruppen in den Galacturonsäure-Einheiten des Pektins, welche in veresterter Form vorliegen, z.B. als Methylester. Der Veresterungsgrad kann mittels der Methode nach JECFA (Monograph 19-2016, Joint FAO/WHO Expert Committee on Food Additives) bestimmt werden.

Nach einer vorteilhaften Ausführungsform weist das hochwertige Pektin, das bevorzugt ein hochverestertes lösliches Citruspektin oder Apfelpektin ist, einen Veresterungsgrad von 50 bis 80%, bevorzugt von 60 bis 80%, besonders bevorzugt von 70 bis 80% und insbesondere bevorzugt von 72% bis 75% auf. Beispielsweise kann der Veresterungsgrad des hochveresterten löslichen Pektins, das bevorzugt ein hochverestertes lösliches Citruspektin oder Apfelpektin ist 70%, 71%, 72%, 73%, 74%, 75%, 76%, 77%, 78%, 79% oder 80% betragen.

Nach einer Ausführungsform weist das hochwertige Pektin, das bevorzugt ein hochverestertes lösliches Citruspektin ist, eine Viskosität, gemessen in mPas, von 500 bis 1500 mPas, bevorzugt von 600 bis 1400 mPas, besonders bevorzugt von 700 bis 1300 mPas und insbesondere bevorzugt von 800 bis 1200 mPas auf.

Nach einer Ausführungsform weist das hochwertige Pektin, das bevorzugt ein hochverestertes lösliches Citruspektin ist, einen Gelierkraft, gemessen in °SAG, von 150 bis 300°SAG, bevorzugt von 200 bis 280°SAG, besonders bevorzugt von 240 bis 270°SAG und insbesondere bevorzugt von 260 bis 265°SAG auf. Beispielsweise kann die Gelierkraft des hochveresterten löslichen Pektins, das bevorzugt ein hochverestertes lösliches Citruspektin ist 160, 170, 180, 190, 200, 210, 220, 230, 240, 250, 260, 261, 262, 263, 264, 265, 266, 267, 268, 269, 270, 280, 290, und 300°SAG betragen.

Nach einer weiteren Ausführungsform weist das hochwertige Pektin, das bevorzugt ein hochverestertes lösliches Apfelpektin ist, einen Gelierkraft, gemessen in °SAG, von 150 bis 250°SAG, bevorzugt von 170 bis 240°SAG, besonders bevorzugt von 180 bis 220°SAG und insbesondere bevorzugt von 190 bis 200°SAG auf. Beispielsweise kann die Gelierkraft des hochveresterten löslichen Pektins, das bevorzugt ein hochverestertes lösliches Apfelpektin ist 160, 170, 180, 190, 191, 192, 193, 194, 195, 196, 197, 198, 199, 200, 210, 220, 230 und 240°SAG betragen.

Das Rohmaterial liegt bei dem Aufschluss gemäß Schritt (b) als wässrige Suspension vor. Eine Suspension ist gemäß der Erfindung ein heterogenes Stoffgemisch aus einer Flüssigkeit und darin fein verteilten Festkörpern (Rohmaterial-Partikel). Da die Suspension zur Sedimentation und Phasentrennung tendiert, werden die Partikel geeignetermaßen durch Krafteintrag, also beispielsweise durch Schütteln oder Rühren in der Schwebe gehalten. Es liegt somit keine Dispersion vor, bei der die Partikel durch mechanische Einwirkung (Scherung) so zerkleinert werden, dass sie feindispers vorliegen.

Zur Erzielung eines sauren pH-Wertes im Schritt (b) kann der Fachmann auf alle ihm bekannten Säuren oder sauren Pufferlösungen zurückgreifen. So kann beispielsweise eine organische Säure die als Calcium-Chelator wirkt und damit überschüssige Calcium-Ionen binden kann. Beispiele für eine solche chelatbildende Säure sind Citronensäure, Gluconsäure oder Oxalsäure.

Alternativ oder in Kombination hierzu kann auch eine Mineralsäure eingesetzt werden. Beispielhaft seien erwähnt: Schwefelsäure, Salzsäure, Salpetersäure oder schweflige Säure. Bevorzugt wird Salpetersäure oder Schwefelsäure eingesetzt.

Bei dem optionalen sauren Aufschluss im Schritt (b) kann zusätzlich noch ein Komplexbildner für zweiwertige Kationen hinzugegeben werden. Beispielhaft sind hier Polyphosphate oder EDTA erwähnt.

Bei dem optionalen sauren Aufschluss im Schritt (b) des Verfahrens liegt der pH-Wert der Suspension zwischen pH = 2,5 und pH = 5,0, bevorzugt zwischen pH = 2,8 und pH = 4,5 und besonders bevorzugt zwischen pH = 3,0 und pH = 4,0. Der optionale saure Aufschluss kann beispielsweise bei einem pH-Wert von 2,8, 2,9, 3,0, 3,1, 3,2, 3,3, 3,3, 3,4, 3,5, 3,6, 3,7, 3,8, 3,9 oder 4,0 durchgeführt werden.

Vorteilhafterweise besteht bei dem optionalen sauren Aufschluss im Schritt (b) die Flüssigkeit zur Herstellung der wässrigen Suspension zu mehr als 50 Vol%, bevorzugt zu mehr als 60, 70, 80 oder sogar 90 Vol% aus Wasser. In einer bevorzugten Ausführungsform enthält die Flüssigkeit kein organisches Lösungsmittel und insbesondere keinen Alkohol. Damit liegt eine wasserbasierte saure Extraktion vor.

Die Inkubation erfolgt bei dem optionalen sauren Aufschluss in Schritt (b) bei einer Temperatur von zwischen 55°C und 80°C, bevorzugt von zwischen 60°C und 75°C und besonders bevorzugt von zwischen 65°C und 70°C. Der optionale saure Aufschluss kann beispielsweise bei einer Temperatur von 60°C, 61°C, 62°C, 63°C, 64°C, 65°°C, 66°C, 67°C, 68°C oder 69°C durchgeführt werden.

Die Inkubation erfolgt bei dem optionalen sauren Aufschluss in Schritt (b) über eine Zeitdauer von zwischen 60 min und 8 Stunden und bevorzugt von zwischen 2 h und 6 Stunden. Der optionale saure Aufschluss kann beispielsweise über eine Zeitdauer von 1,5 h, 2,0 h, 2,5 h, 3,0 h, 3,5 h, 4,0 h, 4,5 h, 5,0 h, 5,5 h oder 6,0 h durchgeführt werden.

Die wässrige Suspension hat bei dem sauren Aufschluss in Schritt (b) geeignetermaßen eine Trockenmasse von zwischen 0,5 Gew% und 20 Gew%, bevorzugt von zwischen 3 Gew% und 16 Gew%, und besonders bevorzugt von zwischen 5 Gew% und 14 Gew%. Die Trockenmasse kann bei dem optionalen sauren Aufschluss beispielsweise 1, 2, 3, 4, 5, 6, 7, 8, 9, 10, 11, 12, 13, 14, 15, oder 16 Gew% betragen.

Die wässrige Suspension wird während des Aufschlusses in Schritt (b) geeigneterweise durch Krafteintrag in Bewegung versetzt, also beispielsweise gerührt oder geschüttelt. Dies erfolgt bevorzugt in kontinuierlicher Weise, damit die Partikel in der Suspension in der Schwebe gehalten werden.

Der saure Aufschluss im Schritt (c) des Verfahrens dient der Konvertierung des unlöslichen Protopektins in lösliches Pektin und gleichzeitiger Aktivierung der Faser durch Vergrößerung der inneren Oberfläche. Bei dem sauren Aufschluss gemäß Schritt (c) handelt es sich nicht um eine funktionelle Pektin-Extraktion. Das löslich gemachte Pektin wird nicht durch eine Fest-Flüssig-Trennung von dem Fasermaterial abgetrennt, sondern bleibt bei den folgenden Prozessschritten (d) und/oder (e) zusammen mit der partiell-aktivierten Faser in der Suspension enthalten. Es findet also im Endergebnis keine Pektinentfernung, sondern eine Pektinkonversion von Protopektin zu wasserlöslichem faserassoziiertem Pektin statt. Im Ergebnis resultiert also eine aktivierbare, entesterte, pektin-konvertierte Faser.

Weiterhin wird das Rohmaterial durch den Aufschluss in Schritt (c) thermisch zerkleinert. Durch die saure Inkubation im wässrigen Milieu unter Einwirkung von Hitze zerfällt es in Fruchtfasern. Damit wird eine thermische Zerkleinerung erreicht, ein mechanischer Zerkleinerungsschritt ist im Rahmen des Herstellungsverfahrens damit nicht notwendig. Dies stellt einen entscheidenden Vorteil gegenüber herkömmlichen Faser-Herstellungsverfahren dar, die im Gegensatz dazu einen Scherungsschritt (wie beispielsweise durch eine (Hoch-)Druckhomogenisierung) benötigen, um eine Faser mit ausreichenden rheologischen Eigenschaften zu erhalten.

Für den Fall, dass das dem sauren Aufschluss gemäß Schritt (c) zugeführte Material bereits dem optionalen sauren Aufschluss gemäß Schritt (b) unterzogen wurde, kann der saure Aufschluss im Schritt (c) eine zusätzliche Pektinextraktion leisten, indem ein weiterer Teil des Protopektins in lösliches Pektin überführt und extrahiert werden kann.

Das Rohmaterial liegt bei dem Aufschluss in Schritt (c) als wässrige Suspension vor. Eine Suspension ist gemäß der Erfindung ein heterogenes Stoffgemisch aus einer Flüssigkeit und darin fein verteilten Festkörpern (Rohmaterial-Partikel). Da die Suspension zur Sedimentation und Phasentrennung tendiert, werden die Partikel geeignetermaßen durch Krafteintrag, also beispielsweise durch Schütteln oder Rühren in der Schwebe gehalten. Es liegt somit keine Dispersion vor, bei der die Partikel durch mechanische Einwirkung (Scherung) so zerkleinert werden, dass sie feindispers vorliegen.

Zur Erzielung eines sauren pH-Wertes in Schritt (c) kann der Fachmann auf alle ihm bekannten Säuren oder sauren Pufferlösungen zurückgreifen. So kann beispielsweise eine organische Säure die als Calcium-Chelator wirkt und damit überschüssige Calcium-Ionen binden kann. Beispiele für eine solche chelatbildende Säure sind Citronensäure, Gluconsäure oder Oxalsäure.

Alternativ oder in Kombination hierzu kann auch eine Mineralsäure eingesetzt werden. Beispielhaft seien erwähnt: Schwefelsäure, Salzsäure, Salpetersäure oder schweflige Säure. Bevorzugt wird Salpetersäure oder Schwefelsäure eingesetzt. Bei dem sauren Aufschluss im Schritt (c) kann zusätzlich noch ein Komplexbildner für zweiwertige Kationen hinzugegeben werden. Beispielhaft sind hier Polyphosphate oder EDTA erwähnt.

Bei dem sauren Aufschluss im Schritt (c) des Verfahrens liegt der pH-Wert der Suspension zwischen pH = 0,5 und pH = 2,5, bevorzugt zwischen pH = 1,0 und pH = 2,3 und besonders bevorzugt zwischen pH = 1,5 und pH = 2,0. Der saure Aufschluss nach Schritt (c) kann beispielsweise bei einem pH-Wert von 0,5, 0,6, 0,7, 0,8, 0,9, 1,0, 1,1, 1,2, 1,3, 1,4, 1,5, 1,6 1,7, 1,8, 1,9, 2,0, 2,1, 2,2, 2,3, 2,3, 2,4, oder 2,5 durchgeführt werden.

Vorteilhafterweise besteht bei dem sauren Aufschluss im Schritt (c) die Flüssigkeit zur Herstellung der wässrigen Suspension zu mehr als 50 Vol%, bevorzugt zu mehr als 60, 70, 80 oder sogar 90 Vol% aus Wasser. In einer bevorzugten Ausführungsform enthält die Flüssigkeit kein organisches Lösungsmittel und insbesondere keinen Alkohol. Damit liegt eine wasserbasierte saure Extraktion vor.

Die Inkubation erfolgt bei dem sauren Aufschluss gemäß Schritt (c) bei einer Temperatur von zwischen 60°C und 95°C, bevorzugt von zwischen 70°C und 90°C und besonders bevorzugt von zwischen 75°C und 85°C. Der saure Aufschluss nach Schritt (c) kann beispielsweise bei einer Temperatur von 70°C, 71°C, 72°C, 73°C, 74°C, 75°C, 76°C, 77°C, 78°C, 79°C, 80°C, 81°C, 82°C, 83°C, 84°C oder 85°C durchgeführt werden.

Die Inkubation erfolgt bei dem sauren Aufschluss gemäß Schritt (c) über eine Zeitdauer von zwischen 60 min und 8 Stunden und bevorzugt von zwischen 2 h und 6 Stunden. Der saure Aufschluss nach Schritt (c) kann beispielsweise über eine Zeitdauer von 1,5 h, 2,0 h, 2,5 h, 3,0 h, 3,5 h, 4,0 h, 4,5 h, 5,0 h, 5,5 h oder 6,0 h durchgeführt werden.

Die wässrige Suspension hat bei dem sauren Aufschluss nach Schritt (c) geeignetermaßen eine Trockenmasse von zwischen 0,5 Gew% und 20 Gew%, bevorzugt von zwischen 3 Gew% und 16 Gew%, und besonders bevorzugt von zwischen 5 Gew% und 14 Gew%. Die Trockenmasse kann bei dem sauren Aufschluss nach Schritt (c) beispielsweise 5, 6, 7, 8, 9, 10, 11, 12, 13, oder 14 Gew% betragen.

Die wässrige Suspension wird während des Aufschlusses in Schritt (c) durch Krafteintrag in Bewegung versetzt, geeignetermaßen durch Rühren oder Schütteln. Dies erfolgt bevorzugt in kontinuierlicher Weise, damit die Partikel in der Suspension in der Schwebe gehalten werden.

Im Schritt (d) des Verfahrens kann optional die Zugabe einer Lauge, eines alkalischen Salzes oder eines Puffersystems zu der wässrigen Suspension aus Schritt (c) durchgeführt werden, um hier einen pH-Wert von zwischen pH 3,0 und pH 9,0 einzustellen. Dies hat den Sinn, den optimalen pH-Wert für die folgende Entesterung einzustellen, die entweder als enzymatische Entesterung oder als saure Entesterung durchgeführt werden kann.

Für diese pH-Werteinstellung, die ausgehend von dem stark aciden pH-Wertes des Schrittes (c) eine pH-Werterhöhung darstellt, kann eine Lauge wie NaOH, KOH oder ein alkalisches Salz wie Natriumcarbonat, Natriumhydrogencarbonat, Kaliumcarbonat, oder Kaliumhydrogencarbonat verwendet werden. Alternativ kann auch ein Puffersystem, also ein Gemisch einer schwachen Säure mit ihrer konjugierten Base verwendet werden, dass einen Pufferbereich von zwischen pH 3.0 und pH 9,0 aufweist.

Gemäß Schritt (e) wird die aktivierbare pektin-konvertierte Fasersuspension aus Schritt (c) oder die pH-Wertangepasste Fasersuspension aus Schritt (d) entestert, d.h. die veresterten Galacturonsäuregruppen des Pektins hydrolysiert. Dies kann einerseits durch eine enzymatische Behandlung mit Pektinmethylesterase (PME) oder alternativ durch eine saure Entesterung erfolgen.

Für die enzymatische Entesterung gemäß Schritt (e) wird die Fasersuspension mit einer Pektinmethylesterase in Kontakt gebracht und für eine ausreichende Zeitdauer inkubiert.

Durch die Pektinmethylesterase werden im Pektin die Methylester der Galacturonsäuregruppen hydrolysiert unter Bildung von Poly-Galacturonsäure und Methanol. Die dadurch entstehenden niederveresterten Pektine können in Anwesenheit von mehrwertigen Kationen auch ohne Zucker ein Gel bilden und sind zudem in einem breiten pH-Bereich einsetzbar.

Eine Pektinmethylesterase (Abkürzung: PME, EC 3.1.1.11, auch: Pektindemethoxylase, Pektinmethoxylase) ist ein allgemein verbreitetes Enzym in der Zellwand in allen höheren Pflanzen sowie einigen Bakterien und Pilzen, welches die Methylester der Pektine spaltet und dabei Poly-Galacturonsäure bildet und Methanol freisetzt. Die PME wurde in vielen Isoformen isoliert, die gemäß der Erfindung alle für die enzymatische Entesterung eingesetzt werden können. So wurde die PME in vielen Isoformen sowohl aus pflanzenpathogenen Pilzen wie *Aspergillus foetidus* und *Phytophthora infestans* als auch aus höheren Pflanzen, z.B. Tomaten, Kartoffeln und Orangen, isoliert. Die pilzlichen PME entfalten die optimale Aktivität zwischen pH 2,5 und 5,5, während die pflanzlichen PME pH-Optima zwischen pH 5 und 8 aufweisen. Die relative Molekülmasse liegt zwischen 33.000 und 45.000. Das Enzym liegt als Monomer vor und ist glykosyliert. Der $K_M$-Wert liegt zwischen 11 und 40 mM Pektin bei pilzlichen PME und bei 4-22 mM Pektin bei pflanzlichen PME. Die kommerziell erhältlichen Präparationen der PME werden entweder aus den Überständen der pilzlichen Mycelkulturen oder bei Pflanzen aus Früchten (Schalen von Orangen und Zitronen, Tomaten) gewonnen. Die bevorzugt eingesetzten Pektinmethylesterasen haben ein pH-Optimum zwischen 2 und 5 und ein Temperaturoptimum bei 30 bis 50°C, wobei je nach Enzym schon ab 15°C eine nennenswerte Enzymaktivität zu beobachten ist.

Die folgende Tabelle gibt einige Beispiele für kommerziell erhältliche PMEs mit ihren Reaktionsoptima:

| Produktname | Hersteller | Optima |
|---|---|---|
| Rapidase PEP | DSM | pH = 4 - 5; T = 50°C |
| Pectinase 872 L | Biocatalysts | pH = 4 - 5; T = 30 - 50°C |
| Pectinesterase 1508/14 | Erbslöh | pH = 4 - 5; T = 30 - 50°C |

Die Zeitdauer der Inkubation mit der Pektinmethylesterase beträgt zwischen 1 Stunde und 10 Stunden, bevorzugt zwischen 2 Stunden und 5 Stunden.

Aufgrund der vorab durchgeführten Prozessschritte liegt eine Suspension mit geringem Trockensubstanzgehalt (< 20 %TS) vor. Die Enzymbehandlung erfolgt dann zweckmäßigerweise in einem Rührbehälter.

**Saure Entesterung:**

Bei der sauren Entesterung im Schritt (e) des Verfahrens liegt der pH-Wert der Suspension zwischen pH = 1,0 und pH = 2,0. Der saure Entesterung nach Schritt (e) kann beispielsweise bei einem pH-Wert von 1,1, 1,2, 1,3, 1,4, 1,5, 1,6, 1,7, 1,8 oder 1,9 durchgeführt werden.

Die saure Entesterung gemäß Schritt (e) erfolgt bei einer Temperatur von zwischen 30°C und 60°C. Sie kann beispielsweise bei einer Temperatur von 35°C, 40°C, 45°C, 55°C oder 58°C durchgeführt werden.

Die Inkubation erfolgt bei der sauren Entesterung gemäß Schritt (e) über eine Zeitdauer von zwischen 30 min bis 10 Tagen und bevorzugt von zwischen 2 h und 6 Stunden. Der saure Aufschluss nach Schritt (c) kann beispielsweise über eine Zeitdauer von 1 h, 1,5 h, 2,0 h, 2,5 h, 3,0 h, 3,5 h, 4,0 h, 4,5 h, 5,0 h, 5,5 h oder 6,0 h durchgeführt werden.

Im Schritt (f) erfolgt dann ein Waschschritt mit einer Waschflüssigkeit, die ein wassermischbares organisches Lösungsmittel umfasst. Hierbei handelt es sich um ein mindestens zweimaliges Waschen mit der Waschflüssigkeit umfassend ein wassermischbares organisches Lösungsmittel.

Mit einem Lösungsmittel ist hierbei mindestens ein Lösungsmittel gemeint, so dass in der Waschflüssigkeit auch zwei, drei oder mehr wassermischbare organische Lösungsmittel enthalten sein können.

Die Waschflüssigkeit im Schritt (f) besteht bevorzugt zu mehr als 70 Vol.%, besonders bevorzugt zu mehr als 80 Vol.% und insbesondere bevorzugt zu mehr als 85 Vol.% aus dem wassermischbaren organischen Lösungsmittel. Die Waschflüssigkeit kann beispielweise 80%, 81%, 82%, 83%, 84%, 85%, 86%, 87%, 88%, 89%, 90%, 91%, 92%, 93%, 94%, 95%, 96%, 97%, 98%, 99% oder 99,5% an wassermischbarem organischem Lösungsmittel enthalten, wobei die Prozente Volumenprozente darstellen. In einer alternativen Ausführungsform besteht die Waschflüssigkeit aus dem organischen wassermischbaren Lösungsmittel.

Der weitere Bestandteil, der sich mit diesem organischen wassermischbaren Lösungsmittel zu 100% ergänzt, ist zweckmäßigerweise Wasser oder ein wässriger Puffer.

Zur Durchführung des vorliegenden Verfahrens sind vor allem wassermischbare, thermisch stabile, flüchtige, nur Kohlenstoff, Wasserstoff und Sauerstoff enthaltende Lösungsmittel wie Alkohole, Ether, Ester, Ketone und Acetale geeignet. Vorzugsweise werden Ethanol, n-Propanol, Isopropanol, Methylethylketon, 1,2-Butandiol-1-methylether, 1,2-Propandiol-1-n-propylether oder Aceton verwendet.

Ein organisches Lösungsmittel wird vorliegend als "wassermischbar" bezeichnet, wenn sie in einer 1:20 (v/v) Mischung mit Wasser als einphasige Flüssigkeit vorliegt.

Allgemein verwendet man zweckmäßig solche Lösungsmittel, die mindestens zu 10 % wassermischbar sind, einen Siedepunkt unter 100°C aufweisen und/oder weniger als 10 Kohlenstoffatome haben.

Das wassermischbare organische Lösungsmittel als Bestandteil der Waschflüssigkeit ist bevorzugt ein Alkohol, der vorteilhafterweise ausgewählt ist aus der Gruppe bestehend aus Methanol, Ethanol und Isopropanol. In besonders bevorzugter Weise ist es Isopropanol.

Der Waschschritt im Schritt (f) erfolgt bei einer Temperatur von zwischen 40°C und 75°C, bevorzugt von zwischen 50°C und 70°C und besonders bevorzugt von zwischen 60°C und 65°C.

Das Inkontaktbringen mit der das wassermischbare organische Lösungsmittel enthaltenden Waschflüssigkeit im Schritt (f) erfolgt über eine Zeitdauer von zwischen 60 min und 10 h und bevorzugt zwischen 2 h und 8 h.

Jeder Waschschritt mit der ein wassermischbares organisches Lösungsmittel enthaltenden Waschflüssigkeit umfasst ein Inkontaktbringen des Materials mit der Waschflüssigkeit für eine bestimmte Zeitdauer gefolgt von der Abtrennung des Materials von der Waschlösung als Gemisch aus Waschflüssigkeit und vorab vorhandener Flüssigkeit (als Bestandteil der Suspension). Für diese Abtrennung wird bevorzugt ein Dekanter oder eine Presse verwendet.

Bei dem Waschen gemäß Schritt (f) mit einer, ein wassermischbares organisches Lösungsmittel enthaltenden, Waschflüssigkeit beträgt die Trockenmasse in der Waschlösung von zwischen 0,5 Gew% und 15 Gew%, bevorzugt zwischen 1,0 Gew% und 10 Gew%, und besonders bevorzugt zwischen 1,5 Gew% und 5,0 Gew%.

Das Waschen gemäß Schritt (f) mit der ein wassermischbares organisches Lösungsmittel enthaltenden Waschflüssigkeit wird bevorzugt unter mechanischer Bewegung der Waschmixtur durchgeführt. Bevorzugt wird das Waschen in einem Behälter mit Rührwerk durchgeführt.

Bei dem Waschen gemäß Schritt (f) mit der ein wassermischbares organisches Lösungsmittel enthaltenden Waschflüssigkeit wird in vorteilhafter Weise eine Vorrichtung zur Vergleichmäßigung der Suspension verwendet. Diese Vorrichtung ist bevorzugt ein Zahnkranzdispergierer.

Nach einer vorteilhaften Ausführungsform erfolgt das Waschen gemäß Schritt (f) mit der ein wassermischbares organisches Lösungsmittel enthaltenden Waschflüssigkeit im Gegenstromverfahren.

In einer Ausführungsform erfolgt bei dem Waschen gemäß Schritt (f) mit der ein wassermischbares organisches Lösungsmittel enthaltenden Waschflüssigkeit eine partielle Neutralisation durch Zugabe von Na- oder K-Salzen, NaOH oder KOH.

Bei dem Waschen gemäß Schritt (f) mit der ein wassermischbares organisches Lösungsmittel enthaltenden Waschflüssigkeit kann zusätzlich auch eine Entfärbung des Materials durchgeführt werden. Diese Entfärbung kann durch Zugabe eines oder mehrerer Oxidationsmittel erfolgen. Beispielhaft seien hier die Oxidationsmittel Chlordioxid und Wasserstoffperoxid erwähnt, die alleine oder in Kombination angewendet werden können.

Nach einer vorteilhaften Ausführungsform nimmt bei dem mindestens zweimaligen Waschen gemäß Schritt (f) mit einer ein wassermischbares organisches Lösungsmittel enthaltenden Waschflüssigkeit die finale Konzentration des organischen Lösungsmittels in der Lösung mit jedem Waschschritt zu. Durch diesen inkrementell steigenden Anteil an wassermischbarem organischem Lösungsmittel wird der Wasseranteil in dem Fasermaterial kontrolliert verringert, so dass die rheologischen Eigenschaften der Fasern bei den nachfolgenden Schritten zur Lösungsmittelentziehung und Trocknung erhalten bleiben und kein Kollabieren der partiell-aktivierten Faserstruktur erfolgt.

Vorzugsweise beträgt die finale Konzentration des wassermischbaren organischen Lösungsmittels in der gesamten Waschlösung (also der Fasersuspension zusammen mit der zugegebenen Waschflüssigkeit) im ersten Waschschritt zwischen 60 bis 70 Vol.-%, im zweiten Waschschritt zwischen 70 und 85 Vol.-% und in einem optionalen dritten Waschschritt zwischen 80 und 90 Vol.-%.

Gemäß einer Ausführungsform kann bei dem mindestens zweimaligen Waschen im Schritt (f) mit der das organische wassermischbare Lösungsmittel enthaltenden Waschflüssigkeit, diese Waschflüssigkeit beim ersten Waschschritt einen sauren pH-Wert aufweist, der bevorzugt zwischen pH 0,5 und pH 3,0 liegt. Durch diesen aciden pH-Wert werden auch Calcium-Ionen aus der Faser herausgewaschen.

In einem solchen Fall ist es bevorzugt, dass ein zweiter Waschschritt einen schwach sauren bis schwach alkalischen pH-Wert aufweist, so dass die erhaltene Faser bevorzugt zwischen pH 4,0 und pH 6,0 liegt. Durch den weniger sauren pH-Wert wird erreicht, dass die Löslichkeit des Pektins verbessert wird und in der Endanwendung der für ein Lebensmittel typische pH-Wert nicht zu sehr in Richtung sauer verschoben wird.

Gemäß dem optionalen Schritt (g) kann das Lösungsmittel zusätzlich durch Inkontaktbringen des Materials mit Wasserdampf verringert werden. Dies wird vorzugsweise mit einem Stripper durchgeführt, bei dem das Material im Gegenstrom mit Wasserdampf als Strippgas in Kontakt gebracht wird.

Nach einer vorteilhaften Ausführungsform wird das Material nach dem Schritt (f) oder (g) vor dem Trocknen mit Wasser befeuchtet. Dies geschieht bevorzugt durch Einbringen des Materials in eine Befeuchtungsschnecke und Besprühen mit Wasser.

Im Schritt (h) erfolgt das Trocknen des gewaschenen Materials aus Schritt (f) oder des gestrippten Materials aus Schritt (g), wobei das Trocknen eine Trocknung unter Normaldruck oder mittels Vakuumtrocknung umfasst.

Beispiele für geeignete Trocknungsverfahren mittels Normaldruck sind Wirbelschichttrocknung, Fließbetttrocknung, Bandtrockner, Trommeltrockner oder Schaufeltrockner. Besonders bevorzugt ist hier die Fließbetttrocknung. Diese hat den Vorteil, dass das Produkt aufgelockert getrocknet wird, was den anschließenden Vermahlschritt vereinfacht. Zudem vermeidet die Trocknungsart durch den gut dosierbaren Wärmeeintrag eine Schädigung des Produktes durch lokale Überhitzung.

Die Trocknung unter Normaldruck im Schritt (h) erfolgt zweckmäßigerweise bei einer Temperatur von zwischen 50°C und 130°C, bevorzugt von zwischen 60°C und 120°C und besonders bevorzugt von zwischen 70°C und 110°C. Im Anschluss an die Trocknung wird das Produkt zweckmäßigerweise auf Raumtemperatur abgekühlt.

In einer alternativen Ausführungsform umfasst das Trocknen gemäß Schritt (h) eine Vakuumtrocknung und besteht bevorzugt aus einer Vakuumtrocknung. Bei der Vakuumtrocknung wird das gewaschene Material als Trockengut einem Unterdruck ausgesetzt, was den Siedepunkt reduziert und somit auch bei niedrigen Temperaturen zu einer Verdampfung des Wassers führt. Die dem Trockengut kontinuierlich entzogene Verdampfungswärme wird geeigneterweise bis zur Temperaturkonstanz von außen nachgeführt. Die Vakuumtrocknung hat den Effekt, dass sie den Gleichgewichtsdampfdruck erniedrigt, was den Kapillartransport begünstigt. Dies hat sich insbesondere für das vorliegende Apfelfasermaterial als vorteilhaft herausgestellt, da hierdurch die aktivierten geöffneten Faserstrukturen und damit die hieraus resultierenden rheologischen Eigenschaften erhalten bleiben. Vorzugsweise erfolgt die Vakuumtrocknung bei einem absoluten Unterdruck von weniger als 400 mbar, bevorzugt von weniger als 300 mbar, weiterhin bevorzugt von weniger als 250 mbar und insbesondere bevorzugt von weniger als 200 mbar.

Die Trocknung unter Vakuum im Schritt (h) erfolgt zweckmäßigerweise bei einer MantelTemperatur von zwischen 40°C und 100°C, bevorzugt von zwischen 50°C und 90°C und besonders bevorzugt von zwischen 60°C und 80°C. Im Anschluss an die Trocknung wird das Produkt zweckmäßigerweise auf Raumtemperatur abgekühlt.

Gemäß einer vorteilhaften Ausführungsform umfasst das Verfahren nach dem Trocknen in Schritt (h) zusätzlich einen Zerkleinerungs-, Vermahlungs- oder Siebschritt. Dieser ist vorteilhafterweise so ausgestaltet, dass als Ergebnis 90 Gew% der Partikel eine Korngröße von weniger 450 $\mu$m, bevorzugt eine Korngröße von weniger als 350 $\mu$m und insbesondere eine Korngröße von weniger als 250 $\mu$m aufweisen. Bei dieser Korngröße ist die Faser gut dispergierbar und zeigt ein optimales Quellvermögen.

Die für die erfindungsgemäße Verwendung eingesetzte aktivierbare, entesterte, pektin-konvertierte Fruchtfaser und ein Verfahren zu ihrer Herstellung wird in der Anmeldung DE 10 2020 120 606.2 offenbart.

In einem zweiten Aspekt betrifft die Erfindung eine Zusammensetzung zur Herstellung einer Brühwurst aus nicht schlachtwarmen Fleisch, wobei die Zusammensetzung die aktivierbare, entesterte, pektin-konvertierte Fruchtfaser enthält. Diese Zusammensetzung wird im Folgenden auch als Brühwurst-Zusammensetzung bezeichnet. Die Fruchtfaser ist hierbei bevorzugt eine erfindungsgemäße entesterte Citrusfaser oder entesterte Apfelfaser oder eine Mischung hiervon.

Bei der erfindungsgemäßen Brühwurst-Zusammensetzung handelt es sich bevorzugt um eine Phosphat-freie Zusammensetzung. Dies bedeutet, dass sie kein Phosphatsalz als Kuttersalz enthält, sondern maximal als Verunreinigung oder als üblicher Bestandteile einer andersartigen Komponente (wie einem Gewürz oder einem Hefeextrakt). Als Phosphatsalz wird hierbei nicht nur Ortho-Phosphate, sondern auch Diphosphate und Polyphosphate verstanden.

Die Zusammensetzung kann zur Herstellung einer Brühwurst aus nicht schlachtwarmen Fleisch dienen, die 0,5 bis 2,0 Gew.%, der aktivierbaren, entesterten, pektin-konvertierten Fruchtfaser , bevorzugt 0,6 bis 1,8 Gew.-%. und besonders bevorzugt 0,8 bis 1,5 Gew.-% der aktivierbaren, entesterten, pektin-konvertierten Fruchtfaser enthält. Die Fruchtfaser ist hierbei bevorzugt eine erfindungsgemäße entesterte Citrusfaser oder entesterte Apfelfaser oder eine Mischung hiervon. Die Zusammensetzung enthält entsprechend 20 bis 50 Gew.% der aktivierbaren, entesterten, pektin-konvertierten Fruchtfaser.

Die Brühwurst-Zusammensetzung kann zusätzlich eine aktivierte Apfel- oder Citrusfaser mit einem Anteil an wasserlöslichem Pektin von 2 bis 10 Gew.-% enthalten, wobei das wasserlösliche Pektin ein hochverestertes Pektin ist. Entsprechende Apfel- bzw. Citrusfasern mit ihren Eigenschaften und Verfahren zu ihrer Herstellung sind in der WO 2021/250156 A1, bzw. in der WO 2021/250160 A1 offenbart.

In einer Ausführungsform enthält die Brühwurst-Zusammensetzung zusätzlich Protein. Bei diesem Protein handelt es sich um ein isoliertes Protein, dass aus einer Pflanze oder einem Tier isoliert worden ist. Das Protein kann hierbei in Form von Hydrolysat, Konzentrat oder Isolat verwendet werden.

Hierbei kann die Zusammensetzung das Protein in einer Konzentration von 0,1 bis 5 Gew.-%, bevorzugt 0,2 bis 3,0 Gew.-%, weiterhin bevorzugt 0,4 bis 1,5 Gew.-% enthalten.

Als Protein kann pflanzliches oder tierisches Protein eingesetzt werden.

In einer Ausführungsform ist das Protein ein tierisches Protein, bevorzugt ein Schweine- und/oder Geflügelprotein, bevorzugter ein hydrolysiertes Schweine- und/oder Geflügelprotein. In bevorzugter Weise entstammt das Protein derselben Spezies, wie die Fleischsorte, mit der die Kochpökelware hergestellt wird, also Schweine-Protein für Schweinefleisch, Puten-Protein für Putenfleisch usw..

Es ist zweckmäßig, wenn die erfindungsgemäße Brühwurst-Zusammensetzung ein Trennmittel enthält, das ein Carbonatsalz ist.

Vorteilhafterweise ist bei der Zusammensetzung das Carbonatsalz ausgewählt aus der Gruppe bestehend aus Natriumcarbonat, Natriumhydrogencarbonat, Kaliumcarbonat, und Kaliumhydrogencarbonat. Bevorzugt wird ein 1:1 (w/w) Gemisch aus $Na_2CO_3$ und $NaHCO_3$ eingesetzt.

In einer bevorzugten Ausführungsform enthält die Brühwurst-Zusammensetzung einen Zucker und/oder einen Zuckeraustauschstoff. Als Zucker wird bevorzugt Saccharose und/oder Maltodextrin eingesetzt.

Die Brühwurst-Zusammensetzung kann zudem ein Antioxidans enthalten, wobei Ascorbinsäure oder Acerolapulver bevorzugt sind.

In einer bevorzugten Ausführungsform enthält die Brühwurst-Zusammensetzung Aromastoffe.

Unter Aromastoffe werden chemische Stoffe oder Stoffgemische verstanden, welche einem Lebensmittel einen spezifischen Geruch und/oder Geschmack verleihen können. Bevorzugt ist der Aromastoff ein Puten- und/oder Schweinearoma. Bevorzugt ist der Anteil an Aromastoffen in der Zusammensetzung von 0,1 bis 5 Gew.-%, bevorzugter von 0,5 bis 2,5 Gew.-%, am bevorzugtesten von 1 bis 1,5 Gew.-%.

Als Aromastoffe können zudem Gewürze und Hefeextrakte eingesetzt werden.

In einer bevorzugten Ausführungsform ist die erfindungsgemäße Brühwurst-Zusammensetzung Halal und/oder Kosher.

Halal bedeutet, dass die Zusammensetzung mit den Speisevorschriften der islamischen Religion übereinstimmt, Kosher bedeutet, dass die Zusammensetzung mit den Speisevorschriften des jüdischen Glaubens übereinstimmt.

In einer speziellen Ausführungsform weist die Brühwurst-Zusammensetzung die folgende Zusammensetzung auf:

(a) 20 bis 50 Gew.-% erfindungsgemäße entesterte Citrus- und/oder entesterte Apfelfaser;
(b) 0 bis 35 Gew.-% Maltodextrin;
(c) 0 bis 15 Gew.-% Kochsalz;
(d) 1 bis 10 Gew.-% eines 1:1 (w/w) Gemisches aus $Na_2CO_3$ und $NaHCO_3$;
(e) 0 bis 5 Gew.-% Kaliumcarbonat;
(f) 0 bis 10 Gew.-% Ascorbinsäure oder Acerolapulver;
(g) 0 bis 5 Gew.-% einer aktivierten Apfel- oder Citrusfaser mit einem Anteil an wasserlöslichem Pektin von 2 bis 10 Gew.-%, wobei das wasserlösliche Pektin ein hochverestertes Pektin ist;
(h) 0 bis 30 Gew,-% Gewürze und Hefeextrakt;

wobei die Summe der einzelnen Komponenten 100 Gew.-% ergibt.

Die Brühwurst-Zusammensetzung ist zweckmäßigerweise in Pulverform. In dieser Form ist sie lagerstabil und lässt sich problemlos transportieren und portionieren.

In einem weiteren Aspekt betrifft die Erfindung ein Verfahren zur Herstellung einer Brühwurst aus nicht-schachtwarmen Fleisch, wobei das Verfahren die folgenden Schritte aufweist:

a.) Zerkleinern von nicht-schlachtwarmen Rohfleisch und von tierischem Fett;
b.) Einbringen von zerkleinertem Fleisch und Fett in einem Schneidmischer (Kutter);
c.) Hinzugabe der folgenden Komponenten in der angegebenen Reihenfolge:

i. der Brühwurst-Zusammensetzung,
ii. Eis- oder Eiswasser, und
iii. Salz oder Pökelsalz;

d.) starkes Zerkleinern und Vermischen der Mischung der Komponenten aus b) und c) im Kutter zum Erhalten einer homogenen Brätmasse;
e.) Abfüllen der Brätmasse in Hüllen oder Behältnisse mit anschließendem Erhitzen.

Die erfindungsgemäße Zusammensetzung führt damit zu einem vereinfachten Herstellungsverfahren für Brühwürste, insofern das zerkleinerte Fleisch mit dem zerkleinerten Fett zusammen vorgelegt werden kann und anschließend die weiteren Komponenten, wie die erfindungsgemäße Zusammensetzung, Eis, Gewürze und Salz/Pökelsalz hinzugegeben werden. Die Emulsionsfähigkeit der enthaltenen Fruchtfaser ist so groß, dass auch bei dieser Schrittabfolge eine homogene Brätmasse resultiert. Die resultierende Emulsion ist sehr stabil und bleibt auch nach dem Brühvorgang bestehen.

Im Gegensatz dazu muss bei der Verwendung von Phosphat als Kuttermittel dieses phosphathaltige Kuttermittel zunächst zu dem Fleisch hinzugegeben werden und mit dem Fleisch eine Reaktion eingehen. Man nimmt an, dass das Phosphat hierbei die Muskelfibrillen aufbricht und damit das Wasserbindungsvermögen und die Emulgierfähigkeit erhöht. Die erfindungsgemäße Zusammensetzung kann hingegen die Emulgierfähigkeit wiederherstellen, ohne in den Aufbau der Muskelfibrillen einzugreifen und kann zudem auch noch nach der Fettzugabe wirken.

Die Faser-haltige Zusammensetzung wirkt bei der vorliegenden Anmeldung nicht nur als Emulgator, sondern auch als Verdickungsmittel und als Texturgeber. Durch die Kombination dieser drei Eigenschaften führt die erfindungsgemäße Zusammensetzung zur besonders vorteilhaften Produkteigenschaften sowohl im Brühwurst-Bereich als auch im Bereich der Fleischersatzwaren.

Bei diesem Verfahren wird die Temperatur im Schritt b) vorteilhafterweise bei ≤ 8°C und bevorzugt bei ≤ 6°C gehalten.

In einer weiteren Ausführungsforme wird bei diesem Verfahren die Temperatur in den Schritten und d) bei 10 bis 14°C, bevorzugt bei 11 bis 13°C und besonders bevorzugt bei 12 ± 0,5 °C gehalten.

In bevorzugter Weise wird die erfindungsgemäße entesterte Fruchtfaser, die insbesondere eine entesterte Citrusfaser und/oder entesterte Apfelfaser ist, für die Herstellung einer veganen Fleischersatzware verwendet. Dies bedeutet, dass diese Fleischersatzware frei von tierischen Proteinen ist.

In einem dritten Aspekt betrifft die Erfindung eine Zusammensetzung zur Herstellung eines veganen oder vegetarischen Fleischersatzprodukts, wobei die Zusammensetzung die aktivierbare, entesterte, pektin-konvertierte Fruchtfaser enthält. Diese Zusammensetzung wird im Folgenden auch kurz als "Fleischersatz-Zusammensetzung" bezeichnet. Die Fruchtfaser ist hierbei bevorzugt eine erfindungsgemäße entesterte Citrusfaser und/oder entesterte Apfelfaser.

Die Zusammensetzung wird zur Herstellung einer veganen Fleischersatzware verwendet.

Bei der erfindungsgemäßen Fleischersatz-Zusammensetzung handelt es sich bevorzugt um eine Methylcellulose-freie Zusammensetzung.

Die Zusammensetzung zur Herstellung eines veganen oder vegetarischen Fleischersatzprodukts enthält 2,0 bis 7,5 Gew.%, der aktivierbaren, entesterten, pektin-konvertierten Fruchtfaser.

Diese Fruchtfaser ist Citrusfaser und/oder eine Apfelfaser.

Die Fleischersatz-Zusammensetzung enthält zusätzlich pflanzliches Protein. Bei diesem Protein handelt es sich um ein aus der Pflanze isoliertes Protein. Derartige Proteine können durch entsprechende Nachbehandlung wie beispielsweise eine Extrusion in ein texturiertes Protein umgewandelt werden, das damit im Biss und Mundgefühl bei dem Konsumenten ein Fleischgefühl assoziieren.

Das pflanzliche Protein ist bevorzugt ausgewählt ist aus der Gruppe bestehend aus Sojaprotein, Erbsenprotein. Lupinenprotein und Kartoffelprotein und beliebige Mischungen hiervon. Hierbei sind insbesondere Erbsenprotein und Kartoffelprotein und Mischungen hiervon bevorzugt.

Die Fleischersatz-Zusammensetzung kann 45 bis 65 Gew.-%, bevorzugt 50 bis 62 Gew.-%, und bevorzugterweise 55 bis 60 Gew.-% an pflanzlichem Protein enthalten. Durch den hohen Proteinanteil wird die Matrix des Fleischersatzprodukts in kalorienarmer und ernährungsphysiologisch vorteilhafter Weise bereitgestellt.

Die Fleischersatz-Zusammensetzung kann zudem ein Calciumsalz enthalten. Dieses Calciumsalz ist bevorzugt ausgewählt aus der Gruppe bestehend aus Calciumlaktat, Calciumbisglycinat, mono-Calciumcitrat, tri-Calciumcitrat, Calciummalat, Calciumcitratmalat, Calciumacetat, Calciumchlorid, Calciumiodid, Calciumcarbonat, Calciumnitrat, Calciumoxalat, Calciumsäurephosphat, Calciumdihydrogenphosphat, Calciumformiat, Calciumfumarat, Calciumgluconat, Calciumglutamat, Calciumglycerat, Calciumglycerophosphat, Calciumhydrogenphosphat, Calciumhydroxid, Calcium-Kupfer-EDTA, Calcium-di-Natrium-EDTA, Calciumlaktagluconat, Calciumlaktophosphat, Calciummagnesiumcarbonat, Calciummagnesium-inositolhexaphosphat, tribasisches Calciumphosphat, Calciumphospholaktat, Calciumpropionat, Calciumhydroxidsaccharat, Calciumstearat, Calciumtartrat, Calciumpyrophosphat, Calciumsuccinat, Calciumsucrat, Calciumsulfit, Calciumtetraphosphat. In vorteilhafter Weise wird als Calciumsalz Calciumchlorid eingesetzt.

In einer Ausführungsform enthält die Fleischersatz-Zusammensetzung ein Hydrokolloid, bei dem es sich entsprechend der veganen bzw. vegetarischen Anwendung um ein nicht aus Tieren isoliertes Hydrokolloid wie Gelatine handelt. Bevorzugt sind hier Psyllium oder Alginat.

Psyllium (auch Flohsamenschalen genannt) sind die Samenhülsen der Wegerich Arten *Plantago indica, Plantago afra* oder *Plantago ovata.* Durch den hohen Gehalt an en Flosine-Schleimpolysaccharide sind sie in der Lage, mehr als das 50-fache an Wasser zu binden.

Alginsäure, auch Algin, wird von Braunalgen und von einigen Bakterien (z. B. *Azotobacter*) gebildet. Die Salze der Alginsäure werden allgemein als Alginate bezeichnet und wirken als Verdickungs- und Geliermittel. Alginat ist ein Polysaccharid, bestehend aus den beiden Uronsäuren $\alpha$-L-Guluronsäure (GulUA) und $\beta$-D-Mannuronsäure (ManUA), welche 1,4-glycosidisch in wechselndem Verhältnis zu linearen Ketten verbunden sind. Es bildet homopolymere Bereiche, in denen Mannuronsäure oder Guluronsäure als Blöcke vorliegen. In der EU sind die Alginate in Form von Natriumalginat (E 401), Kaliumalginat (E 402), Ammoniumalginat (E 403), Calciumalginat (E 404) und Propylenglycolalginat (PGA, E 405) als Lebensmittelzusatzstoff für alle für Zusatzstoffe zugelassenen Produkte - auch für "Bio"-Produkte - zugelassen. Alginate werden vom Körper nicht aufgenommen und gelten als unbedenklich.

Die Fleischersatz-Zusammensetzung kann zusätzlich eine aktivierte Apfel- oder Citrusfaser mit einem Anteil an wasserlöslichem Pektin von 2 bis 10 Gew.-% enthalten, wobei das wasserlösliche Pektin ein hochverestertes Pektin ist. Entsprechende Apfel- bzw. Citrusfasern mit ihren Eigenschaften und Verfahren zu ihrer Herstellung sind in der WO 2021/250156 A1, bzw. in der WO 2021/250160 A1 offenbart.

In einer speziellen Ausführungsform weist die Fleischersatz-Zusammensetzung die folgende Zusammensetzung auf:

(a) 2 bis 7,5 Gew.-% der beschriebenen Citrus- und/oder Apfelfaser;
(b) 1 bis 3 Gew.-% einer aktivierten Apfel- und/oder Citrusfaser mit einem Anteil an wasserlöslichem Pektin von 2 bis 10 Gew.-%, wobei das wasserlösliche Pektin ein hochverestertes Pektin ist;
(c) 1 bis 4 Gew.-% Alginat;
(d) 50 bis 65 Gew.-% pflanzlichen Proteine;
(e) 2 bis 8 Gew.-% Psyllium;
(f) 1 bis 2,5 Gew.-% Calciumchlorid;
(g) 1 bis 5 Gew.-% Zucker;

(h) 1 bis 5 Gew.-% Färbemittel;

(i) 10 bis 18 Gew.-% Salz und Gewürze;

wobei die Summe der einzelnen Komponenten 100 Gew.-% ergibt.

Die Fleischersatz-Zusammensetzung ist zweckmäßigerweise in Pulverform. In dieser Form ist sie lagerstabil und lässt sich problemlos transportieren und portionieren.

In einem weiteren Aspekt betrifft die Erfindung ein Verfahren zur Herstellung eines veganen Fleischersatzproduktes, das insbesondere ein veganes Pattie oder eine vegane Frikadelle ist, wobei das Verfahren die folgenden Schritte aufweist:

a.) Bereitstellen einer Fleischersatz-Zusammensetzung;

b.) Hinzugabe von Wasser;

c.) optionale Hinzugabe von Öl oder Fett;

d.) Vermischen und Quellenlassen der so erhaltenen Mischung;

e.) Formen der Mischung aus d.) in Bratlinge und Ausbraten.

In einem zusätzlichen Aspekt betrifft die Erfindung eine Brühwurst oder ein veganes bzw. Fleischersatzprodukt, das die erfindungsgemäße aktivierbare, aktivierbare, entesterte, pektin-konvertierte Fruchtfaser enthält, wobei die Fruchtfaser bevorzugt die erfindungsgemäße entesterte Citrus- und/oder entesterte Apfelfaser ist.

In einem weiteren Aspekt betrifft die Erfindung eine Brühwurst oder ein veganes oder vegetarisches Fleischersatzprodukt, das jeweils unter Verwendung der vorab gelehrten Zusammensetzungen hergestellt worden ist.

Die Brühwurst kann hierbei ausgewählt sein aus der Gruppe unter anderem bestehend aus Lyoner, Wiener, Bratwurst, Mortadella und Rindswurst. Weitere Beispiele für Brühwürste sind auch in den Leitsätzen für Fleisch- und Fleischerzeugnisse des Deutschen Lebensmittelbuches genannt.

Das vegane Fleischersatzprodukt kann hierbei ausgewählt sein aus der Gruppe bestehend aus veganem Pattie, vegane Frikadelle, Cevapcici, und Kötbullar.

**Definitionen**

Eine Fruchtfaser gemäß der Erfindung ist eine Pflanzenfaser, also eine Faser, die aus einer nichtverholzten pflanzlichen Zellwand isoliert wird und hauptsächlich aus Cellulose besteht, und die hierbei aus einer Frucht isoliert wird. Unter einer Frucht ist hierbei die Gesamtheit der Organe einer Pflanze zu verstehen, die aus einer Blüte hervorgehen, wobei sowohl die klassischen Obstfrüchte als auch Fruchtgemüse enthalten sind.

Eine "Apfelfaser" gemäß der Anmeldung ist eine hauptsächlich aus Fasern bestehende Komponente, die aus einer nichtverholzten pflanzlichen Zellwand eines Apfels isoliert wird und hauptsächlich aus Cellulose besteht. Der Begriff der Faser stellt in gewisser Hinsicht ein Misnomer dar, weil die Apfelfasern makroskopisch nicht als Fasern in Erscheinung treten, sondern ein pulverförmiges Produkt darstellen. Weitere Bestandteile der Apfelfaser sind unter anderem Hemicellulose und Pektin.

Die Apfelfaser kann aus allen dem Fachmann bekannten Kulturäpfeln (*malus domesticus*) gewonnen werden. Als Ausgangsmaterial können hier vorteilhafterweise Verarbeitungsrückstände von Äpfeln eingesetzt werden. Als Ausgangsmaterial kann entsprechend Apfelschale, Kerngehäuse, Kerne oder Fruchtfleisch oder eine Kombination hiervon verwendet werden. In bevorzugter Weise wird als Ausgangsmaterial Apfeltrester verwendet, also die Pressrückstände von Äpfeln, die neben den Schalen typischerweise auch die oben genannten Bestandteile enthalten.

Eine "Citrusfaser" gemäß der Anmeldung ist eine hauptsächlich aus Fasern bestehende Komponente, die aus einer nichtverholzten pflanzlichen Zellwand einer Citrusfrucht isoliert wird und hauptsächlich aus Cellulose besteht. Der Begriff der Faser stellt in gewisser Hinsicht ein Misnomer dar, weil die Citrusfasern makroskopisch nicht als Fasern in Erscheinung treten, sondern ein pulverförmiges Produkt darstellen. Weitere Bestandteile der Citrusfaser sind unter anderem Hemicellulose und Pektin. Die Citrusfaser kann vorteilhafterweise aus Citruspulpe, Citrusschale, Citrusvesikel, Segmentmembranen oder einer Kombination hiervon gewonnen werden.

Eine aktivierbare, entesterte, pektin-konvertierte Citrusfaser gemäß der vorliegenden Anmeldung ist durch den Gehalt von 10 bis 35 Gew% an wasserlöslichem Pektin definiert, wobei dieses Pektin ein niederverestertes Pektin ist.

Eine aktivierbare, entesterte, pektin-konvertierte Apfelfaser gemäß der vorliegenden Anmeldung ist durch den Gehalt von 5 bis 22 Gew% an wasserlöslichem Pektin definiert, wobei dieses Pektin ein niederverestertes Pektin ist.

Ein lösliches Pektin gemäß der Anmeldung ist definiert als ein pflanzliches Polysaccharid, das als Polyuronid im Wesentlichen aus $\alpha$-1,4-glycosidisch verknüpften D-Galacturonsäure-Einheiten besteht. Die Galacturonsäureeinheiten sind partiell mit Methanol verestert. Der Veresterungsgrad beschreibt den prozentualen Anteil der Carboxylgruppen in den Galacturonsäure-Einheiten des Pektins, welche in veresterter Form vorliegen, z.B. als Methylester.

Unter einem hochveresterten Pektin wird erfindungsgemäß ein Pektin verstanden, das einen Veresterungsgrad von mindestens 50% besitzt. Ein niedrigverestertes Pektin weist hingegen einen Veresterungsgrad von weniger als 50% auf. Der Veresterungsgrad beschreibt den prozentualen Anteil der Carboxylgruppen in den Galacturonsäure-Einheiten des Pektins, welche in veresterter Form vorliegen, z.B. als Methylester. Der Veresterungsgrad kann mittels der Methode nach JECFA (Monograph 19-2016, Joint FAO/WHO Expert Committee on Food Additives) bestimmt werden.

Ein "Ballaststoff" gemäß der Erfindung ist ein weitgehend unverdaulicher Nahrungsbestandteil, meist Kohlenhydrate, die vorwiegend in pflanzlichen Lebensmitteln vorkommen. Der Einfachheit wegen teilt man die Ballaststoffe in wasserlösliche (wie Pektin) und wasserunlösliche (zum Beispiel Cellulose) ein. Ballaststoffe gelten als wichtiger Bestandteil der menschlichen Ernährung. Die EU-Verordnung zur Nährwertkennzeichnung weist ihnen pauschal einen Brennwert von 8 kJ/g zu.

"Geliermittel" gemäß der Erfindung sind Lebensmittelzusatzstoffe, die im Wasser quellen oder Wasser binden, also zu einer Gelierung führen. Sie bilden eine gallertartige Masse und geben Suppen, Saucen oder Pudding eine sämige bis feste Konsistenz.

Unter einem "Texturgeber" im Sinne der vorliegenden Anmeldung versteht man eine Substanz, die die Fähigkeit besitzt, einem Produkt eine besondere Textur zu verleihen. Unter Textur ist hier die in der Lebensmitteltechnologie durch Sensorik (Tast- und Berührungssinne) erfassbaren Oberflächeneigenschaften von Lebensmitteln zu verstehen, insbesondere das Mundgefühl eines Produkts.

Unter einem "Verdickungsmittel" im Sinne der vorliegenden Anmeldung versteht man eine Substanz, die in erster Linie in der Lage ist, Wasser zu binden. Durch Entzug von ungebundenem Wasser kommt es zur Erhöhung der Viskosität. Ab einer für jedes Verdickungsmittel charakteristischen Konzentration treten zu diesem Effekt noch Netzwerkeffekte auf, die zu einer meist überproportionalen Erhöhung der Viskosität führen. Verdickungsmittel besitzen daher die Fähigkeit, einem Produkt eine bestimmte Konsistenz zu verleihen. Eine Verdickung bedeutet hier eine erhöhte Viskosität oder Festigkeit des Produkts als Ergebnis der Verwendung des Verdickungsmittels.

Im Rahmen der vorliegenden Erfindung wird unter einem "Emulgator" ein Hilfsstoff verstanden, der dazu dient, zwei nicht miteinander mischbare Flüssigkeiten, wie zum Beispiel Öl und Wasser, zu einem fein verteilten Gemisch, der sogenannten Emulsion, zu vermengen und zu stabilisieren. Ähnliches gilt für die Aufmischung von festen, nicht löslichen Stoffen in einer Flüssigkeit, um eine sogenannte Suspension zu stabilisieren. In bevorzugter Weise handelt es sich bei dem Emulgator um einen Lebensmittelzusatzstoff.

Ein "Trennmittel" gemäß der Erfindung ist ein Lebensmittelzusatzstoff oder technischer Hilfsstoff, der das Verkleben oder Verklumpen von Lebensmitteln verhindert. Somit gehören Trennmittel auch zu den Stoffen, die die Rieselfähigkeit erhöhen oder erhalten. So verhindern Trennmittel, dass beispielsweise Salz klumpig wird und lose Bonbons zu einem einzigen Zuckerblock verkleben. Als technischer Hilfsstoffe kommt es bei der industriellen Verarbeitung und Herstellung von Lebensmitteln zum Einsatz. Bei den technischen Hilfsstoffen handelt es sich um Lebensmittelzusätze, die zugegeben werden, um technische Prozesse wie beispielsweise das Schneiden und Filtrieren zu erleichtern. Im Endprodukt dürfen die technischen Hilfsstoffe jedoch gar nicht oder nur in unvermeidbaren (geringen) Rückständen vorhanden sein.

Unter "Fleisch" ist ein einem Tier entnommener Teil zu verstehen, z.B. ein aus der Hinterkeule des Schweins entnommener Teil, oder ein aus der Brust von Geflügel entnommener Teil. Rohes Fleisch ist indes Fleisch, das noch nicht prozessiert wurde, d.h. das insbesondere noch nicht gekocht wurde, aber auch nicht luftgetrocknet oder geräuchert wurde.

Unter "Protein" ist jedes Protein insbesondere pflanzlichen und tierischen Ursprungs zu verstehen. Ein Protein, auch Eiweiß genannt, ist ein biologisches Makromolekül, das aus Aminosäuren durch Peptidbindungen aufgebaut ist. Proteine, die bis zu 100 via Peptidbindung (Amidbindung) verknüpfte Aminosäuren aufweisen, werden Peptide genannt. Auch hydrolysierte Proteine sind als Proteine zu verstehen.

"Brühwürste" wie z.B. Wiener oder Lyoner sind durch Brühen, Backen, Braten oder auf andere Weise hitzebehandelte Wurstwaren, bei denen zerkleinertes rohes Fleisch mit Fett, Kochsalz und ggf. anderen technologisch notwendigen Salzen meist unter Zusatz von Trinkwasser ganz oder teilweise aufgeschlossen wurde und deren Muskel-Eiweiß bei der Hitzebehandlung mehr oder weniger zusammenhängend koaguliert ist, so dass die Erzeugnisse bei etwaigem erneutem Erhitzen schnittfest bleiben. Die Menge des verwendeten Trinkwassers ist bei den einzelnen Wurstsorten unterschiedlich. Bezogen auf Fleisch und Fett wird anstelle von Trinkwasser teilweise bis zu 10 % Blutplasma oder Blutserum zugesetzt; der Ersatz von Trinkwasser durch 5 % Milch ist auf zum Braten bestimmte ungeräucherte Würste, deren Brät fein zerkleinert ist, beschränkt.

Bekannte Brühwürste enthalten im Mittel etwa 50 % Fleisch, 25 % Fett und 25 % Wasser. Zur Herstellung werden Fleisch und Speck zuerst mit dem Fleischwolf zerkleinert und bei den meisten Sorten anschließend zu dem sog. Brät gekuttert. Ein Kutter besteht aus einem sich drehenden Gefäß (Schüssel), in dem mehrere Messer mit sehr hoher Geschwindigkeit rotieren. Dabei werden die Zutaten so weit zerkleinert, dass ein Brei entsteht, bei rohem Fleisch Brät genannt. Im Kutter werden die Proteine durch 1,5 bis 2 % Kochsalz teilweise gelöst und gequollen, gleichzeitig wird ein konservierender Effekt erzielt. Neben Gewürzen werden meist noch Nitritpökelsalz und Kutterhilfsmittel zugegeben. Nach dem Kuttern folgt das Abfüllen des Bräts in Därme, gegebenenfalls das Räuchern, und der Namensgebende Schritt - das Brühen. Das Brät erfährt dabei eine Kerntemperatur, bei der die Proteine der Muskelfasern unter Gelbildung gerinnen.

Die Konsistenz einer Brühwurst ist abhängig vom Wasserbindungsvermögen, daher ist dieses neben der Fettemulgierung und -Stabilisierung und Strukturbildung (Gelbildung) ein entscheidender Faktor bei der Brühwurst-Herstellung. Durch Zugabe von Fett in den Kutter entsteht bei der Brühwurstherstellung eine Emulsion. An der Phasengrenze lagern sich die hydrophoben Proteinsequenzen an und tragen zu einer Ausrichtung der Proteine und zu einer teilweisen Fraktionierung der Proteine bei. In der das Fett umgebenden Protein-Wassermischung reichern sich hydrophile Gruppen, gut wasserlösliche und gut vernetzbare Proteine an, die im nachfolgenden Brühprozess eine gute Gelbildung und hohe Wasserbindung ermöglichen. Wenn beim Kuttern nur wenig Fett zur Verfügung steht, kann dieser Fraktionierungsvorgang nicht ablaufen. Infolgedessen wird die Gelbildung und Wasserbindung in der Protein-Wasser-Mischung reduziert. Der Fettgehalt in bekannten Brühwürsten liegt je nach Anwendung und Rezeptur zwischen 15 und 30 Gew% im fertigen Produkt. Mit diesem Fettgehalt kann eine feste und geschmeidige Textur und ein ansprechender Geschmack in der fertigen Wurst erzielt werden.

Die Erfindung wird durch die unabhängigen Ansprüche definiert.

Es sei noch ausdrücklich darauf hingewiesen, dass im Rahmen der hier vorliegenden Patentanmeldung unbestimmte Artikel und Zahlenangaben wie "ein", "zwei" usw. im Regelfall als "mindestens"-Angaben zu verstehen sein sollen, also als "mindestens ein...", "mindestens zwei..." usw., sofern sich nicht aus dem jeweiligen Kontext ausdrücklich ergibt oder es für den Fachmann offensichtlich oder technisch zwingend ist, dass dort nur "genau ein...", "genau zwei..." usw. gemeint sein können.

Weitere Vorteile, Besonderheiten und zweckmäßige Weiterbildungen der Erfindung ergeben sich aus den Unteransprüchen.

Die hier gezeigten Ausführungsformen stellen nur Beispiele für die vorliegende Erfindung dar und dürfen daher nicht einschränkend verstanden werden.

**Figurenbeschreibung**

Fig. 1: Fließdiagramm zur schematischen Darstellung eines Herstellungsverfahrens zur Herstellung der beschriebene Citrus- bzw. Apfelfaser

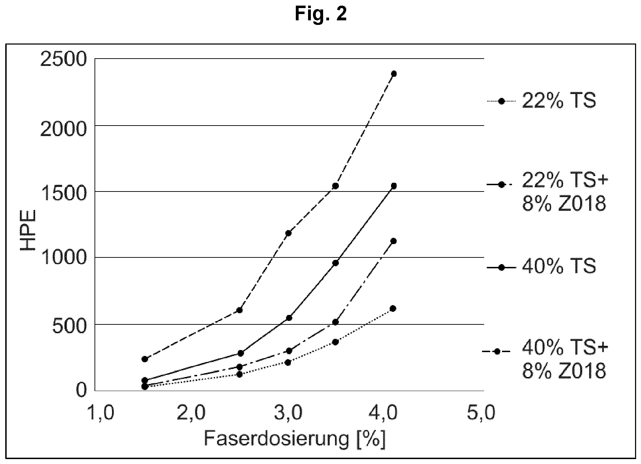

Fig. 2: Graphische Darstellung der Bruchfestigkeit HPE als Funktion der Faserkonzentration. Es wurden Suspensionen mit 1,5, 2,5, 3,0, 3,5 und 4,1 Gew.% Faserkonzentration jeweils für 22° und 40°Brix vermessen. Zudem wurde in einer Testdurchführung 8% an Natriumpolyphosphat (bezogen auf die Faser) zugegeben.

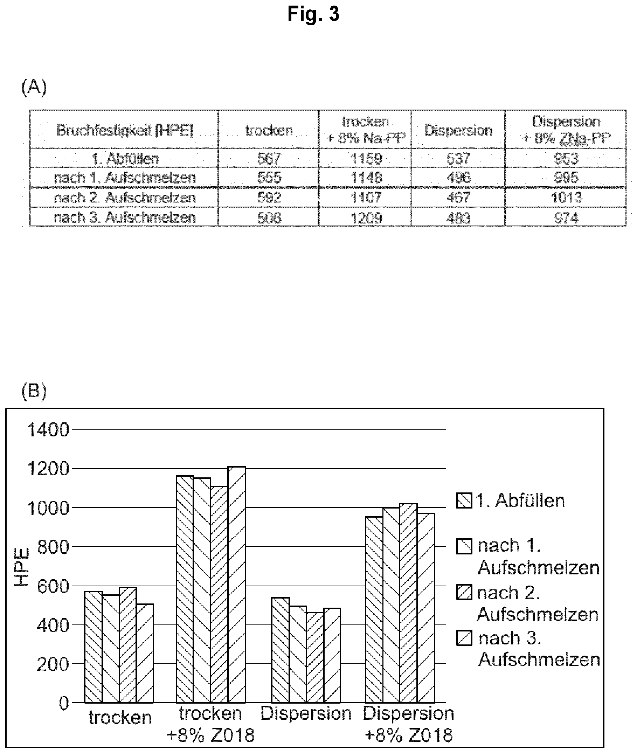

Fig. 3 zeigt in (A) eine tabellarische Darstellung und in (B) eine grafische Darstellung zur Thermoreversibilität der mit der erfindungsgemäßen Citrusfaser erzielten Gelbildung.

Fig. 4 zeigt die Viskosität einer 2,5 Gew.%igen Faserdispersion mit einer erfindungsgemäßen Citrusfaser ohne Zugabe an Natriumpolyphosphat (Na-PP) oder mit Zugabe von 2, 4, 8 oder 10 Gew.% Na-PP. Die Viskositätsbestimmung wurden an Proben durchgeführt, die in der Herstellung in (A) mit 70% Isopropanol (IPA), in (b) mit 60% IPA und in (C) mit 50% IPA gewaschen wurden, wobei folgende Waschbedingungen verglichen wurden:

- Keine Säuren-/Basenzugabe (Angabe 50, 60,70% IPA)
- Zugabe an Salpetersäure im 1. Waschschritt (IPA/HNO3)
- Zugabe an Salpetersäure/Na-PP im 1. Waschschritt (IPA/HNO3/Na-PP)
- Zugabe an Salzsäure im 1. Waschschritt (IPA/HCL)
- Zugabe an Citronensäure im 1. Waschschritt (IPA/CS)
- Zugabe an Ammoniaklösung im 2. Waschschritt (IPA/NH3)
- Zugabe an Ammoniaklösung plus EDTA im 2. Waschschritt (IPA/NH3/EDTA)

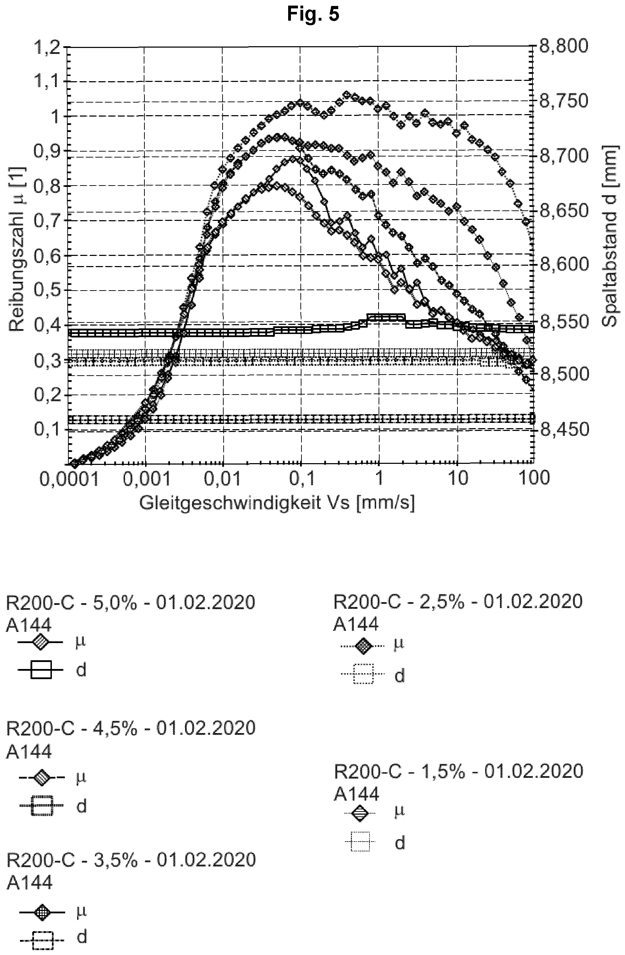

Fig. 5 zeigt eine tribologische Charakterisierung einer Faserdispersion in Abhängigkeit von der Konzentration der Faser in der Dispersion (1,5%, 2.5%, 3,5%, 4,5%, 5%) anhand der Reibzahl μ.

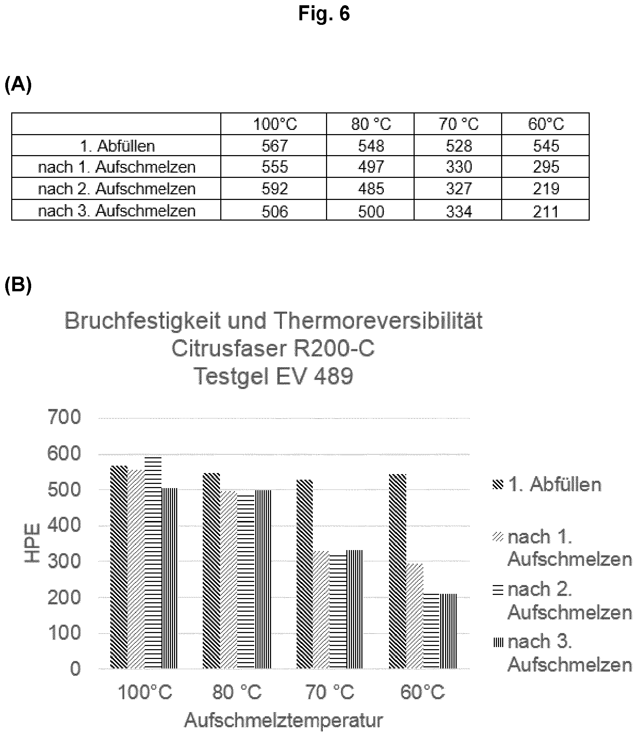

Fig. 6 zeigt in (A) eine tabellarische Darstellung und in (B) eine grafische Darstellung zur Thermoreversibilität der mit der erfindungsgemäßen Citrusfaser erzielten Gelbildung bei verschiedenen Aufschmelztemperaturen, nämlich 60, 70, 80 und 100°C.

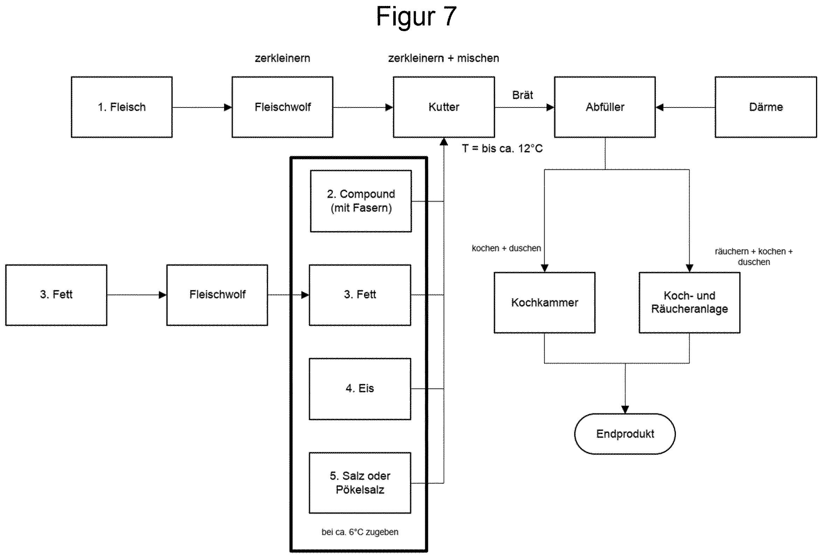

Fig. 7 zeigt ein Fließdiagramm zur Herstellung von Brühwürsten unter Verwendung der als "Compound" bezeichneten, erfindungsgemäßen Zusammensetzung.

**Ausführungsbeispiele**

**1. Beschreibung des Herstellungsverfahrens für eine erfindungsgemäß verwendbare Faser anhand eines Fließdiagramms**

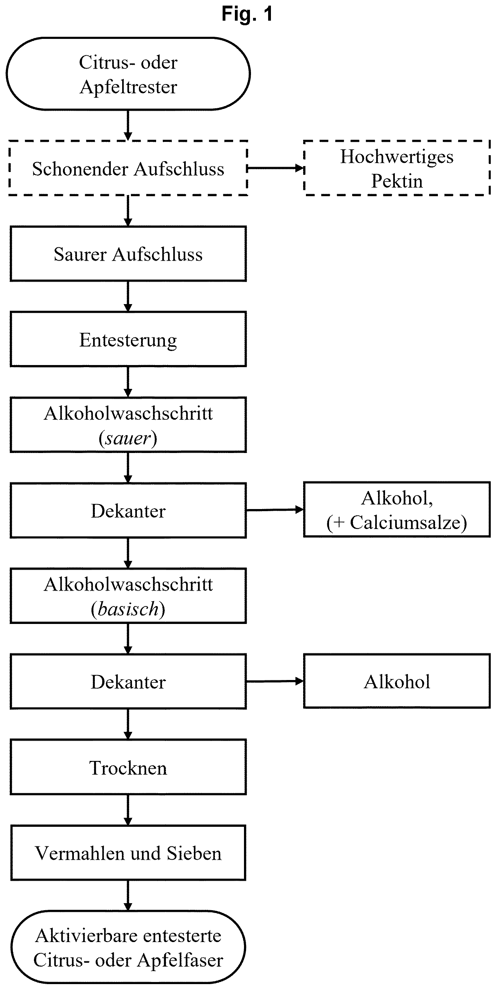

In Figur 1 ist ein Verfahren zur Herstellung einer erfindungsgemäß verwendeten aktivierbaren pektin-konvertierten Citrus- oder Apfelfaser gemäß der Erfindung als Fließdiagramm schematisch dargestellt. Ausgehend von dem Citrus-Trester bzw. Apfeltrester wird der Trester durch den sauren Aufschluss bei einem pH-Wert zwischen 2,5 und 5,0 schonend aufgeschlossen und hierbei ein Teil des vorhandenen Protopektins in Lösung gebracht, das anschließend als hochwertiges Pektin von dem Fasermaterial durch eine Fest-Flüssigtrennung (z.B. mit einem Dekanter oder einem Separator) abgetrennt wird. Da dieser Aufschlussschritt optional ist, wurde er im Diagramm mit einem gestrichelten Rahmen versehen. In dem darauffolgenden Aufschluss wird das Fasermaterial, das nach saurer Vorinkubation und Abtrennung des Pektins anfällt, durch Inkubation in einer aciden Lösung bei einem pH-Wert zwischen 0,5 und 2,5 und einer Temperatur zwischen 70° bis 80°C aufgeschlossen ("saurer Aufschluss") und weiteres Pektin extrahiert. Anschließend wird das sauer aufgeschlossene Fasermaterial durch Behandlung mit einer Pektinmethylesterase entestert ("Entesterung"). Dann werden zwei Waschschritte mit einer alkoholhaltigen Waschflüssigkeit mit jeweils anschließender Fest-Flüssigtrennung mittels Dekanter durchgeführt. Hierbei weist die alkoholhaltige Waschflüssigkeit im ersten Waschschritt einen sauren pH und im zweiten Waschschritt einen basischen pH-Wert auf. Da die pH-Wertanpassung in diesen beiden Waschschritten optional ist, wurde sie kursiv dargestellt. Im nächsten Schritt erfolgt schließlich das schonende Trocknen der Fasern mittels einer Fließbetttrocknung, gefolgt von einem Vermahlungs- und Siebschritt, um dann die erfindungsgemäß verwendbaren entesterten Citrus- bzw. entesterten Apfelfasern zu erhalten.

**2. Testmethode zur Bestimmung der Fließgrenze (Rotationsmessung)**

Messprinzip:

Diese Fließgrenze macht eine Aussage über die Strukturstärke und wird im Rotationsversuch bestimmt, indem die Schubspannung, die auf die Probe wirkt, über die Zeit so lange erhöht wird, bis die Probe anfängt zu fließen.
Schubspannungen, die unterhalb der Fließgrenze liegen, verursachen lediglich eine elastische Deformation, die erst bei Schubspannungen oberhalb der Fließgrenze in ein Fließen mündet. Bei dieser Bestimmung wird dieses messtechnisch durch das Überschreiten einer festgelegten Mindest-Schergeschwindigkeit $\dot{\gamma}$ erfasst. Gemäß der vorliegenden Methode ist die Fließgrenze $\tau_o$ [Pa] bei der Schergeschwindigkeit $\dot{\gamma} \geq 0.1$ s$^{-1}$ überschritten.

| | |
|---|---|
| Messgerät: | Rheometer Physica MCR-Serie (z.B. MCR 301, MCR 101) |
| Messsystem: | Z3 DIN bzw. CC25 |
| Messbecher: | CC 27 P06 (geriffelter Messbecher) |
| Anzahl Messabschnitte: | 3 |
| Messtemperatur: | 20 °C |
| Messparameter: | |

1. Abschnitt (Ruhephase):

| | | |
|---|---|---|
| Abschnittseinstellungen: | - Vorgabegröße: | Schubspannung [Pa] |
| | - Wert: | 0 Pa konstant |
| | - Abschnittsdauer: | 180 s |
| | - Temperatur: | 20 °C |

2. Abschnitt (Bestimmung der Fließgrenze nach Rotationsmessung):

| Abschnittseinstellungen: | - Vorgabegröße: | Schubspannung [Pa] |
|---|---|---|
| | - Profil: | Rampe log. |
| | - Startwert: | 0,1 Pa |
| | - Endwert: | 80 Pa |
| | - Abschnittsdauer: | 180 s |
| | - Temperatur: | 20 °C |

**Auswertung:**

Die Fließgrenze $\tau_o$ (Einheit [Pa] wird in Abschnitt 2 abgelesen und ist die Schubspannung (Einheit: [Pa]), bei der die Schergeschwindigkeit zum letzten Mal $\dot{\gamma} \leq 0,10$ s$^{-1}$ beträgt.

Die mit der Rotationsmethode gemessene Fließgrenze wird auch als "Fließgrenze (Rotation)" bezeichnet.

Die Fließgrenze (Rotation) wurde anhand einer Fasersuspension (einfaches Einrühren der Faser mit einem Löffel = entspricht einer nicht aktivierten Faser) gemessen und wird im Rahmen der Erfindung auch als "Fließgrenze Rotation II" bezeichnet. Die Fließgrenze wurde zudem anhand einer Faserdispersion (eingerührt unter Einwirkung hoher Scherkräfte; z.B. mit Ultra Turrax = entspricht einer aktivierten Faser) gemessen und wird im Rahmen der Erfindung auch als "Fließgrenze Rotation I" bezeichnet.

**3. Testmethode zur Bestimmung der Fließgrenze (Oszillationsmessung)**

Messprinzip:

Diese Fließgrenze macht ebenfalls eine Aussage über die Strukturstärke und wird im Oszillationsversuch bestimmt, indem die Amplitude bei konstanter Frequenz so lange erhöht wird, bis die Probe durch die immer größer werdende Auslenkung zerstört wird und dann anfängt zu fließen.

Dabei verhält sich die Substanz unterhalb der Fließgrenze wie ein elastischer Festkörper, das heißt, die elastischen Anteile (G') liegen über den viskosen Anteilen (G"), während bei Überschreiten der Fließgrenze die viskosen Anteile der Probe ansteigen und die elastischen Anteile abnehmen.

Per Definition ist die Fließgrenze bei der Amplitude überschritten, wenn gleich viele viskose wie elastische Anteile vorliegen G' = G" (Cross Over), die zugehörige Schubspannung ist der entsprechende Messwert.

| Messgerät: | Rheometer Physica MCR-Serie (z.B. MCR 301, MCR 101) |
|---|---|
| Messsystem: | Z3 DIN bzw. CC25 |
| Messbecher: | CC 27 P06 (geriffelter Messbecher) |

Messparameter:

| Abschnittseinstellungen: | - Amplitudenvorgaben: | Deformation |
|---|---|---|
| | - Profil: | Rampe log. |
| | - Wert: | 0,01 - 1000% |
| | - Frequenz: | 1,0 Hz |
| | - Temperatur: | 20 °C |

Auswertung:

Mit Hilfe der Rheometersoftware Rheoplus wird die Schubspannung am Cross-Over nach Überschreiten des linear-viskoelastischen Bereiches ausgewertet.

Die mit der Oszillationsmethode gemessene Fließgrenze wird auch als "Fließgrenze Cross Over" bezeichnet.

Die Fließgrenze Cross Over wurde anhand einer Fasersuspension (einfaches Einrühren der Faser mit einem Löffel = entspricht einer nicht aktivierten Faser) gemessen und wird im Rahmen der Erfindung auch als "Fließgrenze Cross Over II" bezeichnet. Die Fließgrenze wurde zudem anhand einer Faserdispersion (eingerührt unter Einwirkung hoher Scherkräfte; z.B. mit Ultra Turrax = entspricht einer aktivierten Faser) gemessen und wird im Rahmen der Erfindung auch als "Fließgrenze Cross Over I" bezeichnet.

Messergebnisse und ihre Bedeutung:

Betrachtet man die Fließgrenze für die Suspension der erfindungsgemäß verwendeten Fasern, eingerührt mit dem Löffel (entsprechend einer nicht aktivierten Faser), mit einer Faserdispersion eingerührt mit hohen Scherkräften z.B. Ultra Turrax (entsprechend einer aktivierten Faser), kann man eine Aussage über die Vorteilhaftigkeit/Notwendigkeit einer Aktivierung treffen. Die Messergebnisse sind in der folgenden Tabelle zusammengefasst. Erwartungsgemäß steigt die Fließgrenze jeweils durch die Scher-Aktivierung in der Dispersion an. Aufgrund der relativ geringen Fließgrenzen der Fasersuspensionen $\tau_o$ II ist für das vollständige Implementierung der Fasereigenschaften eine Aktivierung der Faser erforderlich, um die gewünschte homogene Textur zu erhalten.

| Faser | Rotation | | Cross Over | | Aktivierung |
|---|---|---|---|---|---|
| | $\tau_o$ II [Pa] Suspension | $\tau_o$ I [Pa] Dispersion | $\tau_o$ II [Pa] Suspension | $\tau_o$ I [Pa] Dispersion | |
| erfindungsgemäß verwendete aktivierbare, entestete, pektin-konvertierte Citrusfaser | 0,7 | 4,8 | 0,4 | 5,5 | erforderlich |
| erfindungsgemäß verwendete aktivierbare, entestete, pektin-konvertierte Apfelfaser | 2,0 | 4,3 | 2,8 | 5,2 | erforderlich |

4. **Testmethode zur Bestimmung der dynamischen Weißenbergzahl**

Messprinzip und Bedeutung der dynamischen Weissenbergzahl:

Die dynamische Weissenbergzahl W' (Windhab E, Maier T, Lebensmitteltechnik 1990, 44: 185f) ist eine abgeleitete Größe, bei der die im Oszillationsversuch im linear-viskoelastischen Bereich ermittelten elastischen Anteile (G') mit den viskosen Anteilen (G") ins Verhältnis gesetzt werden:

$$W' = \frac{G'(\omega)}{G''(\omega)} = \frac{1}{\tan \delta}$$

Mit der dynamischen Weissenbergzahl erhält man eine Größe, die besonders gut mit der sensorischen Wahrnehmung der Konsistenz korreliert und relativ unabhängig von der absoluten Festigkeit der Probe betrachtet werden kann.

Ein hoher Wert für W' bedeutet, dass die Fasern eine überwiegend elastische Struktur aufgebaut haben, während ein tiefer Wert für W' auf Strukturen mit deutlich viskosen Anteilen spricht. Die für Fasern typische homogene Textur wird erreicht, wenn die W' Werte im Bereich von ca. 6 - 8 liegen, bei tieferen Werten wird die Probe als wässrig (weniger stark angedickt) beurteilt.

Material und Methoden:

|  |  |
|---|---|
| Messgerät: | Rheometer Physica MCR-Serie, z.B. MCR 301, MCR 101 |
| Messsystem: | Z3 DIN bzw. CC25 |
| Messbecher: | CC 27 P06 (geriffelter Messbecher) |

Messparameter:

| Abschnittseinstellungen: | - Amplitudenvorgaben: | Deformation |
|---|---|---|
| | - Profil: | Rampe log |
| | - Wert: | 0,01 - 1000 % |
| | - Frequenz: | 1,0 Hz |

(fortgesetzt)

| | |
|---|---|
| - Temperatur: | 20 °C |

Auswertung:

Der Phasenverschiebungswinkel δ wird im linear-viskoelastischen Bereich abgelesen. Die dynamische Weissenbergzahl W' wird anschließend mit folgender Formel berechnet:

$$W' = \frac{1}{\tan \delta}$$

Messergebnisse und ihre Bedeutung:

Betrachtet man die dynamische Weissenbergzahl W' für die Suspension einer erfindungsgemäß verwendeten Faser, eingerührt mit dem Löffel (entsprechend einer nicht aktivierten Faser), mit einer Faserdispersion eingerührt mit hohen Scherkräften z.B. Ultra Turrax (entsprechend einer aktivierten Faser), kann man eine Aussage über die Textur und darüber hinaus über die Notwendigkeit einer Aktivierung treffen. Die Messergebnisse sind in der folgenden Tabelle zusammengefasst. Die erfindungsgemäß verwendeten aktivierbaren, entesterten, pektin-konvertierten Citrus- und Apfelfasern liegen mit W' Werten von 8,6 bzw. 6,3 in der Suspension und 8,8 bzw. 7,0 für die Dispersion jeweils im idealen Bereich und weisen damit eine optimale Textur auf. Sie ist in beiden Fällen von homogener Textur. Die Ergebnisse zur dynamischen Weißenbergzahl zeigen, dass hinsichtlich der erwünschten homogenen Textur eine Aktivierung der Fasern nicht unbedingt erforderlich ist.

| Faser | W' Suspension | W' Dispersion | Textur |
|---|---|---|---|
| erfindungsgemäß verwendete aktivierbare entesterte, pektin-konvertierte Citrusfaser | 8,6 | 8,8 | mit und ohne Aktivierung cremig, Viskosität/Fließgrenze wird über die Dosierung reguliert |
| erfindungsgemäß verwendete aktivierbare entesterte, pektin-konvertierte Apfelfaser | 6,3 | 7,0 | mit und ohne Aktivierung cremig, Viskosität/Fließgrenze wird über die Dosierung reguliert |

**5. Testmethode zur Bestimmung der Festigkeit**

Durchführung:

150 ml destilliertes Wasser werden in einem Becherglas vorgelegt. Dann rührt man mit einem Löffel 6,0 g entesterte Citrusfasern bzw. entesterte Apfelfasern klumpenfrei in das Wasser ein. Zum Ausquellen lässt man dieses Faser-Wasser-Gemisch 20 min stehen. Man überführt die Suspension in ein Gefäß (Ø 90 mm). Anschließend wird die Festigkeit mit der folgenden Methode gemessen.

| | |
|---|---|
| Messgerät: | Texture Analyser TA-XT 2 (Fa. Stable Micro Systems, Godalming, UK) |
| Test-Methode/Option: | Messung der Kraft in Druckrichtung / einfacher Test |
| Parameter: | - Test-Geschwindigkeit: 1,0 mm/s |
| | - Weg: 15,0 mm/s |
| Messwerkzeug: | P/50 |

Gemäß der vorliegenden Methode entspricht die Festigkeit der Kraft, die der Messkörper braucht, um 10 mm in die Suspension einzudringen. Diese Kraft wird aus dem Kraft-ZeitDiagramm abgelesen. Es ist zu erwähnen, dass sich aus der Historie der Festigkeitsmessung die Einheit der gemessenen Festigkeit in Gramm (g) manifestiert hat.

**6. Testmethode zur Bestimmung der Bruchfestigkeit bzw. Bruchfestigkeitstest**

Rezeptur für 22°Brix

5,7, 9,5 11,4 13,3, 15,6 g Faser (entspricht 1,5, 2,5, 3,0, 3,5 und 4,1 Gew% im Endprodukt)
320,0 g 0,65 mol/L Kaliumacetat-Milchsäure-Pufferlösung
60 g Zucker (Saccharose) bei
2 - 3 Tropfen Entschäumer

| | |
|---|---|
| Einwaage: | ca. 390 g |
| Auswaage: | 380 g |
| pH-Wert: | $3,0 \pm 0,1$ |
| Trockensubstanzgehalt: | $22,0 \pm 1,0$ % |

Rezeptur für 40°Brix

5,7, 9,5 11,4 13,3, 15,6 g Faser (entspricht 1,5, 2,5, 3,0, 3,5 und 4,1 Gew% im Endprodukt)
320 g 0,65 mol/L Kaliumacetat-Milchsäure-Pufferlösung
135 g Zucker (Saccharose) bei
2 - 3 Tropfen Entschäumer

| | |
|---|---|
| Einwaage: | ca. 465 g |
| Auswaage: | 380 g |
| pH-Wert: | $3,0 \pm 0,1$ |
| Trockensubstanzgehalt: | $40,0 \pm 1,0$ % |

Messmethode:

- Die Kochung wird auf einem Induktionskochfeld bei mittlerer Hitze durchgeführt.
- Pufferlösung in einem Edelstahltopf vorlegen.
- Faser mit einem Teil des Gesamtzuckers (ca. 30 g) homogen in Mischflasche oder Glasschale vermischen.
- Faser-Zuckermischung unter Rühren in die kalte Pufferlösung einstreuen und den Ansatz bei mittlerer Hitze zum Kochen bringen. Unter Rühren bei mittlerer Hitze weiterkochen.
- Mischflasche bzw. Glasschale zweimal mit je ca. 10 - 15 g Zucker (aus Gesamtzuckermenge) reinigen und den Zucker unter Rühren in den Ansatz geben.
- Restzuckermenge nacheinander in 3 Portionen (je ca. 50 g) zugeben und nach jeder Zugabe unter Rühren bis zum Sieden erhitzen. Dann bei mittlerer Hitze auf Auswaage auskochen.
- Nach Erreichen der Auswaage werden sofort je $100 \pm 1$ g der Kochung rasch in drei Lüers-Becher mit eingesetzter Zerreißfigur eingewogen.
- Becher unter Vermeidung von Erschütterungen in ein unmittelbar neben der Kochstelle platziertes Wasserbad ($20 \pm 1$ °C) stellen und temperieren. Die Lüers-Becher müssen bis zur Füllhöhe des Gels im Wasser stehen. Das Wasserniveau muss reguliert werden, wenn zahlreiche Proben in das Wasserbad gestellt bzw. aus dem Wasserbad genommen werden.
- Nach genau 2 Stunden wird die Bruchfestigkeit mit dem Herbstreith-Pektinometer Mark III oder Nachfolgemodelle gemessen. Das Ergebnis ist der Mittelwert der drei Einzelwerte.

Auswertung:

Wie die folgenden beiden Tabellen zeigen, nimmt mit steigender Faserdosierung die Bruchfestigkeit sowohl bei einem löslichen Trockensubstanzgehalt von 22% TS als auch bei 40 % TS stark zu. Die Bruchfestigkeiten steigen außerdem durch die Zugabe eines Komplexbildners/löslichen Ionenaustauschers wie in diesem Fall durch die Zugabe von Natriumpolyphosphat mit einer Kettenlänge von ca. 30 an.

Hintergrund für diesen Anstieg ist vermutlich das Binden der in der Faser natürlicherweise enthaltenen Calciumionen, wodurch die Vorgelierung des in der Faser enthaltenen niederveresterten Pektins zurückgedrängt wird.

Tabelle 1: Bruchfestigkeit bei 22°Brix (Na-PP = Natriumpolyphosphat)

| Faser | Na-PP [%] bezogen auf Fasern | Faserdos. [%] | Ø HPE | Ø K-Wert | pH-Wert | TS [%] |
|---|---|---|---|---|---|---|
| Aktivierbare, entesterte, pektin-konvertierte erfindungsgemäß verwendete Citrusfaser | - | 1,5 | **27** | 9,3 | 3,05 | 20,4 |
| | 8,0 | | **43** | 5,3 | 3,07 | 20,2 |
| | - | 2,5 | **132** | 7,3 | 3,12 | 20,0 |
| | 8,0 | | **178** | 5,1 | 3,10 | 20,4 |
| | - | 3,0 | **215** | 8,6 | 3,10 | 20,2 |
| | - | | **312** | 18,3 | 3,12 | 21,4 |
| | 8,0 | | **305** | 6,3 | 3,11 | 20,4 |
| | - | 3,5 | **369** | 8,2 | 3,12 | 20,4 |
| | 8,0 | | **516** | 5,6 | 3,11 | 20,4 |
| | - | 4,1 | **673** | 6,4 | 3,14 | 18,0 |
| | 8,0 | | **1130** | 22,9 | 3,22 | 18,4 |

Tabelle 2: Bruchfestigkeit bei 40°Brix (Na-PP = Natriumpolyphosphat)

| Faser | Na-PP [%] bezogen auf Fasern | Faserdos. [%] | Ø HPE | Ø K-Wert | pH-Wert | TS [%] |
|---|---|---|---|---|---|---|
| Aktivierbare, entesterte, pektin-konvertierte erfindungsgemäß verwendete Citrusfaser | - | 1,5 | **78** | 6,6 | 3,08 | 39,8 |
| | 8,0 | | **240** | 6,1 | 3,05 | 39,8 |
| | - | 2,5 | **282** | 7,2 | 3,08 | 40,2 |
| | 8,0 | | **611** | 5,1 | 3,06 | 40,4 |
| | - | 3,0 | **543** | 9,2 | 3,09 | 40,1 |
| | 8,0 | | **1187** | 7,0 | 3,10 | 40,8 |
| | - | 3,5 | **964** | 10,5 | 3,11 | 40,2 |
| | 8,0 | | **1545** | 6,9 | 3,10 | 40,0 |
| | - | 4,1 | **1540** | 10,0 | 3,11 | 40,2 |
| | 8,0 | | **2393** | 8,4 | 3,12 | 40,9 |

Bestimmung der Thermoreversibilität der Gelbildung anhand Bruchfestigkeit:

Die Testgele, welche nach der obigen Rezeptur mit 40°Brix und 3,0 Gew% Faserkonzentration hergestellt wurden, wurden nach dem ersten Abfüllen auf Bruchfestigkeit wie vorab beschreiben getestet. Dann wurde das Gel unter Rühren zum Sieden erhitzt und aufgeschmolzen und durch Lagerung auf Raumtemperatur wieder verfestigt. Dies wurde insgesamt drei Mal durchgeführt und die Bruchfestigkeit im jeweils abgekühlten Zustand vermessen. Hierbei zeigte sich, dass die Fasern nach dem ersten Abkühlen für insgesamt drei Mal aufgeschmolzen werden konnten, und nach Abkühlung wieder ein Gel bilden konnten, ohne signifikant an Festigkeit zu verlieren.

Dabei spielte es im Rahmen der Schwankungsbreite der Messergebnisse keine Rolle, ob die Fasern trocken oder als Dispersion (über Ultra Turrax, s. Methode 8) zur Gelrezeptur gegeben wurden.

Die Bruchfestigkeit konnte auch in diesen Thermoreversibilitätsuntersuchungen durch die Zugabe von Natriumpolyphosphat deutlich erhöht werden und auch diese erhöhte Festigkeit blieb nach dreimaligem Aufschmelzen und Abkühlen erhalten.

In einem weiteren Experiment wurde die Thermoreversibilität anhand der Bruchfestigkeit bei verschiedenen Aufschmelztemperaturen gemessen werden. Die Ergebnisse sind in Figur 6 dargestellt. Hier zeigt sich, dass die Bruchfestigkeit mit der Aufschmelztemperatur zunimmt.

## 7. Testmethode zur Bestimmung der Korngröße

Messprinzip:

In einer Siebmaschine ist ein Satz von Sieben, deren Maschenweite vom unteren Sieb zum oberen stets ansteigt, übereinander angeordnet. Die Probe wird auf das oberste Sieb - das mit der größten Maschenweite gegeben. Die Probeteilchen mit größerem Durchmesser als die Maschenweite bleiben auf dem Sieb zurück; die feineren Teilchen fallen auf das nächste Sieb durch. Der Anteil der Probe auf den verschiedenen Sieben wird ausgewogen und in Prozent angegeben.

Durchführung:

Die Probe wird auf zwei Stellen nach dem Komma genau eingewogen. Die Siebe werden mit Siebhilfen versehen und mit steigender Maschenweite übereinander aufgebaut. Die Probe wird auf das oberste Sieb quantitativ überführt, die Siebe werden eingespannt und nach definierten Parametern verläuft der Siebprozess. Die einzelnen Siebe werden mit Probe und Siebhilfe sowie leer mit Siebhilfe gewogen. Soll bei einem Produkt nur ein Grenzwert im Korngrößenspektrum überprüft werden (z. B. 90 % < 250 $\mu$m), dann wird nur ein Sieb mit der entsprechenden Maschenweite verwendet.

Messvorgaben:

| | |
|---|---|
| Probemenge: | 15 g |
| Siebhilfen: | 2 pro Siebboden |
| Siebmaschine: | AS 200 digit, Fa. Retsch GmbH |
| Siebbewegung: | dreidimensional |
| Schwingungshöhe: | 1,5 mm |
| Siebdauer: | 15 min |

Der Siebaufbau besteht aus den folgenden Maschenweite in $\mu$m: 1400, 1180, 1000, 710, 500, 355, 250 gefolgt vom Boden.

Die Berechnung der Korngröße erfolgt anhand folgender Formel:

$$Anteil\ pro\ Sieb\ in\ \% = \frac{Auswaage\ in\ g\ auf\ dem\ Sieb\ x\ 100}{Probeeinwaage\ in\ g}$$

8. Herstellung einer 2,5 Gew%igen Faserdispersion

Rezeptur:

2,50 g Faserstoffe
97,5 g demineralisiertes Wasser (Raumtemperatur)
Einstreudauer: 15 Sekunden

In einem 250 ml Becherglas wird die jeweilige Menge an dem. Wasser (Raumtemperatur) vorgelegt. Die genau abgewogene Menge an Faserstoffen wird bei laufendem Rührwerk (Ultra Turrax) bei 8000 U/Min. (Stufe 1) langsam direkt in den Rührsog eingestreut. Die Einstreudauer richtet sich nach der Menge an Fasern, sie soll pro 2,5 g Probe 15 Sekunden dauern. Dann wird die Dispersion genau 60 Sek. bei 8000 U/Min. (Stufe 1) gerührt. Soll die Probe zur Bestimmung der Viskosität bzw. zur Bestimmung der Fließgrenze I (Rotation), der Fließgrenze I (Cross Over) oder zur Bestimmung der dynamischen Weißenbergzahl verwendet werden, wird sie in ein temperiertes Wasserbad bei 20°C gestellt.

Zur Messung der Viskosität bzw. zur Messung der Fließgrenze I (Rotation), der Fließgrenze I (Cross Over) oder zur Messung der dynamischen Weißenbergzahl wird die Probe nach genau 1 Stunde vorsichtig in das Messsystem des Rheometers gefüllt und die jeweilige Messung gestartet. Falls sich die Probe absetzt, wird sie unmittelbar vor dem Abfüllen mit Hilfe eines Löffels vorsichtig aufgerührt.

### 9. Herstellung einer 2,5 Gew%igen Fasersuspension

Rezeptur:

2,50 g Faserstoffe
97,5 g demineralisiertes Wasser (Raumtemperatur)

In einem 250 ml Becherglas wird die jeweilige Menge an dem. Wasser (Raumtemperatur) vorgelegt. Die genau abgewogene Menge an Faserstoffen wird unter ständigem Rühren mit einem Kunststofflöffel langsam eingestreut. Dann wird die Suspension so lange gerührt, bis alle Fasern mit Wasser benetzt sind. Soll die Probe zur Bestimmung der Viskosität bzw. zur Bestimmung der Fließgrenze II (Rotation), der Fließgrenze II (Cross Over) oder zur Bestimmung der dynamischen Weißenbergzahl verwendet werden, wird sie in ein temperiertes Wasserbad bei 20°C gestellt.

Zur Messung der Viskosität bzw. zur Messung der Fließgrenze II (Rotation), der Fließgrenze II (Cross Over) oder zur Messung der dynamischen Weißenbergzahl wird die Probe nach genau 1 Stunde vorsichtig in das Messsystem des Rheometers gefüllt und die jeweilige Messung gestartet. Falls sich die Probe absetzt, wird sie unmittelbar vor dem Abfüllen mit Hilfe eines Löffels vorsichtig aufgerührt.

### 10. Testmethode zur Bestimmung des Wasserbindevermögens

Durchführung für Wasserbindungsvermögen von nicht vorbehandelten Proben:

Man lässt die Probe mit einem Wasserüberschuss 24 Stunden bei Raumtemperatur quellen. Nach Zentrifugation und anschließendem Abdekantieren des Überstandes kann das Wasserbindungsvermögen in g H2O / g Probe gravimetrisch bestimmt werden. Der pH-Wert in der Suspension ist zu messen und zu dokumentieren.

Folgende Parameter sind einzuhalten:
Probeeinwaage:

| | |
|---|---|
| - Pflanzenfaser: | 1,0 g (in Zentrifugenglas) |
| - Wasserzugabe: | 60 ml |
| - Zentrifugation: | 4000 g |
| - Zentrifugierdauer | 10 min |

20 Minuten nach Zentrifugierbeginn (bzw. 10 Minuten nach Zentrifugierende) trennt man den Wasserüberstand von der gequollenen Probe ab. Die Probe mit dem gebundenen Wasser wird ausgewogen.

Das Wasserbindungsvermögen (WBV) in g $H_2O$ / g Probe kann nun nach folgender Formel berechnet werden:

$$\text{WBV (g } H_2O/\text{g Probe)} = \frac{\text{Probe mit gebundenem Wasser (g)} - 1,0 \text{ g}}{1,0 \text{ g}}$$

### 11. Testmethode zur Bestimmung der Viskosität

| Messgerät: | Physica MCR-Serie (z.B. MCR 301, MCR 101) |
| Messsystem: | Z3 DIN bzw. CC25 (Anmerkung: Die Messsysteme Z3 DIN und CC25 sind identische Messsysteme) |
| Anzahl Abschnitte: | 4 |

Messparameter:

1. Abschnitt:

| Abschnittseinstellungen: | - Vorgabegröße: | Schergeschwindigkeit $[s^{-1}]$ |
| | - Profil: | konstant |
| | - Wert: | $0\ s^{-1}$ |
| | - Abschnittsdauer: | 60 s |
| | - Temperatur: | 20 °C |

2. Abschnitt:

| Abschnittseinstellungen: | - Vorgabegröße: | Schergeschwindigkeit $[s^{-1}]$ |
| | - Profil: | Rampe lin |
| | - Wert: | $0{,}1 - 100\ s^{-1}$ |
| | - Abschnittsdauer: | 120 s |
| | - Temperatur: | 20 °C |

3. Abschnitt:

| Abschnittseinstellungen: | - Vorgabegröße: | Schergeschwindigkeit $[s^{-1}]$ |
| | - Profil: | konstant |
| | - Wert: | $100\ s^{-1}$ |
| | - Abschnittsdauer: | 10 s |
| | - Temperatur: | 20 °C |

4. Abschnitt:

| Abschnittseinstellungen: | - Vorgabegröße: | Schergeschwindigkeit $[s^{-1}]$ |
| | - Profil: | Rampe lin |
| | - Wert: | $100 - 0{,}1\ s^{-1}$ |
| | - Abschnittsdauer: | 120 s |
| | - Temperatur: | 20 °C |

Auswertung:

Die Viskosität (Einheit [mPas]) wird wie folgt abgelesen: 4. Abschnitt bei = $50\ s^{-1}$

Bestimmung der Viskosität in Abhängigkeit von verschiedenen Waschflüssigkeiten:

Es wurde eine aktivierbare, entesterte, pektin-konvertierte Citrusfaser anhand des vorher beschriebenen und in Fig. 1 dargestellten Verfahrens hergestellt und dabei der zweistufige Waschschritt mit der Waschflüssigkeit enthaltend 50, 60 oder 70 Vol.% Isopropanol (IPA) wie folgt: variiert:

- Keine Säuren-/Basenzugabe (Angabe 50, 60, 70% IPA)

- Zugabe an Salpetersäure im 1. Waschschritt (IPA/HNO$_3$)
- Zugabe an Salpetersäure/Na-PP im 1. Waschschritt (IPA/HNO$_3$/Na-PP)
- Zugabe an Salzsäure im 1. Waschschritt (IPA/HCl)
- Zugabe an Citronensäure im 1. Waschschritt (IPA/Citronensäure)
- Zugabe an Ammoniaklösung im 2. Waschschritt (IPA/NH$_3$)
- Zugabe an Ammoniaklösung plus EDTA im 2. Waschschritt (IPA/NH3/EDTA)

Anschließend wurde für die aus dem Herstellungsverfahren erhaltenen aktivierbaren, entesterten, pektin-konvertierten Citrusfasern die Viskosität in einer gemäß Methode 8 hergestellten 2,5Gew%igen Dispersion bei 20°C und D= 50 s$^{-1}$ bestimmt. Hierbei wurde die Dispersion ohne Zugabe an Natriumpolyphosphat (Na-PP) oder mit Zugabe von 2, 4, 8 oder 10 Gew% Na-PP hergestellt.

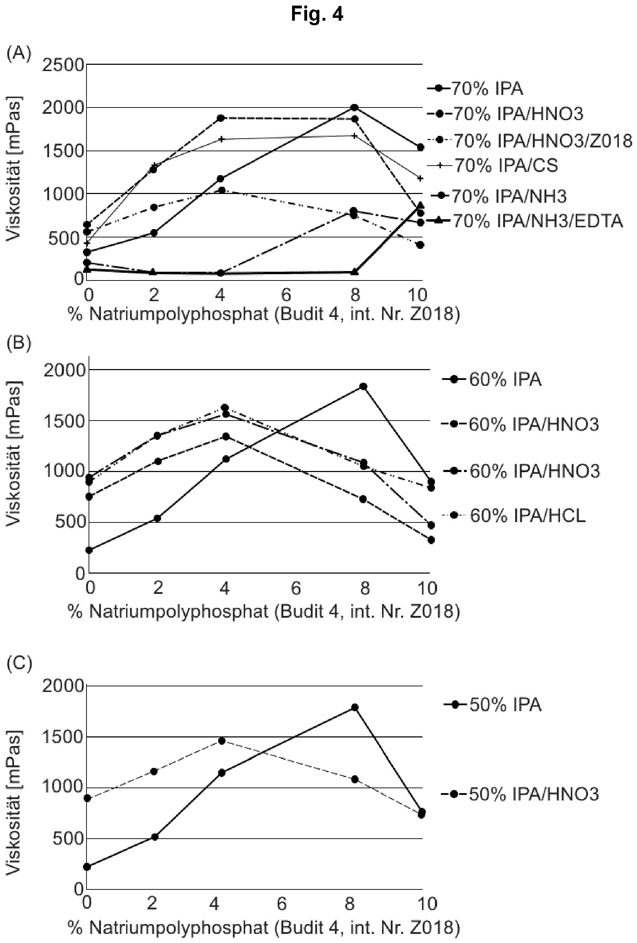

Die Ergebnisse sind grafisch in der Figur 4, A bis C, dargestellt.

Diese Versuche wurden aufgrund der Zunahme der Gel-Bruchfestigkeit durch Zugabe des Calcium-Chelators Na-PP durchgeführt, die auf eine Anwesenheit residualer Calciumionen und damit einer festigkeitsinhibierenden Vorgelierung schließen ließ. Durch das Waschen der Faser mit saurem Alkohol sollte das in der Faser enthaltene Calcium entfernt und somit die vermutete Vorgelierung reduziert werden. Wenn das der Fall ist, sollte die Viskosität ohne Zugabe von Natriumpolyphosphat (entsprechend 0% Na-PP) höher als bei der Vergleichsprobe (Waschen ohne Säurezugabe) liegen und der Kurvenverlauf in Abhängigkeit der Na-PP-Konzentration deutlich flacher ausfallen. Der Effekt müsste umso stärker sein, je höher der Wassergehalt beim Waschen gewählt wurde.

Mit allen drei gewählten IPA-Konzentrationen im Waschalkohol (50 Vol%, 60 Vol% und 70 Vol%) wurde das erwartete Verhalten erreicht. Der Viskositätsanstieg war bei Verwendung von 60 Vol% IPA und 50 Vol% IPA mit Säure vergleichbar und deutlich höher als mit 70 Vol% IPA plus Säure. Die Säureart (HCl, HNO$_3$, Citronensäure) hatte einen geringen Einfluss auf die erzielten Viskositäten.

Die Zugabe von Natriumpolyphosphat beim Waschen mit 70 Vol% IPA/HNO$_3$ führte vermutlich aufgrund des höheren pH-Wertes zu einer geringeren Viskosität.

## 12. Testmethode zur Bestimmung des Veresterungsgrads

Diese Methode entspricht der JECFA (Joint FAO/WHO Expert Committee on Food Additives) veröffentlichten Methode. Abweichend von der JECFA-Methode wird das entaschte Pektin nicht im Kalten gelöst, sondern erhitzt. Als Alkohol wird Isopropanol anstelle von Ethanol verwendet.

## 13. Bestimmung der Gelierkraft

Die Gelierkraft kann mittels der Standardprozedur für die Grad-Bewertung des Pektins in einem Gel mit 65 % Trockensubstanz festgestellt werden. Sie entspricht der Methode 5-54 des IFT-Komitees für Pektinstandardisierung (IFT Committee on Pectin Standardisation, Food Technology, 1959, 13: 496 - 500).

## 14. Testmethode zur Bestimmung des Ballaststoffgehalts

Diese Methode stimmt im Wesentlichen sachlich überein mit der von der AOAC veröffentlichten Methode (Official Method 991.43: Total, Soluble and Insoluble Dietary Fiber in Foods; Enzymatic-Gravimetric Method, MES-TRIS Buffer, First Action 1991, Final Action 1994.). Hier wurde lediglich mit Isopropylalkohol anstatt mit Ethanol gearbeitet.

## 15. Testmethode zur Bestimmung der Feuchtigkeit

Prinzip:

Unter dem Feuchtigkeitsgehalt der Probe wird die nach definierten Bedingungen ermittelte Massenabnahme nach der Trocknung verstanden. Es wird der Feuchtigkeitsgehalt der Probe mittels Infrarot-Trocknung mit dem Feuchtebestimmer Sartorius MA-45 (Fa. Sartorius, Göttingen, BRD) bestimmt.

Durchführung:

Es werden ca. 2,5 g der Faserprobe auf den Sartorius Feuchtebestimmer eingewogen. Die Einstellungen des Gerätes sind den entsprechenden werkseitigen Messvorschriften zu entnehmen. Die Proben sollen zur Bestimmung etwa Raumtemperatur haben. Der Feuchtigkeitsgehalt wird vom Gerät automatisch in Prozent [% M] angegeben. Der Trockensubstanzgehalt wird vom Gerät automatisch in Prozent [% S] angegeben.

**14. Testmethode zur Bestimmung der Farbe und Helligkeit**

Prinzip:

Die Farb- und Helligkeitsmessungen werden mit dem Minolta Chromameter CR 300 bzw.
CR 400 durchgeführt. Die Bestimmung der spektralen Eigenschaften einer Probe erfolgt anhand von Normfarbwerten. Die Farbe einer Probe wird mit dem Farbton, der Helligkeit und der Sättigung beschrieben. Mit diesen drei Basiseigenschaften lässt sich die Farbe dreidimensional darstellen:
Die Farbtöne liegen auf dem Außenmantel des Farbkörpers, die Helligkeit verändert sich auf der senkrechten Achse und der Sättigungsgrad verläuft horizontal. Bei Verwendung des L*a*b*-Messsystems (sprich L-Stern, a-Stern, b-Stern) steht L* für die Helligkeit, während a* und b* sowohl den Farbton als auch die Sättigung angeben. a* und b* nennen die Positionen auf zwei Farbachsen, wobei a* der Rot-Grün-Achse und b* der Blau-Gelb-Achse zugeordnet ist. Für die Farbmessanzeigen wandelt das Gerät die Normfarbwerte in L*a*b*-Koordinaten um.

Durchführung der Messung:

Die Probe wird auf ein weißes Blatt Papier gestreut und mit einem Glasstopfen geebnet. Zur Messung wird der Messkopf des Chromameters direkt auf sie Probe gesetzt und der Auslöser betätigt. Von jeder Probe wird eine Dreifachmessung durchgeführt und der Mittelwert berechnet. Die L*-, a*-, b*-Werte werden vom Gerät mit zwei Stellen nach dem Komma angegeben.
Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

**15. Testmethode zur Bestimmung des wasserlöslichen Pektins in faserhaltigen Proben**

Prinzip:

Durch eine wässrige Extraktion wird das in faserhaltigen Proben enthaltene Pektin in die flüssige Phase übergeführt. Durch Zugabe von Alkohol wird das Pektin als alkoholunlösliche Substanz (AIS, alcohol insoluble substance) aus dem Extrakt ausgefällt.

Extraktion:

10,0 g der zu untersuchenden Probe werden in eine Glasschale eingewogen. 390 g kochendes destilliertes Wasser werden in einem Becherglas vorgelegt und die vorher abgewogene Probe wird mittels Ultra-Turrax 1 min auf höchster Stufe eingerührt.
Die auf Raumtemperatur abgekühlte Probensuspension wird auf vier 150 ml Zentrifugenbecher aufgeteilt und 10 min bei 4000 x g zentrifugiert. Der Überstand wird gesammelt. Das Sediment eines jeden Bechers wird mit 50 g destilliertem Wasser resuspendiert und erneut für 10 min bei 4000 x g zentrifugiert. Der Überstand wird gesammelt, das Sediment wird verworfen.
Die vereinigten Zentrifugate werden in ca. 4 l Isopropanol (98 %) zur Ausfällung der alkoholunlöslichen Substanz (AIS) gegeben. Nach einer ½ Stunde filtriert man über ein Filtertuch und presst die AIS manuell ab. Im Filtertuch wird dann die AIS in ca. 3 l Isopropanol (98 %) gegeben und von Hand unter Verwendung von Handschuhen aufgelockert.
Der Abpressvorgang wird wiederholt, die AIS quantitativ vom Filtertuch genommen, aufgelockert und bei 60 °C 1 Stunde im Trockenschrank getrocknet.
Die abgepresste, getrocknete Substanz wird zur Berechnung der alkoholunlöslichen Substanz (AIS) auf 0,1 g ausgewogen.

Berechnung:

Die Berechnung des wasserlöslichen Pektins bezogen auf die faserhaltige Probe erfolgt anhand der folgenden Formel, wobei das wasserlösliche Pektin als alkoholunlösliche Substanz (AIS) anfällt:

$$AIS \ in \ der \ Probe \ in \ Gew.\% \left(\frac{g}{100g}\right) = \frac{getrocknete \ AIS \ [g] \ x \ 100}{Probeneinwaage \ in \ g}$$

**16.** Tribologische Charakterisierung einer Faserdispersion in Abhängigkeit von der Konzentration anhand der Reibzahl $\mu$

Messdurchführung:

Rheometer Physica MCR 302, Tribologie-Messzelle T-PTD200, 3 PDMS-Pins unten, Natronglaskugel oben

1. Abschnitt:
Konditionierung $F_N$ = 1 N t = 60 s
2. Abschnitt
Gleitgeschwindigkeitsrampe

$$F_N = 1 \text{ N}$$

$$T = 25 \text{ °C}$$

$$v_s = 10^{-4} - 100 \text{ mm/s (log)}$$

$$t = 250 \text{ s}$$

Ergebnisse

Die Ergebnisse sind in der Figur 5 grafisch dargestellt. Bei Gleitgeschwindigkeiten von $v_s$ = 0,01 - 0,05 mm/s, also im Bereich kurz unterhalb des Losbrechmomentes (Maximum der Stribeckkurve) liegt die Reibungszahl $\mu$ der 1,5%igen Faserdispersionen (dunkelblaue Kurve) oberhalb der beiden Dispersionen mit einer Dosierung von 2,5 % und 3,5 % (grüne und gelbe Kurve) und oberhalb der beiden Dispersionen mit den niedrigsten Werten mit einer Dosierung von 4,5 % und 5,0 % hellblaue und pinkfarbene Kurve).

Dieses entspricht einer sensorisch empfundenen höheren Bissfestigkeit der Faserdispersionen mit steigender Konzentration.

Oberhalb des Losbrechmomentes bei Gleitgeschwindigkeiten im Bereich ab $v_s$ > 0,1 mm/s liegen die Kurven in der Reihenfolge entsprechend der eingesetzten Konzentration - je höher der Faseranteil, desto geringer die Reibungszahlen, das heißt desto cremiger das Mundgefühl.

**17. Herstellung von Brühwürsten mit optimiertem Herstellungsverfahren**

Im Folgenden wird die Herstellung von Brühwürsten unter Verwendung der erfindungsgemäßen Zusammensetzung beschrieben. Die Herstellung erfolgt gemäß dem in Figur 7 gezeigten Fließschemas. Hierbei wird SIII-Schweinefleisch und in einem Fleischwolf auf 3 mm gewolft. Parallel wird Schweinefett ebenfalls in einem Fleischwolf auf 3 mm gewolft. Die Citrusfaser-haltige Zusammensetzung wird vorgelegt und dann das zerkleinerte Fett, Eis und Salz oder Pökelsatz bei einer Temperatur von ca. 6°C hinzugegeben. Diese Fett-basierte Mischung wird mit dem zerkleinerten Fleisch zusammen in einen Kutter gegeben und bei kleiner Messerdrehzahl 6 bis 8 Runden angekuttert. Danach wird die Zusammensetzung und das Eis bei maximaler Geschwindigkeit bis zu einer Endtemperatur von 12°C ausgekuttert. Das Brät wird in einer Füllermaschine gegeben und nach dem Füllen der Würste in Därme werden diese abgedreht und je nach Produkttyp entweder in einer Kochkammer oder einer Koch- und Räucheranlage weiterverarbeitet. In der Kochkammer werden die Würste bei 78°C bis zum Erreichen einer Kerntemperatur von 72°C gebrüht. Nach Erreichen dieser Temperatur werden die Würste in einem kalten Wasserbad für ca. 20 Minuten abgekühlt und anschließend in einem Kühlraum bei 2°C gelagert.

**18. Kochverlust bei Brühwürsten in Abhängigkeit vom Kutterhilfsmittel**

Fragestellung:

Es sollte ermittelt werden, wie der Kochverlust bei Einsatz des erfindungsgemäßen Zusammensetzung im Vergleich zum herkömmlichen Phosphat-haltigem Kuttermittel ist. Als Brühwürste wurden hierbei Bratwürste und Wienerwürste verwendet.

Versuchsdurchführung:

Die Brühwürste wurden mit dem unter Punkt 17 geschilderten Verfahren hergestellt. Der Kochverlust wurde durch Gewichtsbestimmung der jeweiligen Würste vor und nach dem Brühvorgang bestimmt.

Ergebnisse

Die Ergebnisse sind in der folgenden Tabelle dargestellt. Für beiden Wurstarten führt die erfindungsgemäße Zusammensetzung im Vergleich zum Phosphat-Kutterhilfsmittel zu einer deutlichen Reduzierung des Kochverlustes.

| Kochverluste | Phosphat-haltiges Kutterhilfsmittel | Erfindungsgemäße Zusammensetzung |
|---|---|---|
| Bratwurst | 6,4% | 5,6% |
| Wiener | 8,7% | 7,5% |

**19. Penetrationsmessung bei Brühwürsten in Abhängigkeit vom Kutterhilfsmittel**

Fragestellung:

Es sollte ermittelt werden, wie die Produkthärte bei Einsatz des erfindungsgemäßen Zusammensetzung im Vergleich zum herkömmlichen Phosphat-haltigem Kuttermittel ist. Als Brühwürste wurden hierbei Bratwürste und Wienerwürste verwendet.

Probenvorbereitung:

Die Wurst wird im Wasserbad auf eine Kerntemperatur von 65°C erhitzt. Nach 15min wird die Wurst mit Hilfe eines Wiegemessers in 17 mm breite Stücke geschnitten, die aufgestellt auf die Schnittfläche in der anschließenden Penetrationsmessung über die obere Schnittfläche (im Zentrum) penetriert werden. Die Pelle der Wurst wird somit nicht penetriert.

Verwendete Zusammensetzungen:

| Zusammensetzung | Anteil der erfindungsgemäßen Faser [Gew.-%] | Weitere Bestandteile in abnehmender Konzentration |
|---|---|---|
| A | 30 | Maltodextrin, Feinsalz, Gewürze, Natriumcarbonat, Natriumhydrogencarbonat, |
| A Plus | 35 | |
| B | 32 | Maltodextrin, Feinsalz, Gewürze, Ascorbinsäu-re, Natriumcarbonat, Natriumhydrogencarbo-nat |
| B Plus | 37 | |

Penetrationsmessung:

Testart: Kompression
Messgerät: Texture Analyser TAXT Plus
Messsonde P/5
Testgeschwindigkeit: 5mm/s
Weg: 30 mm

Die Messung der Gesamthärte in PE erfolgt über Messung des ersten Peaks.

Ergebnisse

Die Ergebnisse sind in den folgenden Tabellen dargestellt. Für beiden Wurstarten führt die erfindungsgemäße Zusammensetzung im Vergleich zum Phosphat-Kutterhilfsmittel zu einer deutlichen Reduzierung der Gesamthärte. Das Produkt ist deutlich elastischer und damit fleischähnlicher, denn es kann damit das im Fleisch vorhandene gemischte Netzwerk aus Proteinen und Fetten mit kristallinen und flüssigen Anteilen nachahmen. Mit erhöhtem Faseranteil in der Zusammensetzung (A Plus vs. A und B Plus vs. B) steigt die Festigkeit der Wurst, wobei sie immer noch deutlich unter der Phosphat-haltigen Bratwurst liegt. Damit kann die Festigkeit noch entsprechend der Produktcharakteristik gezielt angepasst werden.

| Bratwurst - Festigkeit in PE (Mittelwert aus 3 Messungen) | | | |
|---|---|---|---|
| | Phosphat-haltiges Kuttermittel (Phosphat-Riske) | Zusammensetzung A | Zusammensetzung A Plus |
| | 544 | 343 | 360 |

| Wiener - Festigkeit in PE (Mittelwert aus 3 Messungen) | | | |
|---|---|---|---|
| | Phosphat-haltiges Kuttermittel (Phosphat-Riske) | Zusammensetzung 3 | Zusammensetzung 4 (CL 20-07 Plus SF +5% AQ R200-C) |
| | 564 | 373 | 354 |

**Patentansprüche**

1. Verwendung einer aktivierbaren, entesterten, pektin-konvertierten Fruchtfaser zur Herstellung einer Brühwurst aus nicht-schlachtwarmem Fleisch oder eines veganen Fleischersatzprodukts, **dadurch gekennzeichnet, dass** die entesterte, aktivierbare, pektin-konvertierte Fruchtfaser:

   - eine aktivierbare, entesterte, pektin-konvertierte Citrusfaser ist, die eine Fließgrenze mittels Rotationsmessung gemäß Testmethode 2 in der 2,5 Gew%igen Fasersuspension gemäß Testmethode 9 von größer 0,1 Pa bis 1,0 Pa aufweist und einen wasserlöslichen Pektingehalt von 10 bis 35 Gew% aufweist, wobei das wasserlösliche Pektin ein niederverestertes Pektin mit einem Veresterungsgrad von weniger als 50% ist; oder
   - eine aktivierbare, entesterte, pektin-konvertierte Apfelfaser ist, die eine Fließgrenze mittels Rotationsmessung gemäß Testmethode 2 in der 2,5 Gew%igen Fasersuspension gemäß Testmethode 9 von größer 0,1 Pa bis 2,0 Pa aufweist und einen wasserlöslichen Pektingehalt von 5 bis 22 Gew% aufweist, wobei das wasserlösliche Pektin ein niederverestertes Pektin mit einem Veresterungsgrad von weniger als 50% ist.

2. Verwendung gemäß Anspruch 1, **dadurch gekennzeichnet, dass** die aktivierbare, entesterte, pektin-konvertierte Citrusfaser oder die aktivierbare, entesterte, pektin-konvertierte Apfelfaser eine oder mehrere der folgenden Eigenschaften aufweist:

   a. eine Fließgrenze mittels Oszillationsmessung gemäß Testmethode 3 bei G' = G" in der 2,5 Gew%igen Fasersuspension gemäß Testmethode 9 von größer 0,1 Pa, vorteilhafterweise von größer 0,4 Pa und besonders vorteilhafterweise von größer 0,6 Pa;
   b. eine Fließgrenze mittels Rotationsmessung gemäß Testmethode 2 in der 2.5 Gew%igen Faserdispersion gemäß Testmethode 8 von größer 3,5 Pa und besonders vorteilhafterweise von größer 5,5 Pa;
   c. eine Fließgrenze mittels Oszillationsmessung gemäß Testmethode 3 bei G' = G" in der 2,5 Gew%igen Faserdispersion gemäß Testmethode 8 von größer 1,0 Pa, vorteilhafterweise von größer 4,0 Pa und besonders vorteilhafterweise von größer 6,0 Pa;
   d. eine dynamische Weissenbergzahl gemäß Testmethode 4 in der 2,5 Gew%igen Fasersuspension gemäß Testmethode 9 von größer 5,5, vorteilhafterweise von größer 6,5 und besonders vorteilhaft von größer 8,0;
   e. eine dynamische Weissenbergzahl gemäß Testmethode 4 in der 2,5 Gew%igen Faserdispersion gemäß Testmethode 8 von größer 6,0, vorteilhafterweise von größer 7,0 und besonders vorteilhaft von größer 8,5;
   f. eine Festigkeit in einer 4 Gew%igen wässrigen Suspension gemäß Testmethode 9 von größer 100 g hat, bevorzugt von größer 125 g und besonders bevorzugt von größer 150 g;
   g. eine Viskosität von größer 300 mPas, bevorzugt von größer 400 mPas, und besonders bevorzugt von größer 500 mPas aufweist, wobei die aktivierbare, entesterte, pektin-konvertierte Citrusfaser oder die aktivierbare, entesterte, pektin-konvertierte Apfelfaser in Wasser als 2,5 Gew%ige Lösung dispergiert wird gemäß Testmethode 8 und die Viskosität mit einer Scherrate von 50 s$^{-1}$ bei 20°C gemäß der in den Ausführungsbeispielen beschriebenen Testmethode 11 gemessen wird;

h. ein Wasserbindevermögen von mehr als 22 g/g, bevorzugt von mehr als 24 g/g, besonders bevorzugt von mehr als 26 g/g;

i. eine Feuchtigkeit von weniger als 15 Gew%, bevorzugt von weniger als 10 Gew% und besonders bevorzugt von weniger als 8 Gew%;

j. in 1,0 %iger wässriger Suspension gemäß Testmethode 9 einen pH-Wert von 3,0 bis 7,0 und bevorzugt von 4,0 bis 6,0;

k. eine Korngröße, bei der mindestens 90 Gew% der Partikel kleiner als 450 $\mu$m sind, bevorzugt mindestens 90 Gew% der Partikel kleiner als 350 $\mu$m sind und besonders bevorzugt mindestens 90Gew% der Partikel kleiner als 250 $\mu$m sind;

l. einen Ballaststoffgehalt der Citrusfasern von 80 bis 95Gew%.

3. Verwendung gemäß Anspruch 1 oder 2, **dadurch gekennzeichnet, dass** die aktivierbare, entesterte, pektin-konvertierte Citrusfaser eine oder mehrere der folgenden Eigenschaften aufweist:

a. einen Helligkeitswert L*> 84, bevorzugt von L*> 86 und besonders bevorzugt von L* > 88, bestimmt durch die in den Ausführungsbeispielen beschriebene Testmethode 14;

b. einen wasserlöslichen Pektingehalt von 15 bis 30 Gew%, wobei das wasserlösliche Pektin ein niederverestertes Pektin mit einem Veresterungsgrad von weniger als 50% ist; oder

die aktivierbare, entesterte, pektin-konvertierte Apfelfaser eine oder mehrere der folgenden Eigenschaften aufweist:

a. einen Helligkeitswert L*> 60, bevorzugt von L*> 61 und besonders bevorzugt von L*> 62 bestimmt durch die in den Ausführungsbeispielen beschriebene Testmethode 14;

b. einen wasserlöslichen Pektingehalt von 8 bis 15 Gew%, wobei das wasserlösliche Pektin ein niederverestertes Pektin mit einem Veresterungsgrad von weniger als 50% ist.

4. Zusammensetzung zur Herstellung einer Brühwurst aus nicht schlachtwarmem Fleisch wobei die Zusammensetzung 20 bis 50 Gew.% der aktivierbaren, entesterten, pektin-konvertierten Fruchtfaser und ein Carbonatsalz als Trennmittel aufweist, das bevorzugt ausgewählt ist aus der Gruppe bestehend aus Natriumcarbonat, und Kaliumcarbonat, wobei insbesondere bevorzugt ein Gemisch im 1:1 Massenverhältnis aus Natriumcarbonat und Natriumhydrogencarbonat ist, wobei die aktivierbare, entesterte, pektin-konvertierte Fruchtfaser

- eine aktivierbare, entesterte, pektin-konvertierte Citrusfaser ist, die eine Fließgrenze mittels Rotationsmessung gemäß Testmethode 2 in der 2,5 Gew%igen Fasersuspension gemäß Testmethode 9 von größer 0,1 Pa bis 1,0 Pa aufweist und einen wasserlöslichen Pektingehalt von 10 bis 35 Gew% aufweist, wobei das wasserlösliche Pektin ein niederverestertes Pektin mit einem Veresterungsgrad von weniger als 50% ist; oder
- eine aktivierbare, entesterte, pektin-konvertierte Apfelfaser ist, die eine Fließgrenze mittels Rotationsmessung gemäß Testmethode 2 in der 2,5 Gew%igen Fasersuspension gemäß Testmethode 9 von größer 0,1 Pa bis 2,0 Pa aufweist und einen wasserlöslichen Pektingehalt von 5 bis 22 Gew% aufweist, wobei das wasserlösliche Pektin ein niederverestertes Pektin mit einem Veresterungsgrad von weniger als 50% ist.

5. Zusammensetzung gemäß Anspruch 4, **dadurch gekennzeichnet, dass** die Zusammensetzung zusätzlich Protein enthält, das bevorzugt ein tierisches Protein ist, besonders bevorzugt ein Schweine- und/oder Geflügelprotein, und insbesondere bevorzugt ein hydrolysiertes Schweine- und/oder Geflügelprotein, und wobei die Zusammensetzung 0,1 bis 5 Gew.-%, bevorzugt 0,2 bis 3,0 Gew.-%, bevorzugter 0,4 bis 1,5 Gew.-% an Protein enthält.

6. Zusammensetzung gemäß einem der Ansprüche 4 oder 5, **dadurch gekennzeichnet, dass** die Zusammensetzung einen Zucker und/oder einen Zuckeraustauschstoff enthält, wobei der Zucker bevorzugt Maltodextrin ist, und/oder die Zusammensetzung ein Antioxidans enthält, das bevorzugt Ascorbinsäure oder Acerolapulver ist.

7. Zusammensetzung gemäß Anspruch 4, **dadurch gekennzeichnet, dass** die Zusammensetzung die folgende Zusammenstellung aufweist:

(a) 20 bis 50 Gew.-% aktivierbare, entesterte, pektin-konvertierte Citrusfaser und/oder aktivierbare, entesterte, pektin-konvertierte Apfelfaser;

(b) 0 bis 35 Gew.-% Maltodextrin;

(c) 0 bis 15 Gew.-% Kochsalz;

(d) 1 bis 10 Gew.-% eines 1:1 massenbezogenen Gemisches aus $Na_2CO_3$ und $NaHCO_3$;

(e) 0 bis 5 Gew.-% Kaliumcarbonat;

(f) 0 bis 10 Gew.-% Ascorbinsäure oder Acerolapulver;

(g) 0 bis 5 Gew.-% einer aktivierten Apfel- oder Citrusfaser mit einem Anteil an wasserlöslichem Pektin von 2 bis 10 Gew.-%, wobei das wasserlösliche Pektin ein hochverestertes Pektin ist,

(h) 0 bis 30 Gew.-% Gewürze und Hefeextrakt;

wobei die Summe der einzelnen Komponenten 100 Gew.-% ergibt.

8. Zusammensetzung zur Herstellung eines veganen oder vegetarischen Fleischersatzprodukts wobei die Zusammensetzung 2,0 bis 7,5 Gew.% der aktivierbaren, entesterten, pektin-konvertierten Apfel- oder Citrusfaser aufweist,

wobei die aktivierbare, entesterte, pektin-konvertierte Citrusfaser eine Fließgrenze mittels Rotationsmessung gemäß Testmethode 2 in der 2,5 Gew%igen Fasersuspension gemäß Testmethode 9 von größer 0,1 Pa bis 1,0 Pa aufweist und einen wasserlöslichen Pektingehalt von 10 bis 35 Gew% aufweist, wobei das wasserlösliche Pektin ein niederverestertes Pektin mit einem Veresterungsgrad von weniger als 50% ist; und

wobei die aktivierbare, entesterte, pektin-konvertierte Apfelfaser eine Fließgrenze mittels Rotationsmessung gemäß Testmethode 2 in der 2,5 Gew%igen Fasersuspension gemäß Testmethode 9 von größer 0,1 Pa bis 2,0 Pa aufweist und einen wasserlöslichen Pektingehalt von 5 bis 22 Gew% aufweist, wobei das wasserlösliche Pektin ein niederverestertes Pektin mit einem Veresterungsgrad von weniger als 50% ist.

9. Zusammensetzung gemäß Anspruch 8, **dadurch gekennzeichnet, dass** die Zusammensetzung zusätzlich pflanzliches Protein enthält, das bevorzugt ausgewählt ist aus Sojaprotein, Erbsenprotein. Lupinenprotein, Kartoffelprotein, und insbesondere bevorzugt Erbsenprotein oder Kartoffelprotein ist und/oder wobei die Zusammensetzung 45 bis 65 Gew.-%, bevorzugt 50 bis 62 Gew.-%, bevorzugter 55 bis 60 Gew.-% an pflanzlichem Protein enthält.

10. Zusammensetzung gemäß einem der Ansprüche 8 oder 9, **dadurch gekennzeichnet, dass** die Zusammensetzung ein Calciumsalz enthält, das bevorzugt ausgewählt ist aus der Gruppe bestehend aus Calciumlaktat, Calciumbisglycinat, mono-Calciumcitrat, *tri*-Calciumcitrat, Calciummalat, Calciumcitratmalat, Calciumacetat, Calciumchlorid, Calciumiodid, Calciumcarbonat, Calciumnitrat, Calciumoxalat, Calciumsäurephosphat, Calciumdihydrogenphosphat, Calciumformiat, Calciumfumarat, Calciumgluconat, Calciumglutamat, Calciumglycerat, Calciumglycerophosphat, Calciumhydrogenphosphat, Calciumhydroxid, Calcium-Kupfer-EDTA, Calcium-diNatrium-EDTA, Calciumlaktagluconat, Calciumlaktophosphat, Calciummagnesiumcarbonat, Calciummagnesium-inositolhexaphosphat, tribasisches Calciumphosphat, Calciumphospholaktat, Calciumpropionat, Calciumhydroxidsaccharat, Calciumstearat, Calciumtartrat, Calciumpyrophosphat, Calciumsuccinat, Calciumsucrat, Calciumsulfit, Calciumtetraphosphat, und besonders bevorzugt Calciumchlorid ist.

11. Zusammensetzung gemäß einem der Ansprüche 8 bis 10, **dadurch gekennzeichnet, dass** die Zusammensetzung ein Hydrokolloid enthält, das bevorzugt Psyllium oder Alginat ist.

12. Zusammensetzung gemäß einem der Ansprüche 8 bis 11, **dadurch gekennzeichnet, dass** die Zusammensetzung zusätzlich eine aktivierte Apfel- und/oder Citrusfaser mit einem Anteil an wasserlöslichem Pektin von 2 bis 10 Gew.-% enthält, wobei das wasserlösliche Pektin ein hochverestertes Pektin ist.

13. Zusammensetzung gemäß einem der Ansprüche 8 bis 12, **dadurch gekennzeichnet, dass** die Zusammensetzung die folgende Zusammenstellung aufweist:

(a) 2 bis 7,5 Gew.-% aktivierbare, entesterte, pektin-konvertierte Citrusfaser und/oder aktivierbare, entesterte, pektin-konvertierte Apfelfaser;

(b) 1 bis 3 Gew.-% einer aktivierten Apfel- und/oder Citrusfaser mit einem Anteil an wasserlöslichem Pektin von 2 bis 10 Gew.-%, wobei das wasserlösliche Pektin ein hochverestertes Pektin ist;

(c) 1 bis 4 Gew.-% Alginat;

(d) 50 bis 65 Gew.-% pflanzlichen Proteine;

(e) 2 bis 8 Gew.-% Psyllium;

(f) 1 bis 2,5 Gew.-% Calciumchlorid;
(g) 1 bis 5 Gew.-% Zucker;
(h) 10 bis 18 Gew.-% Salz und Gewürze;

wobei die Summe der einzelnen Komponenten 100 Gew.-% ergibt.

## Claims

1. Use of an activatable, de-esterified, pectin-converted fruit fibre for producing a scalded sausage from meat that is not freshly slaughtered or a vegan meat substitute product, **characterised in that** the de-esterified, activatable, pectin-converted fruit fibre:

   - is an activatable, de-esterified, pectin-converted citrus fibre which has a yield strength by means of a rotational measurement according to test method 2 in the 2.5 wt.% fibre suspension according to test method 9 of greater than 0.1 Pa to 1.0 Pa, and has a water-soluble pectin content of 10 to 35 wt.%, wherein the water-soluble pectin is a low-esterified pectin having a degree of esterification of less than 50%; or
   - is an activatable, de-esterified, pectin-converted apple fibre which has a yield strength by means of a rotational measurement according to test method 2 in the 2.5 wt.% fibre suspension according to test method 9 of greater than 0.1 Pa to 2.0 Pa, and has a water-soluble pectin content of 5 to 22 wt.%, wherein the water-soluble pectin is a low-esterified pectin having a degree of esterification of less than 50%.

2. Use according to claim 1, **characterised in that** the activatable, de-esterified, pectin-converted citrus fibre or the activatable, de-esterified, pectin-converted apple fibre has one or more of the following properties:

   a. a yield strength by means of oscillation measurement according to test method 3, when G' = G", in the 2.5 wt.% fibre suspension according to test method 9 of greater than 0.1 Pa, advantageously of greater than 0.4 Pa, and particularly advantageously of greater than 0.6 Pa;
   b. a yield strength by means of rotational measurement according to test method 2 in the 2.5 wt.% fibre dispersion according to test method 8 of greater than 3.5 Pa and particularly advantageously of greater than 5.5 Pa;
   c. a yield strength by means of oscillation measurement according to test method 3, when G' = G", in the 2.5 wt.% fibre dispersion according to test method 8, of greater than 1.0 Pa, advantageously of greater than 4.0 Pa, and particularly advantageously of greater than 6.0 Pa;
   d. a dynamic Weissenberg number according to test method 4 in the 2.5 wt.% fibre suspension according to test method 9 of greater than 5.5, advantageously of greater than 6.5, and particularly advantageously of greater than 8.0;
   e. a dynamic Weissenberg number according to test method 4 in the 2.5 wt.% fibre dispersion according to test method 8 of greater than 6.0, advantageously of greater than 7.0, and particularly advantageously of greater than 8.5;
   f. a strength in a 4 wt.% aqueous suspension according to test method 9 of greater than 100 g, preferably of greater than 125 g, and particularly preferably of greater than 150 g;
   g. a viscosity of greater than 300 mPas, preferably of greater than 400 mPas, and particularly preferably of greater than 500 mPas, wherein the activatable, de-esterified, pectin-converted citrus fibre or the activatable, de-esterified, pectin-converted apple fibre is dispersed in water as a 2.5 wt.% solution according to test method 8, and the viscosity is measured with a shear rate of 50 s$^{-1}$ at 20°C according to test method 11 described in the embodiments;
   h. a water binding capacity of more than 22 g/g, preferably of more than 24 g/g, particularly preferably of more than 26 g/g;
   i. a moisture of less than 15 wt.%, preferably of less than 10 wt.%, and particularly preferably of less than 8 wt.%;
   j. in a 1.0% aqueous suspension according to test method 9, a pH of 3.0 to 7.0 and preferably of 4.0 to 6.0;
   k. a grain size in which at least 90 wt.% of the particles are smaller than 450 $\mu$m, preferably at least 90 wt.% of the particles are smaller than 350 $\mu$m, and particularly preferably at least 90 wt.% of the particles are smaller than 250 $\mu$m;
   l. a fibre content of the citrus fibres of 80 to 90 wt.%.

3. Use according to either claim 1 or claim 2, **characterised in that** the activatable, de-esterified, pectin-converted citrus fibre has one or more of the following properties:

a. a brightness value of L*>84, preferably of L*>86, and particularly preferably of L*>88, determined by test method 14 described in the embodiments;
b. a water-soluble pectin content of 15 to 30 wt.%, wherein the water-soluble pectin is a low-esterified pectin having a degree of esterification of less than 50%; or

the activatable, de-esterified, pectin-converted apple fibre has one or more of the following properties:

a. a brightness value of L*>60, preferably of L*>61 and particularly preferably of L*>62 determined by test method 14 described in the embodiments;
b. a water-soluble pectin content of 8 to 15 wt.%, wherein the water-soluble pectin is a low-esterified pectin having a degree of esterification of less than 50%.

4. Composition for producing a scalded sausage from meat that is not freshly slaughtered,

wherein the composition comprises 20 to 50 wt.% of the activatable, de-esterified, pectin-converted fruit fibre and a carbonate salt as a release agent which is preferably selected from the group consisting of sodium carbonate and potassium carbonate, wherein a mixture in a 1:1 mass ratio of sodium carbonate and sodium hydrogen carbonate is particularly preferred,
wherein the activatable, de-esterified, pectin-converted fruit fibre

- is an activatable, de-esterified, pectin-converted citrus fibre which has a yield strength by means of rotational measurement according to test method 2 in the 2.5 wt.% fibre suspension according to test method 9 of more than 0.1 Pa to 1.0 Pa and has a water-soluble pectin content of 10 to 35 wt.%, wherein the water-soluble pectin is a low-esterified pectin having a degree of esterification of less than 50%; or
- is an activatable, de-esterified, pectin-converted apple fibre which has a yield strength by means of rotational measurement according to test method 2 in the 2.5 wt.% fibre suspension according to test method 9 of more than 0.1 Pa to 2.0 Pa and has a water-soluble pectin content of 5 to 22 wt.%, wherein the water-soluble pectin is a low-esterified pectin having a degree of esterification of less than 50%.

5. Composition according to claim 4, **characterised in that** the composition additionally contains protein which is preferably an animal protein, particularly preferably a pork and/or poultry protein, and particularly preferably a hydrolysed pork and/or poultry protein, and wherein the composition contains 0.1 to 5 wt.%, preferably 0.2 to 3.0 wt.%, more preferably 0.4 to 1.5 wt.% protein.

6. Composition according to either of claims 4 or 5, **characterised in that** the composition contains a sugar and/or a sugar substitute, wherein the sugar is preferably maltodextrin, and/or the composition contains an antioxidant which is preferably ascorbic acid or acerola powder.

7. Composition according to claim 4, **characterised in that** the composition has the following makeup:

(a) 20 to 50 wt.% activatable, de-esterified, pectin-converted citrus fibre and/or activatable, de-esterified, pectin-converted apple fibre;
(b) 0 to 35 wt.% maltodextrin;
(c) 0 to 15 wt.% sodium chloride;
(d) 1 to 10 wt.% of a 1:1 mass-based mixture of $Na_2CO_3$ and $NaHCO_3$;
(e) 0 to 5 wt.% potassium carbonate;
(f) 0 to 10 wt.% ascorbic acid or acerola powder;
(g) 0 to 5 wt.% of an activated apple or citrus fibre having a fraction of water-soluble pectin of 2 to 10 wt.%, wherein the water-soluble pectin is a highly esterified pectin,
(h) 0 to 30 wt.% spices and yeast extract;

wherein the sum of the individual components is 100 wt.%.

8. Composition for preparing a vegan or vegetarian meat substitute product, wherein the composition has 2.0 to 7.5 wt.% of the activatable, de-esterified, pectin-converted apple or citrus fibre,
wherein the activatable, de-esterified, pectin-converted citrus fibre has a yield strength by means of rotational measurement according to test method 2 in the 2.5 wt.% fibre suspension according to test method 9 of more than 0.1 Pa to 1.0 Pa and has a water-soluble pectin content of 10 to 35 wt.%, wherein the water-soluble pectin is a low-esterified pectin having a degree of esterification of less than 50%; and wherein the activatable, de-esterified, pectin-converted apple fibre has a yield strength by means of rotational measurement according to test method 2 in the 2.5 wt.% fibre suspension according to test method 9 of more than 0.1 Pa to 2.0 Pa and has a water-soluble pectin content of 5 to 22 wt.%, wherein the water-soluble pectin is a low-esterified pectin having a degree of esterification of less than 50%.

9. Composition according to claim 8, **characterised in that** the composition additionally contains plant protein which is preferably selected from soya protein, pea protein, lupin protein, potato protein, and is particularly preferably pea protein or potato protein, and/or wherein the composition contains 45 to 65 wt.%, preferably 50 to 62 wt.%, more preferably 55 to 60 wt.% plant protein.

10. Composition according to either of claims 8 or 9, **characterised in that** the composition contains a calcium salt which is preferably selected from the group consisting of calcium lactate, calcium bisglycinate, monocalcium citrate, tricalcium citrate, calcium malate, calcium citrate malate, calcium acetate, calcium chloride, calcium iodide, calcium carbonate, calcium nitrate, calcium oxalate, calcium acid phosphate, calcium dihydrogen phosphate, calcium formate, calcium fumarate, calcium gluconate, calcium glutamate, calcium glycerate, calcium glycerophosphate, calcium hydrogen phosphate, calcium hydroxide, calcium copper EDTA, calcium disodium EDTA, calcium lactate gluconate, calcium lactophosphate, calcium propionate, calcium hydroxide saccharate, calcium stearate, calcium tartrate, calcium pyrophosphate, calcium succinate, calcium sucrate, calcium sulphite, calcium tetraphosphate, and particularly preferably is calcium chloride.

11. Composition according to any of claims 8 to 10, **characterised in that** the composition contains a hydrocolloid which is preferably psyllium or alginate.

12. Composition according to any of claims 8 to 11, **characterised in that** the composition additionally contains an activated apple and/or citrus fibre having a fraction of water-soluble pectin of 2 to 10 wt.%, wherein the water-soluble pectin is a highly esterified pectin.

13. Composition according to any of claims 8 to 12, **characterised in that** the composition has the following makeup:

(a) 2 to 7.5 wt.% activatable, de-esterified, pectin-converted citrus fibre and/or activatable, de-esterified, pectin-converted apple fibre;
(b) 1 to 3 wt.% of an activatable apple and/or citrus fibre having a fraction of water-soluble pectin of 2 to 10 wt.%, wherein the water-soluble pectin is a highly esterified pectin;
(c) 1 to 4 wt.% alginate;
(d) 50 to 65 wt.% plant proteins;
(e) 2 to 8 wt.% psyllium;
(f) 1 to 2.5 wt.% calcium chloride;
(g) 1 to 5 wt.% sugar;
(h) 10 to 18 wt.% salt and spices;

wherein the sum of the individual components is 100 wt.%.

**Revendications**

1. Utilisation d'une fibre de fruit convertie en pectine, désestérifiée, activable pour produire une saucisse à bouillir à partir de viande d'abattage refroidie ou d'un produit végétalien de substitution de viande, **caractérisée en ce que** la fibre de fruit convertie en pectine, activable, désestérifiée :

- est une fibre d'agrume convertie en pectine, désestérifiée, activable, qui présente une limite d'écoulement au moyen d'une mesure de rotation selon la méthode d'essai 2 dans la suspension de fibres à 2,5 % en poids selon la méthode d'essai 9 supérieure à une valeur de 0,1 Pa à 1,0 Pa et une teneur en pectine hydrosoluble de 10 à 35 % en poids, dans laquelle la pectine hydrosoluble est une pectine faiblement estérifiée avec un degré d'estérification inférieur à 50 % ; ou
- est une fibre de pomme convertie en pectine, désestérifiée, activable, qui présente une limite d'écoulement au moyen d'une mesure de rotation selon la méthode d'essai 2 dans la suspension de fibres à 2,5 % en poids selon la méthode d'essai 9 supérieure à une valeur de 0,1 Pa à 2,0 Pa et présente une teneur en pectine hydrosoluble de 5 à 22 % en poids, dans laquelle la pectine hydrosoluble est une pectine faiblement estérifiée avec un degré d'estérification inférieur à 50 %.

**2.** Utilisation selon la revendication 1, **caractérisée en ce que** la fibre d'agrume convertie en pectine, désestérifiée, activable ou la fibre de pomme convertie en pectine, désestérifiée, activable présente une ou plusieurs des caractéristiques suivantes :

a. une limite d'écoulement au moyen d'une mesure d'oscillation selon la méthode d'essai 3 avec G' = G" dans la suspension de fibres à 2,5 % en poids selon la méthode d'essai 9 supérieure à 0,1 Pa, avantageusement supérieure à 0,4 Pa et de manière particulièrement avantageuse supérieure à 0,6 Pa ;
b. une limite d'écoulement au moyen d'une mesure de rotation selon la méthode d'essai 2 dans la dispersion de fibres à 2,5 % en poids selon la méthode d'essai 8 supérieure à 3,5 Pa et de manière particulièrement avantageuse supérieure à 5,5 Pa ;
c. une limite d'écoulement au moyen d'une mesure d'oscillation selon la méthode d'essai 3 avec G' = G" dans la dispersion de fibres à 2,5 % en poids selon la méthode d'essai 8 supérieure à 1,0 Pa, de manière avantageuse supérieure à 4,0 Pa et de manière particulièrement avantageuse supérieure à 6,0 Pa;
d. un nombre de Weissenberg dynamique selon la méthode d'essai 4 dans la suspension de fibres à 2,5 % en poids selon la méthode d'essai 9 supérieur à 5,5, de manière avantageuse supérieur à 6,5 et de manière particulièrement avantageuse supérieur à 8,0 ;
e. un nombre de Weissenberg dynamique selon la méthode d'essai 4 dans la suspension de fibres à 2,5 % en poids selon la méthode d'essai 8 supérieur à 6,0, de manière avantageuse supérieur à 7,0 et de manière particulièrement avantageuse supérieur à 8,5 ;
f. une résistance dans une suspension aqueuse à 4 % en poids selon la méthode d'essai 9 supérieure à 100 g, de manière préférée supérieure à 125 g et de manière particulièrement préférée supérieure à 150 g ;
g. une viscosité supérieure à 300 mPas, de manière préférée supérieure à 400 mPas, et de manière particulièrement préférée supérieure à 500 mPas, dans laquelle la fibre d'agrume convertie en pectine, désestérifiée, activable ou la fibre de pomme convertie en pectine, désestérifiée, activable est dispersée dans l'eau en tant que solution à 2,5 % en poids selon la méthode d'essai 8 et la viscosité est mesurée avec un taux de cisaillement de 50 $s^{-1}$ à 20 °C selon la méthode d'essai 11 décrite dans les exemples de réalisation ;
h. une capacité de liaison d'eau supérieure à 22 g/g, de manière préférée supérieure à 24 g/g, de manière particulièrement préférée supérieure à 26 g/g ;
i. une humidité inférieure à 15 % en poids, de manière préférée inférieure à 10 % en poids et de manière particulièrement préférée inférieure à 8 % en poids ;
j. une valeur pH de 3,0 à 7,0, et de manière préférée de 4,0 à 6,0 dans la suspension aqueuse à 1,0 % en poids selon la méthode d'essai 9 ;
k. une granulométrie, à laquelle au moins 90 % des particules sont inférieures à 450 $\mu$m, de manière préférée au moins 90 % en poids des particules sont inférieurs à 350 $\mu$m et de manière particulièrement préférée au moins 90 % des particules sont inférieures à 250 $\mu$m ;
l. une teneur en fibres alimentaires des fibres d'agrume de 80 à 95 % en poids.

**3.** Utilisation selon la revendication 1 ou 2, **caractérisée en ce que** la fibre d'agrume convertie en pectine, désestérifiée, activable présente une ou plusieurs des propriétés suivantes :

a. une valeur de luminosité L*> 84, de manière préférée L* > 86 et de manière particulièrement préférée L* > 88, déterminée par la méthode d'essai 14 décrite dans les exemples de réalisation ;
b. une teneur en pectine hydrosoluble de 15 à 30 % en poids, dans laquelle la pectine hydrosoluble est une pectine faiblement estérifiée avec un degré d'estérification inférieur à 50 % ; ou

la fibre de pomme convertie en pectine, désestérifiée, activable présente une ou plusieurs des propriétés suivantes :

a. une valeur de luminosité L* > 60, de manière préférée L* > 61 et de manière particulièrement préférée L* > 62 déterminée selon la méthode d'essai 14 décrite dans les exemples de réalisation ;
b. une teneur en pectine hydrosoluble de 8 à 15 % en poids, dans laquelle la pectine hydrosoluble est une pectine faiblement estérifiée avec un degré d'estérification inférieur à 50 %.

**4.** Composition destinée à produire une saucisse à bouillir à partir de viande d'abattage refroidie, dans laquelle la composition présente 20 à 50 % en poids de la fibre de fruit convertie en pectine, désestérifiée, activable et un sel de carbonate en tant qu'agent de séparation, qui est choisi de manière préférée parmi le groupe constitué de carbonate de sodium et de carbonate de potassium, dans laquelle de manière particulièrement préférée un mélange est composé selon un rapport de masse de 1:1 de carbonate de sodium et d'hydrogénocarbonate de sodium, dans laquelle la fibre de fruit convertie en pectine, désestérifiée, activable

- est une fibre d'agrume convertie en pectine, désestérifiée, activable, qui présente une limite d'écoulement au moyen d'une mesure de rotation selon la méthode d'essai 2 dans la suspension de fibres à 2,5 % en poids selon la méthode d'essai 9 présentant une valeur supérieure à 0,1 Pa à 1,0 Pa et une teneur en pectine hydrosoluble de 10 à 35 % en poids, dans laquelle la pectine hydrosoluble est une pectine faiblement estérifiée avec un degré d'estérification inférieur à 50 % ; ou

- est une fibre de pomme convertie en pectine, désestérifiée, activable, qui présente une limite d'écoulement au moyen d'une mesure de rotation selon la méthode d'essai 2 dans la suspension de fibres à 2,5 % en poids selon la méthode d'essai 9 supérieure à une valeur de 0,1 Pa à 2,0 Pa et une teneur en pectine hydrosoluble de 5 à 22 % en poids, dans laquelle la pectine hydrosoluble est une pectine faiblement estérifiée avec un degré d'estérification inférieur à 50 %.

5. Composition selon la revendication 4, **caractérisée en ce que** la composition contient en supplément une protéine, qui est de manière préférée une protéine animale, de manière particulièrement préférée une protéine de porc et/ou de volaille, et en particulier de manière préférée une protéine de porc et/ou de volaille hydrolysée, et dans laquelle la composition contient 0,1 à 5 % en poids, de manière préférée 0,2 à 0,3 % en poids, de manière davantage préférée 0,4 à 1,5 % en poids de protéine.

6. Composition selon l'une quelconque des revendications 4 ou 5, **caractérisée en ce que** la composition contient un sucre et/ou un substitut de sucre, dans laquelle le sucre est de manière préférée de la maltodextrine et/ou la composition contient un antioxydant, qui est de manière préférée de l'acide ascorbique ou de la poudre d'acérola.

7. Composition selon la revendication 4, **caractérisée en ce que** la composition présente la formulation suivante :

(a) 20 à 50 % en poids d'une fibre d'agrume convertie en pectine, désestérifiée, activable et/ou d'une fibre de pomme convertie en pectine, désestérifiée, activable ;
(b) 0 à 35 % en poids de maltodextrine ;
(c) 0 à 15 % en poids de sel de table ;
(d) 1 à 10 % en poids d'un mélange massique 1:1 de $Na_2CO_3$ et de $NaHCO_3$ ;
(e) 0 à 5 % en poids de carbonate de sodium ;
(f) 0 à 10 % en poids d'acide ascorbique ou de poudre d'acérola ;
(g) 0 à 5 % en poids d'une fibre de pomme ou d'agrume activée avec une proportion en pectine hydrosoluble de 2 à 10 % en poids, dans laquelle la pectine hydrosoluble est une pectine hautement estérifiée,
(h) 0 à 30 % en poids d'épices et d'extrait de levure,

dans laquelle la somme des divers composants est de 100 % en poids.

8. Composition destinée à produire un produit végétalien ou végétarien de substitution de la viande, dans laquelle la composition présente 2,0 à 7,5 % en poids de la fibre de pomme ou d'agrume convertie en pectine, désestérifiée, activable,

dans laquelle la fibre d'agrume convertie en pectine, désestérifiée, activable présente une limite d'écoulement au moyen d'une mesure de rotation selon la méthode d'essai 2 dans la suspension de fibres à 2,5 % en poids selon la méthode d'essai 9 supérieure à une valeur de 0,1 Pa à 1,0 Pa et une teneur en pectine hydrosoluble de 10 à 35 % en poids, dans laquelle la pectine hydrosoluble est une pectine faiblement estérifiée avec un degré d'estérification inférieur à 50 % ; et

dans laquelle la fibre de pomme convertie en pectine, désestérifiée, activable présente une limite d'écoulement au moyen d'une mesure de rotation selon la méthode de test 2 dans la suspension de fibres à 2,5 % en poids selon la méthode d'essai 9 supérieure à une valeur de 0,1 Pa à 2,0 Pa et une teneur en pectine hydrosoluble de 5 à 22 % en poids, dans laquelle la pectine hydrosoluble est une pectine faiblement estérifiée avec un degré d'estérification inférieur à 50 %.

9. Composition selon la revendication 8, **caractérisée en ce que** la composition contient en supplément une protéine végétale, qui est choisie de manière préférée parmi la protéine de soja, la protéine de pois, la protéine de lupin, la protéine de pomme de terre, et en particulier de manière préférée la protéine de pois ou la protéine de pomme de terre, et/ou dans laquelle la composition contient 45 à 65 % en poids, de manière préférée 50 à 62 % en poids, de manière davantage préférée 55 à 60 % en poids d'une protéine végétale.

10. Composition selon l'une quelconque des revendications 8 ou 9, **caractérisée en ce que** la composition contient un sel de calcium, qui est choisi de manière préférée parmi le groupe constitué de lactate de calcium, bisglycinate de calcium, monocitrate de calcium, tri-citrate de calcium, malate de calcium, citrate-malate de calcium, acétate de calcium, chlorure de calcium, iodure de calcium, carbonate de calcium, nitrate de calcium, oxalate de calcium, phosphate d'acide de calcium, dihydrogénophosphate de calcium, formiate de calcium, fumarate de calcium, gluconate de calcium, glutamate de calcium, glycérate de calcium, glycérophosphate de calcium, phosphate hydrogéné de calcium, hydroxyde de calcium, EDTA de calcium et de cuivre, EDTA de calcium disodique, lactogluconate de calcium, lactophosphate de calcium, carbonate de calcium et de magnésium, hexaphosphate d'inositol et de calcium et de magnésium, phosphate de calcium tribasique, phospholactate de calcium, propionate de calcium, saccharate d'hydroxyde de calcium, stéarate de calcium, tartrate de calcium, pyrophosphate de calcium, succinate de calcium, sucrate de calcium, sulfite de calcium, tétraphosphate de calcium, et de manière particulièrement préférée chlorure de calcium.

11. Composition selon l'une quelconque des revendications 8 à 10, **caractérisée en ce que** la composition contient un hydrocolloïde, qui est de manière préférée du psyllium ou de l'alginate.

12. Composition selon l'une quelconque des revendications 8 à 11, **caractérisée en ce que** la composition contient en supplément une fibre de pomme et/ou d'agrume activée avec une proportion en pectine hydrosoluble de 2 à 10 % en poids, dans laquelle la pectine hydrosoluble est une pectine hautement estérifiée.

13. Composition selon l'une quelconque des revendications 8 à 12, **caractérisée en ce que** la composition présente la formulation suivante :

(a) 2 à 7,5 % en poids de fibre d'agrume convertie en pectine, désestérifiée, activable et/ou de fibre de pomme convertie en pectine, désestérifiée, activable ;
(b) 1 à 3 % en poids d'une fibre de pomme et/ou d'agrume activée avec une proportion en pectine hydrosoluble de 2 à 10 % en poids, dans laquelle la pectine hydrosoluble est une pectine hautement estérifiée ;
(c) 1 à 4 % en poids d'alginate ;
(d) 50 à 65 % en poids de protéines végétales ;
(e) 2 à 8 % en poids de psyllium ;
(f) 1 à 2,5 % en poids de chlorure de calcium ;
(g) 1 à 5 % en poids de sucre ;
(h) 10 à 18 % en poids de sel et d'épices ;

dans laquelle la somme des divers composants est de 100 % en poids.

## Fig. 1

Flussdiagramm:

Citrus- oder Apfeltrester
→ Schonender Aufschluss → Hochwertiges Pektin
→ Saurer Aufschluss
→ Entesterung
→ Alkoholwaschschritt (*sauer*)
→ Dekanter → Alkohol, (+ Calciumsalze)
→ Alkoholwaschschritt (*basisch*)
→ Dekanter → Alkohol
→ Trocknen
→ Vermahlen und Sieben
→ Aktivierbare entesterte Citrus- oder Apfelfaser

## Fig. 2

# Fig. 3

(A)

| Bruchfestigkeit [HPE] | trocken | trocken + 8% Na-PP | Dispersion | Dispersion + 8% ZNa-PP |
|---|---|---|---|---|
| 1. Abfüllen | 567 | 1159 | 537 | 953 |
| nach 1. Aufschmelzen | 555 | 1148 | 496 | 995 |
| nach 2. Aufschmelzen | 592 | 1107 | 467 | 1013 |
| nach 3. Aufschmelzen | 506 | 1209 | 483 | 974 |

(B)

## Fig. 4

(A)

(B)

(C)

## Fig. 5

R200-C - 5,0% - 01.02.2020
A144
   μ
   d

R200-C - 2,5% - 01.02.2020
A144
   μ
   d

R200-C - 4,5% - 01.02.2020
A144
   μ
   d

R200-C - 1,5% - 01.02.2020
A144
   μ
   d

R200-C - 3,5% - 01.02.2020
A144
   μ
   d

# Fig. 6

**(A)**

|  | 100°C | 80 °C | 70 °C | 60°C |
|---|---|---|---|---|
| 1. Abfüllen | 567 | 548 | 528 | 545 |
| nach 1. Aufschmelzen | 555 | 497 | 330 | 295 |
| nach 2. Aufschmelzen | 592 | 485 | 327 | 219 |
| nach 3. Aufschmelzen | 506 | 500 | 334 | 211 |

**(B)**

Bruchfestigkeit und Thermoreversibilität
Citrusfaser R200-C
Testgel EV 489

# Figur 7

zerkleinern · zerkleinern + mischen

1. Fleisch → Fleischwolf → Kutter — Brät → Abfüller ← Därme

T = bis ca. 12°C

2. Compound (mit Fasern)

3. Fett → Fleischwolf → 3. Fett

4. Eis

5. Salz oder Pökelsalz

bei ca. 6°C zugeben

kochen + duschen — Kochkammer

räuchern + kochen + duschen — Koch- und Räucheranlage

Endprodukt

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014111103 A2
- WO 2020074858 A1
- EP 1771085 A1
- DE 102020120606
- WO 2021250156 A1
- WO 2021250160 A1

**In der Beschreibung aufgeführte Nicht-Patentliteratur**

- **WINDHAB E** ; **MAIER T**. *Lebensmitteltechnik*, 1990, vol. 44, 185f
- *Food Technology*, 1959, vol. 13, 496-500